(19) Europäisches Patentamt
European Patent Office
Office européen des brevets

(11) **EP 2 752 386 B1**

(12) **EUROPEAN PATENT SPECIFICATION**

(45) Date of publication and mention
of the grant of the patent:
**28.08.2019 Bulletin 2019/35**

(51) Int Cl.:
*B82Y 30/00* (2011.01)    *C03C 1/00* (2006.01)
*C03C 17/00* (2006.01)    *C03C 17/34* (2006.01)
*C23C 18/12* (2006.01)    *G02B 1/11* (2015.01)

(21) Application number: **13196930.5**

(22) Date of filing: **12.12.2013**

(54) **Method of making coated article including anti-reflection coating with porosity differences in two layers, and products containing the same**

Verfahren zur Herstellung eines beschichteten Artikels mit Antireflexionsbeschichtung mit Porositätsunterschieden in zwei Schichten und Produkte damit

Procédé de fabrication d'article revêtu comprenant un revêtement antiréfléchissant doté de différences de porosité en deux couches et produits les contenant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2012 US 201213713882**

(43) Date of publication of application:
**09.07.2014 Bulletin 2014/28**

(73) Proprietor: **Guardian Glass, LLC
Auburn Hills MI 48326 (US)**

(72) Inventors:
• **LIANG, Liang
Taylor, MI, 48180 (US)**
• **LOVELL, Chris
Charlotte, NC, 28277 (US)**

• **LEWIS, Mark A.
Ypsilanti, MI, 48197 (US)**

(74) Representative: **Hoyng Rokh Monegier LLP
Rembrandt Tower, 31st Floor
Amstelplein 1
1096 HA Amsterdam (NL)**

(56) References cited:
EP-A1- 0 871 046    EP-A1- 1 167 313
EP-A1- 2 463 236    WO-A1-2004/104113
WO-A1-2007/088312    WO-A1-2012/150410
WO-A2-2009/120983    WO-A2-2011/142956
WO-A2-2012/028626    US-A1- 2006 154 044
US-A1- 2007 104 922    US-A1- 2009 220 774
US-A1- 2009 324 910    US-A1- 2010 035 039
US-A1- 2010 101 649    US-A1- 2011 151 222
US-A1- 2012 237 676

**Description**

**CROSS-REFERENCES TO RELATED APPLICATIONS**

This application is a continuation-in-part of U.S. Patent Application Serial Nos. 13/360,898 and 13/361,754, both filed January 30, 2012, and both hereby incorporated herein by reference.

**FIELD OF THE INVENTION**

Certain example embodiments of this invention relate to a method of making an antireflective (AR) coating supported by a glass substrate, and/or coated articles including the same. More particularly, certain example embodiments of this invention relate to a method of making an antireflective (AR) coating including first and second thin film layers that have different porosities, and/or coated articles including the same. The anti-reflection coating includes, in certain exemplary embodiments, porous metal oxide(s) and/or silica, and may be produced using a sol-gel process. In certain examples, one or more layers in the anti-reflection coating may be graded with respect to porosity. The gradient in porosity may be achieved in some cases by forming at least first and second layers using (1) nanoparticles of different shapes and/or sizes, (2) porous nanoparticles (e.g., mesoporous nanoparticles of or including silica, titanium oxide, zinc oxide, iron oxide, aluminum oxide, tungsten oxide, boron oxide, or zirconium oxide) having varying pore sizes, and/or (3) compounds/materials of various types, sizes, and shapes that may ultimately be removed from the coating post-deposition (e.g., through combustion, calcination, ozonolysis, solvent-extraction, etc.), leaving spaces where the removed materials were previously located.

**BACKGROUND AND SUMMARY OF EXAMPLE EMBODIMENTS**

Glass is desirable for numerous properties and applications, e.g., because of its optical clarity and overall visual appearance. For some applications, certain optical properties (e.g., light transmission, reflection, and/or absorption) are desired to be optimized. For example, in certain instances, reduction of light reflection from the surface of a glass substrate may be desirable for storefront windows, electronic devices, monitors/screens, display cases, photovoltaic devices such as solar cells, picture frames, other types of windows, and so forth.

Photovoltaic devices such as solar cells (and modules thereof) are known in the art. Glass is an integral part of most common commercial photovoltaic modules, including both crystalline and thin film types. A solar cell/module may include, for example, a photoelectric transfer film made up of one or more layers located between a pair of substrates. One or more of the substrates may be of glass, and the photoelectric transfer film (typically a semiconductor) is for converting solar energy to electricity. Example solar cells are disclosed in U.S. Pat. Nos. 4,510,344, 4,806,436, 6,506,622, 5,977,477, and JP 07-122764.

Substrate(s) in a solar cell/module are often made of glass. Incoming radiation passes through the incident glass substrate of the solar cell before reaching the active layer(s) (e.g., photoelectric transfer film such as a semiconductor) of the solar cell. Radiation that is reflected by the incident glass substrate does not make its way into the active layer(s) of the solar cell, thereby resulting in a less efficient solar cell. In other words, it would be desirable to decrease the amount of radiation that is reflected by the incident substrate, thereby increasing the amount of radiation that makes its way through the incident glass substrate (the glass substrate closest to the sun) and into the active layer(s) of the solar cell. In particular, the power output of a solar cell or photovoltaic (PV) module may be dependant upon the amount of light, or number of photons, within a specific range of the solar spectrum that pass through the incident glass substrate and reach the photovoltaic semiconductor.

Because the power output of the module may depend upon the amount of light within the solar spectrum that passes through the glass and reaches the PV semiconductor, attempts have been made to boost overall solar transmission through the glass used in PV modules. One attempt involves the use of iron-free or "clear" glass, which may increase the amount of solar light transmission when compared to regular float glass, through absorption reduction. Such an approach may or may not be used in conjunction with certain embodiments of this invention.

In certain example embodiments of this invention, an attempt to address the aforesaid problem(s) is made using an antireflection (AR) coating on a glass substrate (the AR coating may be provided on either side, or both sides, of the glass substrate in different embodiments of this invention). An AR coating may increase transmission of light through the light incident substrate, and thus increase the power and efficiency of a PV module in certain example embodiments of this invention.

In many instances, glass substrates have an index of refraction of about 1.52, and typically about 4% of incident light may be reflected from the first surface. Single-layered coatings of transparent materials such as silica and alumina having a refractive index of equal to the square root of that of glass (e.g., about 1.23 +/- 10%) may be applied to minimize or reduce reflection losses and enhance the percentage of light transmission through the incident glass substrate. The refractive indices of silica and alumina are about 1.46 and 1.6, respectively, and thus these materials alone in their typical form may not meet this low index requirement in certain example instances.

In embodiments of this invention, pores are formed in such materials or the like. In particular, in embodiments of this invention, porous inorganic coated films may be formed on glass substrates in order to achieve broadband antireflection (AR) properties. Because refractive index is related to the density of coating, it may be possible to reduce the refractive index of a coating by introducing porosity into the coating. Pore size and distribution of pores may significantly affect optical properties. Pores may preferably be distributed homogeneously in certain example embodiments, and the pore size of at least some pores in a final coating may preferably be substantially smaller than the wavelength of light to be transmitted. For example, it is believed that about 53% porosity (+/about 10%, more preferably +/- about 5% or 2%) may be required in order to lower the refractive index of silica-based coatings from about 1.46 to about 1.2 and that about 73% porosity (+/- about 10%, more preferably +/- about 5% or 2%) may be required to achieve alumina based coatings having about the same low index.

The mechanical durability of coatings, however, may be adversely affected with major increases in porosity. Porous coatings also tend to be prone to scratches, mars, etc. Thus, in certain example embodiments of this invention, there may exist a need for methods and anti-reflection coatings that are capable of realizing desired porosity without significantly adversely affecting mechanical durability of the anti-reflection coatings.

In certain example embodiments, the introduction of a gradient refractive index to an anti-reflective coating, may be desirable in order to achieve a higher transmittance gain in the broadband range. In certain examples, an anti-reflection coating may advantageously comprise a sequence of layers (e.g., at least two) having refractive indices varying stepwise from the incident medium to the substrate.

WO 2009/120983 A2 discloses an anti-reflection coating having an average total reflectance of less than 10 %, for example less than 5.9 % such as from 4.9 % to 5.9 %, over a spectrum of wavelengths of 400- 1100 nm and a range of angles of incidence of 0-90 degrees with respect to a surface normal of the anti-reflection coating. An antireflection coating has a total reflectance of less than 10 %, for example less than 6 % such as less than 4 %, over an entire spectrum of wavelengths of 400-1600 nm and an entire range of angles of incidence of 0-70 degrees with respect to a surface normal of the anti-reflection coating. The anti-reflection properties may be achieved by single or multiple layer coatings involving co-sputtered or/and nano-porous dielectric layers.

WO 2011/142956 A2 discloses a coating composition comprising nonspherical nanoparticles; spherical nanoparticles; optionally hydrophilic groups and optional an surfactant; and a liquid medium comprising water and no greater than 30 wt% organic solvent, if present, based on the total weight of liquid medium, where at least a portion of the nonspherical nanoparticles or at least a portion of the spherical nanoparticles comprises functional groups attached to their surface through chemical bonds, wherein the functional groups comprise at least one group selected from the group consisting of epoxy group, amine group, hydroxyl, olefin, alkyne, (meth) acrylato, mercapto group, or combinations thereof. There is also provided a method for modifying a substrate +surface using the coating composition and articles made therefrom.

The is still a need for a more efficient coated article having broadband anti-reflection properties.

The present invention provides a solution according to the subject matter of the independent claims.

**BRIEF DESCRIPTION OF THE DRAWINGS**

FIGURE 1 illustrates an example embodiment of a substrate with an anti-reflection coating thereon;

FIGURE 2 shows a cross-sectional view of a multi-layered anti-reflective coating graded with respect to porosity, according to certain embodiments;

FIGURES 3(a)-3(e) illustrates example types of carbon-based structures;

FIGURE 4 illustrates an example reaction between a fullerene structure and a metal oxide-inclusive compound to produce an example of a fullerene structure- and metal oxide-based matrix;

FIGURE 5 illustrates an example condensation reaction between a carbon nanotube and a silane-inclusive compound to produce an example fullerene structures- and silica-based matrix;

FIGURE 6 illustrates a layer formed according to the reactions shown in Figs. 4 and 5, according to certain example embodiments;

FIGURE 7 illustrates the layer from Fig. 6, after the layer has been subjected to heat treatment and/or thermal tempering, according to certain example embodiments;

FIGURE 8 is a flowchart illustrating an example method for making the layer shown in Figs. 6 and 7 according to certain example embodiments;

FIGURES 9(a)-9(e) illustrates certain example porous nanoparticle structures;

FIGURE 10 illustrates a reaction between porous nanoparticle(s) and a metal oxide-inclusive compound to produce an example of a porous nanoparticle- and metal oxide-based matrix, according to certain example embodiments;

FIGURE 11 illustrates a condensation reaction between porous nanoparticle(s) and a metal oxide-inclusive compound to produce an example of a porous nanoparticle- and metal oxide-based matrix, according to certain example embodiments;

FIGURE 12 illustrates a coated article including an antireflection coating layer comprising porous nanoparticles according to certain example embodiments;

FIGURE 13 illustrates an exaggerated example of an antireflection coating layer comprising a metal oxide- and porous nanoparticle-inclusive matrix according to certain example embodiments;

FIGURES 14(a)-14(f) show example micelle shapes according to certain example embodiments;

FIGURES 15(a)-15(b) illustrate example surface morphologies according to certain example embodiments;

FIGURES 16(a)-16(b) illustrate further example surface morphologies according to certain example embodiment;

FIGURES 17(a)-17(b) illustrate still further example surface morphologies according to certain example embodiments;

FIGURE 18 illustrates an example tubular structured morphology and an example mechanism of synthesis for a tubular-structured porous nanoparticle according to certain example embodiments;

FIGURE 19 illustrates an example anti-reflection coating comprising two layers, wherein one layer comprises spherical nanoparticles, and the other layer comprises elongated nanoparticles, according to certain example embodiments;

FIGURE 20 schematically illustrates an illustrative method for making an AR coating comprising two layers, each having different pore shapes and porosities, according to certain example embodiments;

FIGURE 21 illustrates an example embodiment of an antireflection coating comprising at least two layers that is graded with respect to porosity;

FIGURE 22 illustrates another example embodiment of an anti-refection coating comprising at least two layers and that is graded with respect to porosity;

FIGURE 23 is a flowchart showing a method of making a porous metal oxide-based layer (e.g., a porous silica-based layer) according to an example embodiment;

FIGURE 24 schematically illustrates an example method of curtain coating according to an example embodiment;

FIGURE 25 is a graph showing the effect of the percent of solid used in the sol for the first layer on the Tqe% of an SFO substrate coated with an anti-reflection coating according to certain example embodiments;

FIGURE 26 is a graph showing the effect of the percent of solid used in the sol for the second coating layer on the Tqe% of an SFO substrate coated with an anti-reflection coating according to certain example embodiments;

FIGURES 27(a)-27(b) are graphs plotting the curve of the Tqe% gain versus wavelength according to certain example embodiments of anti-reflection coatings described herein;

FIGURE 28 is a graph showing thicknesses and refractive indexes of the AR coatings prepared according to certain example embodiments;

FIGURE 29 is a graph showing the change of f(x) (the overall refractive index of an example anti-reflection coating) with the refractive index of the first layer according to certain example embodiments;

FIGURE 30 illustrates the structure of an example cationic surfactant, cetyltrimethylammonium chloride (CTAC);

FIGURE 31 illustrates the structure of an example triblock copolymer comprising polyethylene-polypropylene-polyethylene, Pluronic F127 (Aldrich);

FIGURE 32 schematically illustrates an example process of making anti-reflection coatings comprising at least two layers according to certain example embodiments;

FIGURE 33 is a graph showing the transmittance of certain example articles coated with anti-reflection coatings made according to certain example embodiments as compared to certain control examples;

FIGURE 34 is a graph showing the transmittance of certain example articles coated with anti-reflection coatings made according to certain example embodiments as compared to certain control examples;

FIGURE 35 is a graph showing the change in thickness in an example AR coating as a result of different heat treatments according to certain example embodiments;

FIGURE 36 is a graph that shows example refractive index differences as between different example anti-reflection coating methods according to certain example embodiments;

FIGURE 37 is a graph showing the transmittance curves of certain glass substrates supporting certain example anti-reflection coatings as compared to uncoated glass, according to certain example embodiments;

FIGURE 38 also is a graph showing the transmittance curves of certain glass substrates supporting certain example antireflection coatings as compared to uncoated glass, according to certain example embodiments;

FIGURE 39 also is a graph showing the transmittance curves of certain glass substrates supporting certain example antireflection coatings as compared to uncoated glass, according to certain example embodiments; and

FIGURE 40 is a flowchart illustrating a method for making an anti-reflection coating according to certain example embodiments.

## DETAILED DESCRIPTION OF CERTAIN EXAMPLE EMBODIMENTS

Certain example embodiments relate to antireflective (AR) coatings that may be provided for coated articles used in devices such as photovoltaic devices, storefront windows, display cases, picture frames, greenhouses, electronic devices, monitors, screens, other types of windows, and/or the like. In certain example embodiments (e.g., in photovoltaic devices), the AR coating may be provided on either the light incident side and/or the other side of a substrate (e.g., glass substrate), such as a front glass substrate of a photovoltaic device. In other example embodiments, the AR coatings described herein may be used in the context of sport and stadium lighting (as an AR coating on such lights), roof or wall window(s) of a greenhouse, and/or street and highway lighting (as an AR coating on such lights). In certain example embodiments, an AR coating may be used in applications such as storefront windows, electronic devices, monitors/screens, display cases, picture frames, other types of windows, and so forth. The glass substrate may be a glass superstrate or any other type of glass substrate in different instances.

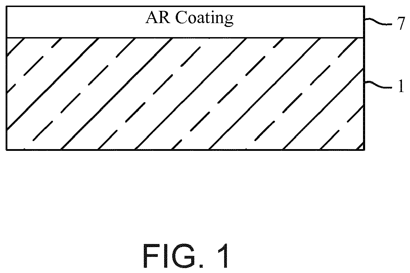

Referring now more particularly to the accompanying drawings in which like reference numerals indicate like parts throughout the several views, Fig. 1 is a side cross-sectional view of a coated article according to an example non-limiting embodiment of this invention. The coated article includes substrate 1 (e.g., clear, green, bronze, or blue-green glass substrate from about 1.0 to 10.0 mm thick, more preferably from about 1.0 mm to 3.5 mm thick), and anti-reflective coating 7 provided on the substrate 1 either directly or indirectly. In other example embodiments, particularly in solar and/or photovoltaic applications, a low-iron glass substrate such as that described in U.S. Patents 7,893,350 or 7,700,870 may be used. The anti-reflective coating 7 may comprise a single or multiple porous silica-based matrix and/or a hybrid silica-metal oxide matrix. Example methods of making a porous silica-based anti-reflective coating 7 are described in detail below.

In certain example embodiments, it may be desirable to improve the average transmittance gain ($T_{qe}$%) of a glass substrate coated with an AR coating (e.g., as compared to a glass substrate with no coating and/or as compared to certain example coated articles comprising a single layer anti-reflection coating). For example, it may be advantageous if glass substrates with AR coatings used commercially for solar panels have an increased transmittance gain (e.g., $T_{qe}$%) in the broadband range (e.g., from about 400 to 1200 nm). In order to improve the transmittance in this range (e.g., by reducing reflection), the thickness of the AR layer/coating may be modified and/or the refractive index may be tuned.

In certain example embodiments, in order to shift the reflectance to a reduced and/or sufficiently low value, the coating thickness and refractive index may be finely tuned and/or controlled. In certain example embodiments, nearly zero-reflectance can be reached if the following relationship is satisfied:

$$n_c = \left( n_0 n_s \right)^{1/2}$$

and

$$l = \lambda / 4$$

where $n_c$, $n_O$, and $n_s$ are refractive indices of the AR layer/coating, the incident medium, and the substrate, respectively, and where $l$ is the thickness of the AR layer, and $\lambda$ is the wavelength of incident light.

Furthermore, experimental data obtained from changing the size, gradient, and ratio of different sized particles in conjunction with the amount of binder used that fills in the geometrical space between particles also indicates that the film structure and porosity of an AR coating may have an effect on optical performance. Thus, it may be advantageous to control the film structure and/or porosity of an AR coating in order to produce desired optical properties.

It has been found that in certain examples, the pore size and/or porosity of the particles in a coating may also play a role in tuning the optical performance of AR coated glass substrates. In certain cases, it has been found that when pore sizes in the coating that are less than about 50 nm (e.g., ranging from about 1 to 50 nm, more preferably from about 2 to 25 nm, and most preferably from about 2.4 nm to 10.3 nm), the porosity of the corresponding films can vary widely. In certain examples, the porosity of a coating is the percent of the coating that is void space. For example, when the pore size is from about 2.4 to 10.3 nm, the porosity may vary over a range of about 10% or more -- e.g., from about 27.6% to 36%. Higher porosity may in some cases yield films with lower indices of refraction, but with tradeoffs in (e.g., compromised) durability. Furthermore, experimental data obtained from changing the size and ratio of different spherical particles in conjunction with the amount of binder used that fills in the geometrical space between particles may also indicate that the film structure and porosity of an AR coating may have an effect on optical performance. Thus, it may be advantageous to control the film structure and/or porosity of an AR coating in order to produce desired optical properties. Accordingly, there is provided a technique of creating pore space in a silica-based matrix that may achieve improved AR optical performance and/or film durability.

In certain example embodiments, the tailoring of pore size and/or porosity of AR coated films may be achieved by controlling the size of surfactants, polymers, and/or nanoparticles. In other examples, the pore size and/or porosity of an AR coating may be modified by introducing carbon-inclusive particles such as hollow particles inside the silica-based matrix of at least one of the layer(s) of the coating (or most/all of the coating). In certain embodiments, the intrinsic pore structure created by the size and shape of hollow nanoparticles additives may improve the capability to control the pore size and/or porosity of the coating following heat treatment, where the particles are at least partially burned off during the heat treatment (e.g., thermal tempering).

In certain example embodiments, porous inorganic AR coatings may be made by (1) a porogen approach using micelles as a template in a metal (e.g., Si, Al, Ti, etc.) alkoxide matrix; (2) inorganic or polymeric particles with metal alkoxides as binders; (3) inorganic nanoparticles with charged polymers as binder, (4) hollow silica nanoparticles; (5) mesoporous nanoparticles and/or (6) geometrically packing nanoparticles, wherein the gaps resulting from the geometric packing form pores.

In some example cases, the $T_{qe}$% may be increased when the AR coating is graded with respect to refractive index. Methods for developing anti-reflection coatings that are graded with respect to porosity include (1) microscopically roughening the surface of the substrate, wherein both the mean value of irregularity and the corresponding correlation lengths are smaller than the incident/peak wavelength; (2) etching layers in order to create porosity; (3) ion leaching, (4) layer by layer coating, (5) man-made "moth eye" coatings; (6) surface-relief grating, and (7) by texturing the surface. Meanwhile, different profiles for broadband anti-reflection coatings that are graded with respect to refractive index have been developed, including, linear, parabolic, cubic, Gaussian, quintic, exponential, exponential-sine, and Klopfensetin profiles.

In some example cases, the $T_{qe}$% may be increased when the AR coating is graded with respect to porosity. Thus, it may be advantageous to produce an anti-reflection coating that is graded with respect to porosity, e.g., in order to increase the transmittance gain in the broadband range. Although a single graded layer may be used, in other examples, two or more layers may be used in an AR coating in order to create a gradient to be generated across the various layers. Therefore, the layers individually and/or collectively may be graded with respect to pore shape, pore size, and/or porosity, in different example embodiments. In certain examples, a gradient porosity and/or pore distribution may be desirable in order to reduce light scattering. Accordingly, there is provided a technique of creating a gradient of pores of varying sizes and/or shapes in a silica-based matrix that may achieve improved anti-reflection optical performance and/or film durability.

In certain example embodiments, broadband antireflection coatings that are graded with respect to refractive index may be made by forming a sequence of layers that are graded with respect to porosity. It has advantageously been found that the porosity of some or all of the layers in the multi-layer anti-reflection coating may be formed and/or tuned by (a) forming layer(s) comprising combustible carbon-inclusive structures, wherein the layer(s) is/are heated to a temperature sufficient to cause the carbon-inclusive structures to combust, such that spaces are created where the carbon-inclusive structures were previously located (e.g., such that the spaces, the size/shape of which are determined by the type of carbon-inclusive compound, are tuned to create a desired porosity); (b) forming layers from a sol comprising mesoporous nanoparticles, such that the porosity of the layer is due to the pores within the nanoparticles themselves, as well as due to the spaces and/or gaps between the nanoparticles and/or agglomerates of nanoparticles, and the porosity can be tuned based on the size of the pores within the nanoparticles and/or based on the size and/or shape of the nanoparticles themselves; (c) forming layers from a surfactant-based sol and then extracting certain materials from the deposited layer in order to create pores left where the removed-materials were previously located; (d) forming layers from a sol comprising nanoparticles, wherein the gaps between the particles and/or agglomerates of particles form the pores, such that the porosity can be tuned by varying the size and/or shape of the nanoparticles; and/or (e) any combinations of the above methods.

As noted above, it has advantageously been found that in certain example embodiments, adding carbon-inclusive materials such as fullerene structures to a sol gel-based metal (e.g., Si, Al, Ti, etc.) oxide/alkoxide system may result in an improved anti-reflection coating. Certain example embodiments described herein relate to a method of making such an improved anti-reflection coating.

In other example embodiments, using one or more layers comprising mesoporous metal oxide and/or silica nanoparticles in an anti-reflection coating may also advantageously enable one to more fining tune the refractive index and/or anti-reflective properties of the layer.

In certain examples, using one or more layers made from a surfactant-based sol in an anti-reflection coating may also advantageously enable one to more finely tune the refractive index and/or anti-reflective properties of the layer.

In other cases, using one or more layers comprising nanoparticles may also advantageously enable one to more finely tune the refractive index and/or anti-reflective properties of the layer. In certain examples, if more than one layer is used, a gradient in porosity may be created by using nanoparticles of different shapes and/or sizes in each respective layer.

In certain example embodiments, a durable, broadband AR film with an increased $T_{qe}$%, may be produced by forming at least two sequential layers having different pore shapes and/or sizes. The methods for forming porous layers described herein may be combined such that an anti-reflection coating comprises layers formed via more than one method disclosed herein. The average pore shape and/or size of the pores in the first layer (e.g., the layer closest to the surface of the glass substrate) may be greater or larger than the average pore shape and/or size of pores in a second layer. In some examples, more than two layers may be provided; however, in other examples, the anti-reflection coating may comprise only two layers. It has advantageously been found the anti-reflection coatings that are graded with respect to porosity and made according to methods described herein may experience a Tqe% gain up to 10% greater than existing anti-reflection coatings.

In certain example embodiments, an improved antireflection (AR) coating is provided on an incident glass substrate of a solar cell or the like. In certain example embodiments, anti-reflection films and/or coatings may be used on glass substrates to increase the solar radiation absorption in solar cells, and to reduce front surface reflection of selective absorbers. For example, in certain example embodiments, AR coatings described herein may function to reduce reflection of light from the glass substrate, thereby allowing more light within the solar spectrum to pass through the incident glass substrate and reach the photovoltaic semiconductor so that the photovoltaic device (e.g., solar cell) can be more efficiently.

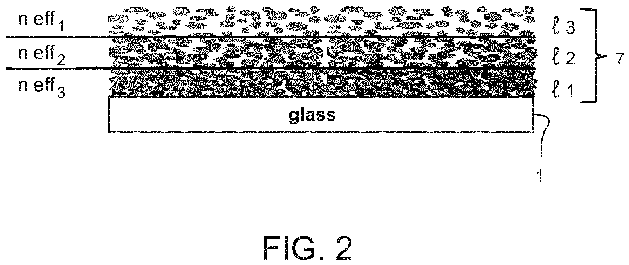

Fig. 2 is a side cross-sectional view of a coated article according to an example non-limiting embodiment of this invention. The AR coating illustrated in Fig. 2 comprises a gradient porous structure with a varying refractive index from air to substrate. In certain example embodiments, a gradient porous structure may be achieved by using layers with fewer and/or smaller pores closest to the surface of the substrate, and layers with larger and/or more numerous pores closer to the interface between the surface of the coating and the air.

More specifically, Fig. 2 shows glass substrate 1 with 3 layers and/or portions of a layer: $l1$, $l2$ and $l3$. The first layer or portion of a layer $l1$ is disposed over a major surface of the glass substrate, and is made of molecules that are packed very closely together. The second layer or portion of a layer $l2$ is disposed over $l1$, and comprises molecules that are less densely packed together than in $l1$. The porosity $p1$ of $l1$ is less than the porosity $p2$ of $l2$. The top layer or portion of a layer $l3$ (the outermost layer of the AR coating) is the least dense of the three layers/portions of the layer, and has the greatest porosity $p3$. Fig. 2 is only an illustrative example of an AR coating that is graded with respect to porosity. In certain example embodiments, the coating may include one layer that is graded with respect to pore shape, pore size and/or porosity throughout the layer, and in other example embodiments the coating may comprise two or more layers of differing pore shapes, sizes and/or porosities.

In certain example embodiments, the pores in an antireflection coating may be made by removing materials in a deposited layer in order to create vacancies where the removed materials previously were located (e.g., the materials may be removed via calcination, ozonolysis, solvent extraction, combustion, etc.). In other example embodiments, the pores may be made from the gap(s) generated from the geometric packing of nanoparticles. In further example embodiments, the pores may result from the mesoporous structure of nanoparticles. In still further example embodiments, the porosity of a layer may result from a combination of the foregoing scenarios.

More specifically, anti-reflection coatings with graded pore structures may be produced by a sol-gel process. In certain cases, a sol-gel approach may be economic, feasible, and readily scalable. Sol-gel processes in some cases involve the use of inorganic salts and/or metal alkoxides as precursors. Some sol-gel processes may include amphiphilic surfactants in certain examples. Hydrolysis and/or polycondensation reactions may occur when the precursors are mixed with water and an acidic and/or basic catalyst. Some sol-gel methods for forming anti-reflection coatings may use organic compounds, such as surfactants, as templates. Surfactant molecules may exhibit an amphiphilic structure, which includes a hydrophilic part (anionic, cationic, or neutral) and a hydrophobic part (hydrocarbon chains, polyalkyl ethers, etc.), in certain examples. Depending at least in part upon the structure and concentration, surfactant molecules may form different shapes of micelles in the precursor solution. An inorganic compound, such as tetraethyl orthosilicate (TEOS), may be used with or around the micelles to generate a core-shell structure. After the materials have dried, the surfactants may be removed by calcination, ozonolysis, and/or solvent-extraction, to obtain porous materials, in which the pore dimensions and/or shape approximately correspond to the chain length of the hydrophobic tail of the template molecules and/or the morphology of micelles, in certain example embodiments.

These materials may assist in ultimately generating layers comprising core-shell structures.

Evaporation-induced self-assembly (EISA) may also be used to produce AR coatings with graded pore structures in some cases. In certain example embodiments, this mechanism of formation of a thin film by using an organic template may be referred to as evaporation-induced self-assembly (EISA). In certain examples, the precursor solution may contain ethanol, water, hydrochloric acid, a soluble silica source, and a surfactant. The surfactant may be cationic, anionic, non-ionic, or any combination thereof. The concentration of surfactant in the solution may be less than the concentration at which micelles or other aggregates may be formed. During the withdrawal process of the substrate through solution, the surfactant concentration may be progressively increasing, and disorder may be generated among the micelles. The ordered micelles will be built up as more solvent is evaporated. This process may permit the formation of a meso-structured silica film within a few minutes, and in some examples, less than a minute (e.g., within a time on the order of 10s of seconds, or even less).

In other example embodiments, porous layers may be created by introducing combustible carbon-inclusive particles such as hollow particles inside a silica (or metal oxide)-based matrix, and later heating the layer or coating to a temperature sufficient for the particles to combust, leaving pores of pre-determined sizes and/or shapes.

For example, in certain example embodiments, carbon-based and/or fullerene structures may be mixed with metal oxides and/or alkoxides in order to form a sol gel coating solution that may be deposited on a substrate through sol gel-type methods (e.g., casting, spin coating, dipping, spray, curtain and roller, etc.). An example of a typical sol gel process is disclosed in U.S. Patent No. 7,767,253.

In certain example embodiments, a coating solution may be made by mixing a silane-based compound, fullerene structures, and an organic solvent. In certain example embodiments, the organic solvent may be of or include a low molecular weight alcohol such as n-propanol, isopropanol, ethanol, methanol, butanol, etc. However, in other embodiments, any organic solvent, including higher-molecular weight alcohols, may be used.

It has advantageously been found that in certain example embodiments, adding carbon-inclusive materials such as fullerene structures to a sol gel-based metal (e.g., Si, Al, Ti, etc.) oxide/alkoxide system may result in an improved AR coating. Certain example embodiments described herein relate to a method of making such an improved AR coating.

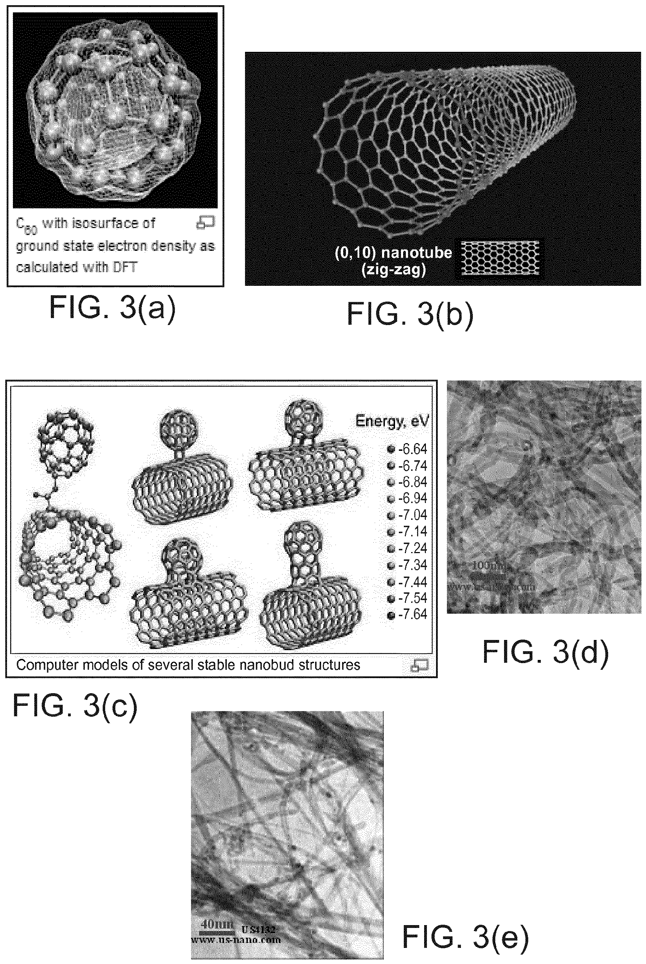

Fig. 3(a)-3(e) illustrate various types of fullerene structures.

In certain example embodiments, "fullerene structures" as disclosed herein may refer to materials such as carbon-based structures comprising carbon nanotubes (CNT) - single wall and/or multiple wall nanotubes (SWNT and/or MWNT), buckyball spherical structures, other fullerene spheroids, carbon nanobuds, and/or any other structures made of or including thin layers based on carbon. In certain example embodiments, by using fullerene structures in an AR coating (e.g., a silicon oxide-based AR coating), the pore size and/or porosity of the AR coating may advantageously be adjusted more precisely and/or over a wider range. Furthermore, in certain example embodiments, the refractive index of the coating may be tuned by choosing a desired porosity, but obtaining said porosity with smaller pores. In certain instances, making a coating having a particular porosity by using smaller (but a greater number of) pores, or "pores" with a smaller diameter/width but longer length, may result in a coating with improved durability. For example, in certain example embodiments, the average width of a pore may be less than about 2 nm, more preferably less than about 1 nm, and in certain embodiments, less than about 0.5 nm. In certain embodiments, such as when carbon nanotubes are used as the fullerene structure to be partially and/or fully burned off, the resulting pores may be smaller in diameter than pores made from using other methods, but due to the length of the pores, the desired porosity may be achieved.

Moreover, in certain example embodiments, hollow particles (e.g., fullerene structures) of a particular size(s) and/or shape(s) may be chosen based on the pore structure(s) and/or size(s) desired for the final coating. In certain examples, this may advantageously enable the refractive index of an AR coating to be more finely tuned. In certain example embodiments, other types of combustible materials, structures or particles that include carbon may replace or be used in addition to or instead of the fullerene structures in order to form the pores.

Fullerene structures may be desirable in certain example embodiments because the tempering process used to cure the sol gel film may combust (e.g., burn off partially or fully) the carbon-based structures, but leave the silica-based matrix intact. In certain examples, this may leave a controlled void space/volume where the structures (e.g., particles) had been prior to the heat treatment. In certain instances, the void space/volume may be controlled so as to tune the antireflective performance (e.g., tuning the refractive index) and/or improving the durability of the coating and/or coated article. In certain example embodiments, through the use of hollow carbon fullerene structures, the optical performance of an AR coating (e.g., formed via sol gel) may be improved and/or become more controllable. In certain cases, this may be due to the introduction of these hollow nanostructures into the coated layer prior to any heat treatment.

In certain cases, as Figs. 3(a)-3(e) indicate, fullerene-based carbon structural materials may include spherical structures known as buckyballs, nanotubes, and/or other shapes and geometries. Fullerene-based structures may have unique properties that may make them potentially useful in many applications in, for example, nanotechnology, electronics, optics, other fields of materials science, and potentially in architectural fields. In certain example embodiments, fullerene structures may exhibit extraordinary strength and/or unique electrical properties. Fullerene structures alone are generally not reactive. In some cases, fullerene structures may be efficient thermal conductors. These porous materials can also cover a wide range of pore sizes to accommodate fine tuning the structure of the coating to have the desired optical and/or durability properties.

Fig. 3(a) illustrates an example fullerene buckyball. For example, the diameter of a buckyball may be on the order of from about 1 to 2 nm.

Fig. 3(b) illustrates an example single-walled carbon nanotube. The diameter of a nanotube may be on the order of a few nanometers, or even less. However, in some cases, carbon-based nanotubes may be up to 18 cm in length. In certain cases, nanotubes have been constructed with a length-to-diameter ratio of up to about 132,000,000:1. This may be significantly larger than any other material in some cases.

Fig. 3(c) illustrates fullerenes of or including carbon nanobuds on nanotubes. Nanobuds, a more recently discovered type of fullerene geometry, form a material made from the combination of two allotropes of carbon - carbon nanotubes and spheroidal fullerenes. Carbon nanobuds may include spherical fullerenes covalently bonded to the outer sidewalls of the underlying nanotube, creating carbon nodules or buds attached to the nanotube body. These carbon nanoparticles can be used to form a geometrical template to create porosity in a (sol gel) silica-based matrix, in certain examples, for use as a broadband AR coating.

Figs. 3(d) and 3(e) illustrate TEM (transmission electron microscope) pictures of different CNTs. Fig. 3(d) shows multi-walled carbon nanotubes, and Fig. 3(e) shows single-walled carbon nanotubes. Some fullerene structures (e.g., CNTs, etc.) are available from America Dye Inc., and US Nano-Materials Inc, for example.

In certain example embodiments, fullerene structures may be mixed with metal oxides and/or alkoxides in order to form a sol gel coating solution that may be deposited on a substrate through sol gel-type methods (e.g., casting, spin coating, dipping, spray, curtain and roller, etc.). An example of a typical sol gel process is disclosed in U.S. Patent No. 7,767,253.

In certain example embodiments, a coating solution may be made by mixing a silane-based compound, fullerene structures, and an organic solvent. In certain example embodiments, the organic solvent may be of or include a low molecular weight alcohol such as n-propanol, isopropanol, ethanol, methanol, butanol, etc. However, in other embodiments, any organic solvent, including higher-molecular weight alcohols, may be used.

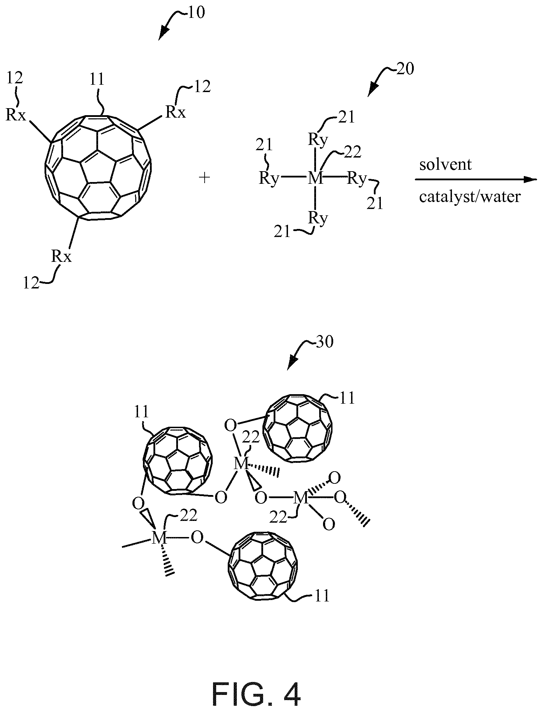

An example process for making an AR coating with fullerene nanoparticle structures is illustrated in Fig. 4. That is, Fig. 4 shows an example method of making a metal (e.g., Si, Ti, Al, etc.) oxide and fullerene structure-based matrix. The compounds indicated by 10 comprise fullerene structure(s) 11 having functional groups 12 comprising Rx. In certain embodiments, the Rx groups may be of or include a similar compound. In other example embodiments, some Rx groups may be different from each other. An example of an Rx group is OH (e.g., a hydroxyl group). However, functional groups 12 may comprise any material that will react with metal oxide 20.

Metal oxide/alkoxide compound 20 may comprise metal (M) 22, and groups 21 comprising Ry. In certain example embodiments, groups Ry may be of or include a similar compound. In other example embodiments, some groups Ry may be different from each other. An example of an Ry group is OR, or oxygen atoms bonded to carbon-based compounds. However, groups 21 may comprise any material(s) that will react with, or enable compound 20 to react with, functional groups 12 of fullerene structure(s) 11.

In certain example embodiments, metal oxide compound 20 may be hydrolyzed. In certain examples, the hydrolysis reaction may cause some groups 21 comprising Ry to become hydroxyl groups. In other examples, other reactions may cause at least portions of the Ry groups (e.g., the carbon-based compounds R may be split from an oxygen that is bonded to metal (M)) to cleave from the metal M atoms.

In certain examples, the hydrolyzed metal oxide-based compound 20 may be mixed with compound(s) 10 (e.g., fullerene structures 12 comprising functional groups 11), and solvent, and optionally catalysts, water, and/or further solvents, to make network 30. In certain example embodiments, network 30 (before and/or after any drying steps) may comprise fullerene structures 11 and metal (M) 22-based network, wherein the fullerene structures and the metal atoms are bonded via oxygen atoms (e.g., from the Rx and/or Ry groups).

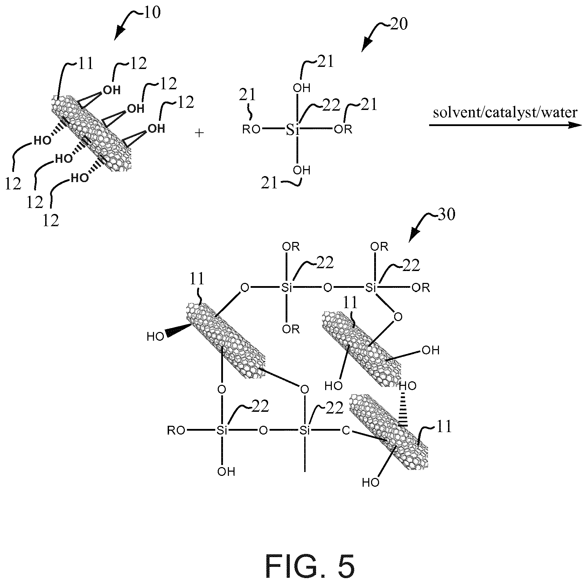

A further example method of making a silica and fullerene (CNT)-based matrix is shown in Fig. 5. In Fig. 5, metal oxide 20 comprises a hydrolyzied silane-based compound, and fullerene structure(s) 10 comprise(s) carbon nanotubes 11 with functional groups 12 comprising at least one (or more) hydroxyl group(s) (e.g., OH). Silane-based compound 20 (including Si atom(s) 22 and functional groups 21 (e.g., O-R and/or OH groups) is mixed with CNTs 11, and (e.g., through a condensation reaction) a silica (e.g., element 22) and CNT (e.g., element 11) based matrix 30 is produced. However, in some embodiments, the fullerene structures may have functional groups 12 other than OH groups attached thereto. Fullerene structures alone are generally not reactive. However, the hydroxyl groups bonded to the fullerene structure may react with a silane-based compound. The silane-based compound 20 can be any compound comprising silicon with e.g., four reaction sites. The silane-based compound may comprise Si bonded to OH groups, OR groups (e.g., where R is a carbon-based compound such as a hydrocarbon), or a mix of OH and OR groups. In certain example embodiments, the silane-based material may comprise silicon atoms bonded to four "OR" groups, and upon hydrolysis, at least some of the R groups will be replaced by H atoms so as to facilitate the reaction between the silicon-based compound and the functional group of the carbon-based structures.

In an exemplary embodiment, a coating composition may comprise TEOS, CNTs with at least one (or more) hydroxyl groups, and an organic solvent such as ethanol, water and catalyst (acid and/or base). The coating solution may be deposited on a glass substrate via sol gel coating methods such as, for example, dipping, casting, spray, spinning, curtain and roller, etc. Hydrolysis of metal alkoxides may be initiated by a catalyst (an acid or base) and water. Condensation of hydrolyzed metal alkoxides with functional fullerene and self-condensation of hydrolyzed metal alkoxides may occur prior to the formation of a sol, or in the sol. In this example, a reactive silane may be generated by the hydrolysis of TEOS. Then, at least some of the OH and/or OR sites of the silane may react with the hydroxyl functional groups of a fullerene structure in a condensation reaction. A network 30 comprising silica bonded to the fullerene structures (here, CNT) via oxygen results in certain embodiments. Specifically, one or more CNTs with one or more hydroxyl groups (compounds 10 in Fig. 5) combine with hydrolyzed TEOS (element 20) in a condensation reaction to produce a network of CNTs and TEOS (element 30).

Although TEOS is used as an exemplary example of a silica-based compound to form a silica-based network, any organic compound with silica, particularly with silicon and/or silane with four reaction sites, may be used in certain example embodiments. Furthermore, porous layers based on other metal oxides/alkoxides may be made this way as well.

In certain example embodiments, the process of forming a solid silica and fullerene-based network can be implemented by evaporation-induced self-assembly (EISA), with suitable solvents (e.g., low molecular weight organic solvents). By-products or unused reactants, such as water, solvent and/or hydrocarbons (e.g., from the R group of the silane and/or the solvent), that do not evaporate on their own as the coating is formed/immediately after, may be evaporated during a drying step. In certain example embodiments, after the coating is formed, the coating may be dried. In certain example embodiments, this drying may be performed in an oven and/or in any appropriate environment. The drying may be performed at a temperature of from about room temperature to 100°C, more preferably from about 50 to 80°C, and most preferably at a temperature of about 70°C. The drying may be performed for anywhere from a few seconds to a few minutes, more preferably from about 30 seconds to 5 minutes, and most preferably from about 1 to 2 minutes (at a temperature around 70°C).

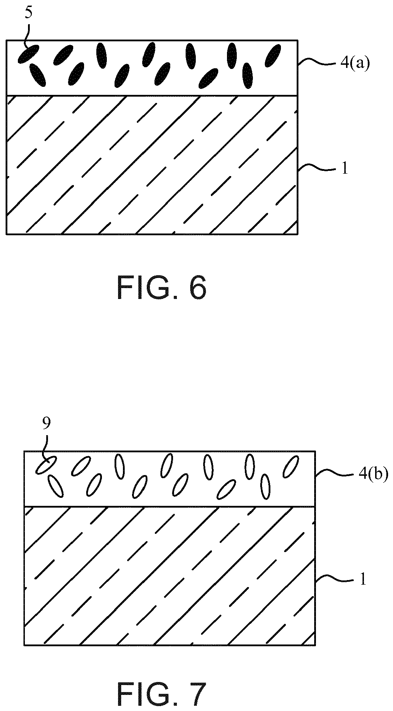

Fig. 6 is a cross-sectional view of an example coated article comprising a silica-based layer 4(a) after it has dried. In certain example embodiments, the silica-based matrix may include fullerene structures 5 that are basically trapped in a solid silica-based matrix after drying. Depending on the type of fullerene structure used, the shape of the fullerene structures (or other carbon-based structures such as particles) in the matrix may be substantially closed and/or substantially spherical (e.g., if buckyballs were used as the fullerene), or continuous (e.g. forming tunnels and/or wormholes), and/or a mix of the two (e.g., if more than one type of fullerene structure is used and/or if nanobuds are used). At this stage, after drying, but prior to any heat treating/thermal tempering, the amount of solids in the coating in certain example embodiments may be from about 0.2 to 2%, more preferably from about 0.5 to 1%, and most preferably from about 0.6 to 0.7% (by weight). The solids in the coating may comprise silica and carbon (e.g., fullerene structures). In certain example embodiments, the fullerenes may comprise from about 25 to 75%, more preferably from about 35 to 65%, and most preferably about 50% of the total solid content (by weight) of the coating/layer after drying prior to any heat treatment such as thermal tempering. Similarly, the silica may comprise from about 25 to 75%, more preferably from about 35 to 65%, and most preferably about 50% of the total solid content (by weight) of the coating/layer after drying prior to any heat treatment such as thermal tempering.

The thickness of the coating layer and its refractive index may be modified by the solid amount and composition of the sols. The pore size and/or porosity of the AR coating may be changed by (1) the geometric design of the fullerene nanoparticles used (e.g., CNT, buckyball, nanobuds, nanobuds on nanotubes, spheroids, and any other suitable carbon-based nanoparticles); and/or (2) the amount of the fullerene and metal alkoxides used.

In certain example embodiments, the fullerene structures may be reduced, substantially removed, and/or eliminated from the final layer, coating, or film during curing and/or heat treatment such as thermal tempering and/or chemical extraction. More specifically, during a subsequent heating step after the layer has been deposited, the carbon may combust, and may leave pores (e.g., empty spaces) where the fullerene structures previously were located prior to the heat treating.

Fig. 7 shows an example AR layer 4(b) after the fullerene structures 5 have been substantially removed by combusting during the heat treating, creating pores 9 where the fullerene structures 5 were previously located. In certain example embodiments, the glass substrate 1 supporting the layer 4(a) comprising a silica and fullerene-based matrix may be thermally and/or chemically tempered to form layer 4(b). Thus, by thermally tempering a coated substrate comprising a silica and fullerene-based layer, a porous silica anti-reflective layer may be formed. This porous silica anti-reflective layer may advantageously have pores that are very small in at least diameter (e.g., on the scale of 1 to 2 nm), and various shapes, enabling the coating to have an improved durability and optical performances, in certain example embodiments. Furthermore, the pores may be formed so as to be closed and/or tunnel-like, depending on the desired properties.

In addition to increasing the strength of the glass, the heat treating/ tempering may also be performed at such a temperature that the carbon (and therefore the fullerene structures) combust. In certain example embodiments, heat treating/tempering may be performed at a temperature of at least about 500°C, more preferably at least about 560°C, even more preferably at least about 580 or 600°C, and most preferably the coated substrate is tempered at a temperature of at least about 625-700°C, for a period of from about 1 to 20 min, more preferably from about 2 to 10 min, and most preferably for about 3 to 5 minutes. In other embodiments, heating may be performed at any temperature and for any duration sufficient to cause the carbon in the layer to combust.

In certain example embodiments, the carbon in the layer may react with the heat and moisture in the environment during tempering, and may diffuse out of the coating as CO, $CO_2$, and/or $H_2O$ vapor. The combustion of the carbon (and consequently the fullerene structures) may leave pores (e.g., empty spaces) in the silica-based matrix where the fullerene structures previously were located.

In certain example embodiments, some traces of carbon (C) may remain in the layer following the heat treatment. In certain example embodiments, the anti-reflective layer may comprise from about 0.001 to 10% C, more preferably from about 0.001 to 5% C, and most preferably from about 0.001 to 1% C, after heating/tempering (by weight).

In certain example embodiments, the refractive index of the anti-reflective layer may be from about 1.15 to 1.40, more preferably from about 1.17 to 1.3, and most preferably from about 1.20 to 1.26, with an example refractive index being about 1.22. In certain examples, the thickness of a single-layer anti-reflective coating may be from about 50 to 500 nm, more preferably from about 50 to 200 nm, and most preferably from about 120 to 160 nm, with an example thickness being about 140 nm. However, in certain instances, the refractive index may be dependent upon the coating's thickness. In certain examples, a thicker anti-reflective coating will have a higher refractive index, and a thinner anti-reflective coating may have a lower refractive index. Therefore, a thickness of the coating may vary based upon the desired refractive index.

In certain example embodiments, to achieve a desirable refractive index, the porosity of the anti-reflective coating may be from about 15 to 50%, more preferably from about 20 to 45%, and most preferably from about 27.6 to 36%. The porosity is a measure of the percent of empty space within the coating layer, by volume. In certain example embodiments, the pore size may be as small as 1 nm, or even less. The pore size may range from about 0.1 nm to 50 nm, more preferably from about 0.5 nm to 25 nm, even more preferably from about 1 nm to 20 nm, and most preferably from about 2.4 to 10.3 nm. Pore size, at least in terms of diameter, may be as small as the smallest fullerene will permit. Higher porosity usually leads to lower index but decreased durability. However, it has been advantageously found that by utilizing fullerene structures with very small diameters, a desired porosity (in terms of % of empty space in the coating) may be obtained with a reduced pore size, thereby increasing the durability of the coating.

The porous silica-based layer may be used as a single-layer anti-reflective coating in certain example embodiments. However, in other embodiments, under layers, barrier layers, functional layers, and/or protective overcoats may also be deposited on the glass substrate, over or under the anti-reflective layer described herein in certain examples.

A porous silica-based anti-reflective layer according to certain example embodiments may be used as a broadband anti-reflective coating in electronic devices and/or windows. However, coatings as described herein may also effectively reduce the reflection of visible light. Thus, in addition to photovoltaic devices and solar cells, these coated articles may be used as windows, in lighting applications, in handheld electronic devices, display devices, display cases, monitors, screens, TVs, and the like.

Although TEOS is given as an example silica-precursor used to form a silica-based matrix, almost any other silica precursor may be used in different example embodiments. In certain cases, all that is necessary is a silicon-based compound comprising Si with four bond sites (e.g., a silane). Although a porous silica-based anti-reflective coating is described in many of the examples, a porous layer of any composition may be made according to certain methods disclosed herein. For example, if a glass substrate were treated so as to have a higher index of refraction at its surface, and a porous layer with a higher index of refraction could therefore be used to sufficiently reduce reflection, a titanium oxide and/or aluminum oxide-based matrix with fullerenes that are combusted to produce a porous layer could also be made.

In still further example embodiments, other metal oxide and/or alkoxide precursors may be used. Porous coatings of other metal oxide and/or alkoxide precursors may be used for other applications. If reducing reflection is not the primary goal, or if the coating is used on a substrate with an index of refraction different from that of glass, other metal oxides may be reacted with reactive groups attached to fullerene structures to form other types of metal oxide-fullerene matrices. These matrices may subsequently be heated/tempered to form porous metal oxide coatings in certain embodiments. In other words, porous metal oxide-based matrices of any metal, for any purpose, may be formed by utilizing the space left by combusted fullerenes.

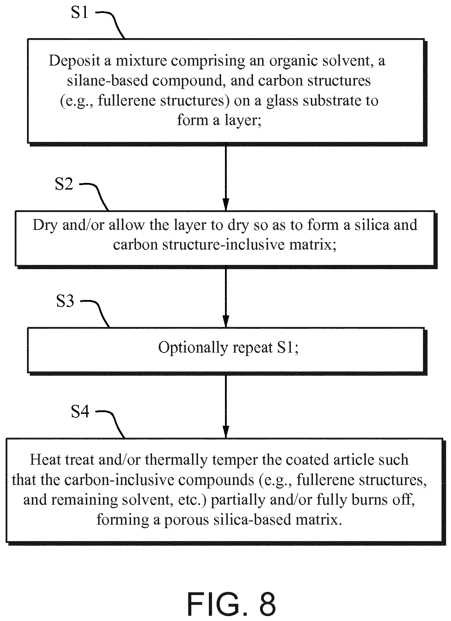

Fig. 8 illustrates an example method of making a porous metal oxide-based layer (e.g., a porous silica-based layer). In step Si, a coating solution comprising a silane-based compound, a solvent, and fullerene(s) with at least one (but possibly more) hydroxyl group may be formed on a glass substrate. In certain cases, the coating solution may be deposited by any appropriate sol gel deposition technique.

In step S2, the coating solution is dried to form a first layer comprising fullerene-based structures, and any remaining solvent, water, catalyst, unreacted reagent, and/or other by-products may be evaporated. A layer comprising a matrix of silica and fullerenes remains.

In step S3, step Si may optionally be repeated. For example, a second layer may be formed over the first layer. The second layer may be formed in the same manner as the first layer (e.g., see Si), in certain cases. However, the second layer may be formed by any method that produces a porous layer. The second layer optionally may be dried, etc., as in step S2. This loop may take place one or more times in different example embodiments.

In step S4, the coated article is thermally tempered such that the fullerenes (and any other carbon-based compounds remaining in the layer) combust, and diffuse out of the layer(s); resulting in a layer comprising a silica-based matrix with pores where the fullerene structures previously had been located. The multi-layer coating may be used as an anti-reflection coating in certain example embodiments. In certain cases, at least two layers may be present. The layers may be graded with respect to porosity, in order to create a coating with a gradient with respect to refractive index, in certain examples.

In certain example embodiments, the method may further comprise an intermediate heating layer between drying and heat treating. In certain examples, particularly where solvents and/or silane-based compounds with higher molecular weights are used, an intermediate heating step may ensure all of the by-products and/or unused reactants or solvents are fully evaporated prior to any relocation of the coated article for tempering that may be necessary.

Certain terms are prevalently used in the glass coating art, particularly when defining the properties and solar management characteristics of coated glass. Such terms are used herein in accordance with their well known meaning (unless expressly stated to the contrary). For example, the terms "heat treatment" and "heat treating" as used herein mean heating the article to a temperature sufficient to achieve thermal tempering, bending, and/or heat strengthening of the glass inclusive article. This definition includes, for example, heating a coated article in an oven or furnace at a temperature of least about 560, 580 or 600 degrees C, and in some cases even higher, for a sufficient period to allow tempering, bending, and/or heat strengthening, and also includes the aforesaid test for thermal stability at about 625-700 degrees C. In some instances, the HT may be for at least about 4 or 5 minutes, or more.

In certain example embodiments, there is provided a method of making a coated article including a broadband anti-reflective coating comprising porous silica on, directly or indirectly, a glass substrate. A coating solution comprising a silane, fullerene structures comprising at least one functional group, and a solvent is formed. A layer is formed on, directly or indirectly, the glass substrate by disposing the coating solution on the glass substrate. The layer is dried and/or allowed to dry so as to form a coating comprising silica and a fullerene structure-based matrix on the glass substrate. This process may be repeated to form further layer(s), in certain cases. In other example embodiments, further layer(s) may be formed via different methods. In some cases, another method may be used to deposit a first layer, and the method disclosed in this paragraph may be used to deposit a second layer over the first layer. The glass substrate with the layer comprising silica and fullerene structure-based matrix thereon (and optionally other layers) is heat treated so as to combust the fullerene structures, leaving pores following said heat treating in locations where the fullerene structures had been prior to said heat treating, so as to form an anti-reflective coating comprising a porous silica-based matrix on the glass substrate.

In addition to the features of the preceding paragraph, in certain example embodiments, a porosity of the anti-reflective coating may be from about 20 to 45%.

In addition to the features of either of the two preceding paragraphs, in certain example embodiments, the fullerene structures may comprise carbon nanontubes (CNTs).

In addition to the features of any of the three preceding paragraphs, in certain example embodiments, the fullerene structures may comprise carbon nanobuds.

In addition to the features of any of the four preceding paragraphs, in certain example embodiments, the fullerene structures may comprise buckyballs.

In addition to the features of any of the five preceding paragraphs, in certain example embodiments, the fullerene structures may comprise one or more of CNTs, carbon nanobuds, and buckyballs.

In addition to the features of any of the six preceding paragraphs, in certain example embodiments, the functional group of the fullerene structures may comprise a hydroxyl group.

In addition to the features of any of the seven preceding paragraphs, in certain example embodiments, the silane may comprise tetraethyl orthosilicate (TEOS).

In addition to the features of any of the eight preceding paragraphs, in certain example embodiments, the solvent comprises ethanol.

In certain example embodiments, a method of making an anti-reflective coating is provided. A coating solution comprising at least a metal oxide, carbon-inclusive structures, and a solvent is provided. The coating solution is disposed on a glass substrate so as to form a layer comprising a metal oxide and carbon-inclusive structure-based matrix. Other layers may optionally be formed over or under this carbon-inclusive structure-based matrix, by this or other methods. The substrate is heat treated with the layer(s) thereon so as to combust the carbon-inclusive structures, so that after the heat treating pores are located substantially where the carbon-inclusive structures had been prior to the heat treating, so as to form a coating comprising layers comprising porous metal/silica oxide(s).

In addition to the features of the preceding paragraph, in certain example embodiments, the metal oxide may comprise a silane.

In addition to the features of either of the two preceding paragraphs, in certain example embodiments, the carbon-inclusive structures may comprise fullerene structures.

In addition to the features of the preceding paragraph, in certain example embodiments, at least some of the fullerene structures may comprise a functional group.

In addition to the features of the preceding paragraph, in certain example embodiments, the functional group may be a hydroxyl group.

In addition to the features of any of the five preceding paragraphs, in certain example embodiments, the heat treating is performed at a temperature of at least about 560°C.

In certain example embodiments, a coated article is provided. A glass substrate is provided. A coating is supported by the glass substrate, with the coating comprising a matrix comprising fullerene structures and silica.

In addition to the features of the preceding paragraph, in certain example embodiments, at least some of the fullerene structures may have a diameter of less than about 2 nm.

In addition to the features of either of the two preceding paragraphs, in certain example embodiments, the fullerene structures may comprise at least one of buckyballs, carbon nanotubes, and carbon nanobuds.

In certain example embodiments, a coated article is provided. A glass substrate with an anti-reflective coating disposed thereon is provided. The anti-reflective coating comprises porous silica, and comprises pores having carbon residue.

In addition to the features of the preceding paragraph, in certain example embodiments, the anti-reflective coating has a porosity of from about 15 to 50%, more preferably from about 20 to 45%, and most preferably from about 27.6 to 36%.

In certain example embodiments, there is provided a method of making a coated article including an anti-reflective coating comprising porous silica on, directly or indirectly, a glass substrate. A coating solution comprising a silane, carbon-inclusive structures, and a solvent is formed. A coating is formed on, directly or indirectly, the glass substrate by disposing the coating solution on the glass substrate to form a layer. The layer is dried and/or allowed to dry so as to form a layer comprising silica and a matrix comprising the carbon-inclusive structures on the glass substrate. Other layers may be present over and/or under the layer comprising silica and a matrix comprising the carbon-inclusive structures The glass substrate is heat treated with the coating comprising silica and the matrix comprising the carbon-inclusive structures thereon (and optionally other layers) so as to combust the carbon-inclusive structures, leaving spaces and/or pores following said heat treating in locations where the carbon-inclusive structures had been prior to said heat treating, so as to form an anti-reflective coating comprising a silica-based matrix on the glass substrate.

In certain example embodiments, the carbon-based structures may be reduced, substantially removed, and/or eliminated from the final layer, coating, or film during curing and/or heat treatment such as thermal tempering and/or chemical extract. More specifically, during a subsequent heating step after the layer has been deposited, the carbon may combust, and may leave pores (e.g., empty spaces) where the fullerene structures previously were located prior to the heat treating.

In further example embodiments, solutions comprising mesoporous nanoparticles may be used to create a desired pore structure in one or more layers in an AR coating. In these examples, the pores may arise from both the meso-pores of the nanoparticles themselves, and/or from the gaps between the nanoparticles and/or agglomerates of nanoparticles in the layer

In certain example embodiments, the tailoring of pore size and/or porosity of AR coated films may be achieved by controlling the size of surfactants, polymers, and/or nanoparticles. More particularly, in certain examples, the pore size and/or porosity of an anti-reflection coating may be modified by introducing porous nanoparticles such as mesoporous nanoparticles of or including silicon oxide, titanium oxide, etc., inside a silica-based matrix of at least one of the layer(s) of the coating (or most/all of the coating). In certain example embodiments, porous nanoparticles (e.g. nano- and/or meso-porous) materials may exhibit pore sizes ranging from about 1 to 100 nm, more preferably from about 2 to 50 nm, and most preferably from about 2 to 25 nm; although they may be larger or smaller according to different example embodiments. In certain example embodiments, if more than one layer is used in the anti-reflection coating, the size of the pores in the nanoparticles themselves may be tuned within each layer. Furthermore, the size of the porous nanoparticles may also be tuned within each layer, in order to create a gradient in porosity within the coating, in certain cases.

Porous nanoparticles may demonstrate different pore morphologies, for example, hexagonal, bi-continuous cubic, and/or lamellar morphologies, in certain examples. The morphology of porous nanoparticles materials may be tailored by the chemical structure of surfactants and/or the nature of the process, in some cases. Furthermore, the surface(s) of porous materials may be modified to fit various applications, according to different embodiments.

In certain example embodiments, the pore structure created by virtue of the size and shape of porous nanoparticles additives as well as that created by the spaces between the molecules may improve the capability to control the pore size and/or porosity of the coating prior to and/or following heat treatment (e.g., thermal tempering).

It has advantageously been found that in certain example embodiments, adding nano- and/or meso-porous metal oxide nanoparticles (e.g., oxides of or including any of Si, Ti, Zn, Fe, Al, W, B, Zr, and/or the like) to a sol gel-based metal (e.g., Si, Al, Ti, etc.) oxide/alkoxide system may result in an improved AR coating.

For example, in certain exemplary embodiments, nanoporous and/or mesoporous nanoparticles may be made from silicate materials. In certain embodiments, these materials may have a refractive index close to that of a glass substrate. In other example embodiments, porous nanoparticles may also be prepared from metal oxides and/or transition metal oxides, such as oxides of or including any of Si, Ti, Al, Fe, V, Zn, V, Zr, Sn, phosphate, etc. Certain example embodiments described herein relate to a method of making such an improved AR coating.

In certain example embodiments, AR coatings may comprise porous materials (e.g., mesoporous nanoparticles). In certain examples, sol gel technology with metal oxides and/or alkoxides (e.g. silanes, other metal oxides, etc.) may be used to create at least one layer in a multi-layer anti-reflection coating for a glass substrate. For example, one or more porous nanoparticle-inclusive layer(s) may be used in anti-reflection coating that is graded with respect to refractive index and/or porosity. In certain cases, the desired porosity and/or pore size for one or more layer(s) may be achieved through the geometric package of porous nanoparticles and/or the intrinsic pore structure of mesoporous materials.

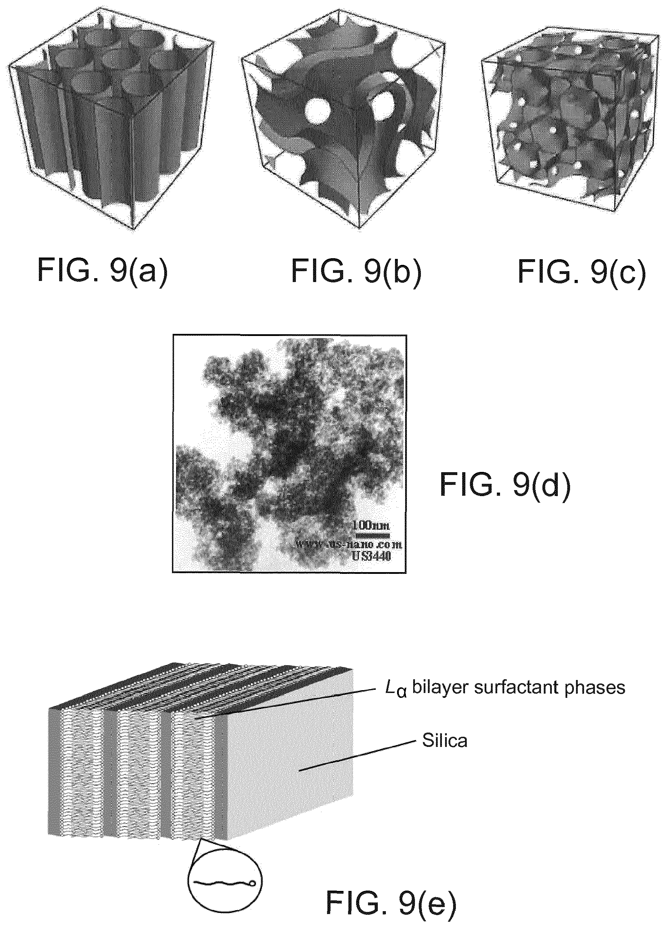

Figs. 9(a)-9(e) illustrate various microstructures in mesoporous materials. Fig. 9(a) illustrates an example microstrucutre with a hexagonal morphology. Fig. 9(b) illustrates an example microstructure with a bi-continuous cubic morphology. Fig. 9(c) also illustrates an example microstructure with a cubic morphology. Fig. 9(d) is a TEM (transmission electron microscope) image of porous amorphous silica nanoparticles with a pore size of 15-20 nm, and a specific surface area of 640 $m^2$/g. Fig. 9(e) illustrates an example microstructure with a lamellar morphology. As above, porous nanoparticles are available from America Dye Inc. and US Nano-Materials Inc., for example.

In certain example embodiments, "nanoporous materials" and/or "mesoporous materials" as disclosed herein may refer to materials such as nanoporous and/or mesoporous nanoparticles with varying pore sizes and varying surface morphologies. In certain example embodiments, by using porous nanoparticles in an AR coating (e.g., a silicon oxide-based AR coating), the pore size and/or porosity of the AR coating may advantageously be adjusted more precisely and/or over a wider range. Furthermore, in certain example embodiments, the refractive index of the coating may be tuned by choosing a desired porosity, but obtaining said porosity with at least two types of pore sizes -- e.g., pore sizes generated by the space(s) between molecules, and pore sizes created inherently in the coating from the porous nanoparticles in the matrix. In certain instances, making a coating having a particular porosity by using varying sizes/types of pores may result in a coating with improved durability. For instance, in certain example embodiments, the average width of a pore may be less than about 2 nm, more preferably less than about 1 nm, and in certain embodiments, less than about 0.5 nm.

Moreover, in certain example embodiments, porous nanoparticles with a particular pore size(s) and/or shape(s) may be chosen based on the pore structure(s) and/or size(s) desired for the final coating. In certain instances, this may advantageously enable the refractive index of an AR coating to be more finely tuned. In certain example embodiments, other types of porous materials, structures or particles that include porous materials may replace or be used in addition to or instead of the porous nanoparticles in order to form the pores. In some cases, an anti-reflection coating may comprise more than one layer, wherein each layer has a different porosity, such that the coating is graded with respect to refractive index and/or porosity

Porous nanoparticles may be desirable in certain embodiments because they may enable the pore size and/or porosity of the AR coating to be tuned by both or either (1) the geometric package of porous nanoparticles (e.g., the size of pores between molecules in the matrix, etc.), and/or (2) the pore size of the porous nanoparticles (e.g., the size of the pores in the porous materials). In certain examples, this may permit control over pore size, and may enable an AR coating with more than one pore size to be formed. In certain example embodiments, this may advantageously permit one to tune the porosity of the AR coating, and thus the refractive index, to a finer degree. In certain instances, the pore size(s) (e.g., void space/volume) may be controlled so as to tune the antireflective performance (e.g., tuning the refractive index) and/or improving the durability of the coating and/or coated article. In certain example embodiments, through the use of porous nanoparticles, the optical performance of an AR coating (e.g., formed via sol gel) may be improved and/or become more controllable. In certain cases, this may be due to the introduction of these porous nanostructures into at least one layer in a multi-layer (e.g., more than one layer(s)) anti-reflection coating.

Similar to the fullerene structures discussed above, as Figs. 9(a)-9(e) indicate, porous nanoparticles materials may be particles with different surface morphologies. Porous nanoparticles may have unique properties, which may make them potentially useful in many applications including, for example, nanotechnology, electronics, optics, other fields of materials science, and potentially in architectural fields. Porous nanoparticles alone may not be reactive. These porous materials can also cover a wide range of pore sizes to accommodate fine tuning the structure of the coating to have the desired optical and/or durability properties.

In certain example embodiments, porous nanoparticles may be mixed with metal oxides and/or alkoxides in order to form a sol gel coating solution that may be deposited on a substrate through sol gel-type methods (e.g., casting, spin coating, dipping, curtain and roller, spray, electro-deposition, flow coating, and/or capillary coating, etc.). An example of a typical sol gel process is disclosed in U.S. Patent No. 7,767,253.

In certain example embodiments, a coating solution may be made by mixing a silane-based compound, porous nanoparticles, and an organic solvent. In certain example embodiments, the organic solvent may be of or include a low molecular weight alcohol such as n-propanol, isopropanol, ethanol, methanol, butanol, etc. However, in other embodiments, any organic solvent, including higher-molecular weight alcohols, may be used.

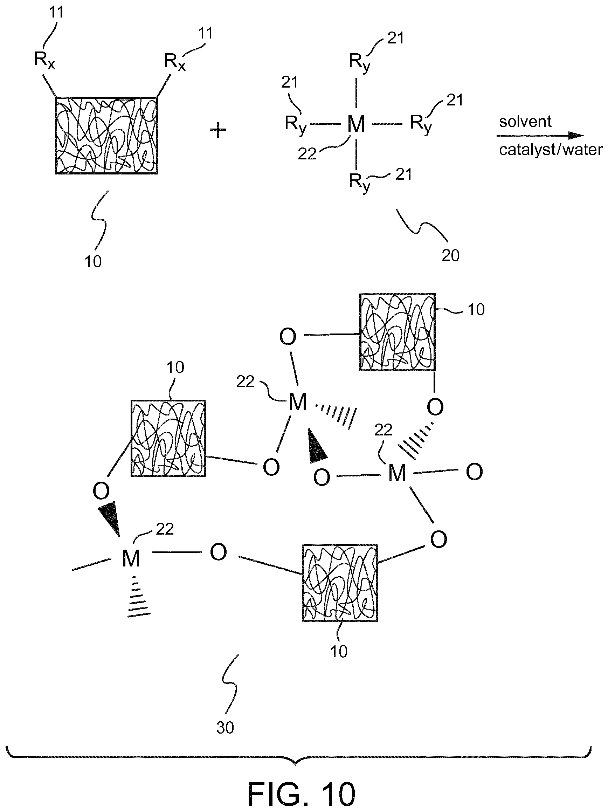

An example process for making an AR coating with porous nanoparticles is illustrated in Fig. 10. More particularly, Fig. 10 illustrates an example method of making a metal (e.g., Si, Ti, Al, etc.) oxide and porous nanoparticle-based matrix. Porous nanoparticle 10 has functional groups 11 comprising Rx. In certain embodiments, the Rx groups may be of or include a similar compound. In other example embodiments, some Rx groups may be different from each other. In an exemplary example embodiment, functional group(s) 11 may be of or include hydroxyl groups (e.g., OH). However, functional groups 11 may alternatively or additionally comprise any material that will react with metal oxide 20.

Metal oxide/alkoxide compound 20 may comprise metal M 22, and groups 21 comprising Ry. In certain example embodiments, groups Ry may be of or include a similar compound. In other example embodiments, some groups Ry may be different from each other. An example of an Ry group is OR, or oxygen atoms bonded to carbon-based compounds. However, groups 21 may comprise any material that will react with, or enable compound 20 to react with, functional groups 11 of porous nanoparticle(s) 10.

In certain example embodiments, metal oxide compound 20 may be hydrolyzed. In certain examples, the hydrolysis reaction may cause some groups 21 comprising Ry to become hydroxyl groups. In other examples, other reactions may cause at least portions of the Ry groups (e.g., the carbon-based compounds R may be split from an oxygen that is bonded to metal M) to cleave from the metal M atoms.

In certain examples, the hydrolyzed metal oxide-based compound 20 may be mixed with molecules 10 (e.g., porous nanoparticles 12 comprising functional groups 11), and solvent, and optionally catalysts, water, and/or further solvents, to make network 30. In certain example embodiments, network 30 (before and/or after any drying steps) may comprise porous nanoparticles 10 and metal M 22 based network, wherein the porous nanoparticles and the metal atoms are bonded via oxygen atoms (e.g., from the Rx and/or Ry groups).

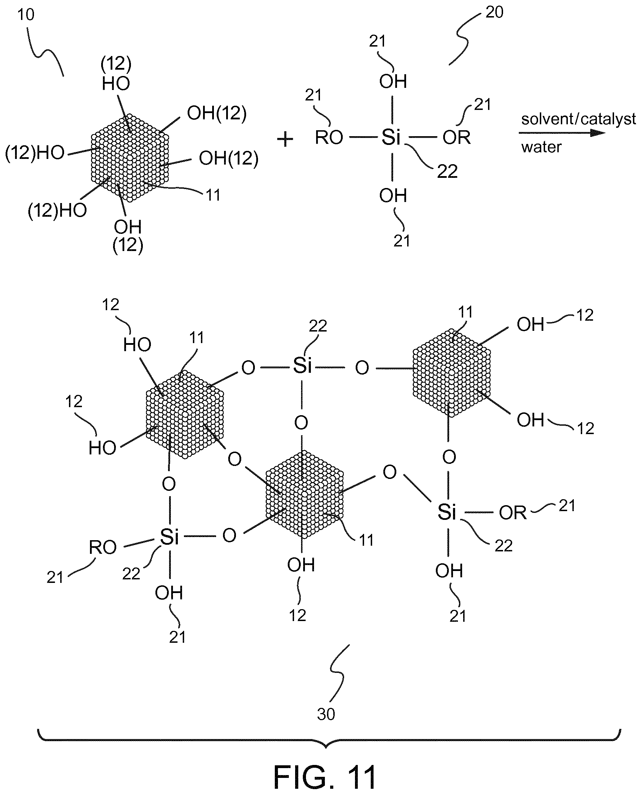

A further example method of making a silica and porous nanoparticle (e.g., mesoporous silica) based matrix is shown in Fig. 11. In Fig. 11, metal oxide 20 comprises a hydrolyzied silane-based compound (e.g., including silica as element 22 and OH and/or OR groups as functional groups 21), and porous nanoparticles 10 comprise mesoporous silica 11 with functional groups 12 comprising at least one (or more) hydroxyl group(s) (e.g., OH). Silane-based compound 20 is mixed with porous nanoparticles 10, and (e.g., through a condensation reaction) a silica and mesoporous nanoparticle based matrix is produced. However, in some embodiments, the porous nanoparticles may have functional groups other than OH groups attached thereto. Porous nanoparticles alone may not be reactive. However, the hydroxyl groups bonded to the porous nanoparticles structure(s) may react with a silane-based compound. The silane-based compound can be any compound comprising silicon with e.g., four reaction sites. The silane-based compound may comprise Si bonded to OH groups, OR groups (e.g., where R is a carbon-based compound such as a hydrocarbon), or a mix of OH and OR groups. In certain example embodiments, the silane-based material may comprise silicon atoms bonded to four "OR" groups, and upon hydrolysis, at least some of the R groups will be replaced by H atoms so as to facilitate the reaction between the silicon-based compound and the functional group of the porous nanoparticles.

In an exemplary embodiment, a coating composition may comprise TEOS, mesoporous silica nanoparticles with at least one (or more) hydroxyl groups, and an organic solvent such as ethanol, water and catalyst (acid, base, and/or F-). The coating solution may be deposited on a glass substrate via traditional sol gel coating methods, for example, dipping, casting, spray, spinning, curtain and roller, etc. Hydrolysis of metal alkoxides could be initiated by catalyst (acid or base) and water. Condensation of hydrolyzed metal alkoxides with functional porous nanoparticles and self-condensation of hydrolyzed metal alkoxides may occur prior to the formation of a sol, or in the sol. In this example, a reactive silane may be generated by the hydrolysis of TEOS. Then, at least some of the OH and/or OR sites of the silane may react with the hydroxyl functional groups of the porous nanoparticles in a condensation reaction. A network comprising silica bonded to the porous nanoparticles (here, mesoporous silica) via oxygen results in certain embodiments. Specifically, one or more mesoporous silica molecules with one or more hydroxyl groups combine with hydrolyzed TEOS 20 in a condensation reaction to produce a network 30 of mesoporous silica and TEOS.

Although TEOS is used as an example of a silica-based compound that may be used to form a silica-based network, any organic compound with silica, particularly with silicon and/or silane with four reaction sites, may be used in certain example embodiments. Furthermore, porous layers based on other metal oxides/alkoxides may be made this way as well.

In certain example embodiments, the process of forming a solid silica and porous nanoparticle based network can be implemented by evaporation-induced self-assembly (EISA), with suitable solvents (e.g., low molecular weight organic solvents). By-products or unused reactants, such as water, solvent, and/or hydrocarbons (e.g., from the R group of the silane and/or the solvent), that do not evaporate on their own as the coating is formed/immediately after, may be evaporated during an optional drying step. In certain example embodiments, after the coating is formed, the coating may be dried. In certain example embodiments, this drying may be performed in an oven and/or in any appropriate environment. The drying may be performed at a temperature of from about room temperature to 100°C, more preferably from about 50 to 80°C, and most preferably at a temperature of about 70°C. The drying may be performed for anywhere from a few seconds to a few minutes, more preferably from about 30 seconds to 5 minutes, and most preferably from about 1 to 2 minutes (at a temperature around 0°C).

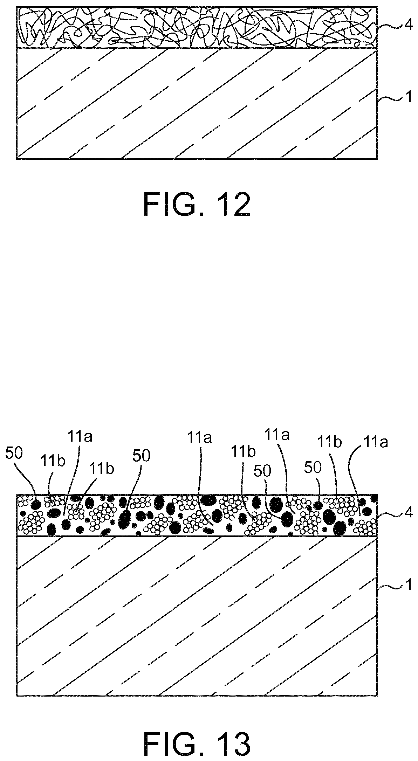

Fig. 12 illustrates a cross-sectional view of an example coated article comprising a silica-based layer 4 after it has dried and/or been heat-treated. In certain example embodiments, the porous nanoparticles are essentially trapped in a solid silica-based matrix after drying and/or heat treatment. Depending on the type of porous nanoparticles used, the size and shape of the pores, as well as the surface morphology of nanoparticles in the matrix, may be substantially closed and/or spherical, and/or a mix of the two (e.g., if more than one type of porous nanoparticle(s) are used). At this stage, after drying, but prior to any heat treating/thermal tempering, the amount of solids in the coating in certain example embodiments may be from about 0.2 to 2%, more preferably from about 0.5 to 1%, and most preferably from about 0.6 to 0.7% (by weight).

In certain example embodiments, the preferable amount of solids in the coating may vary based upon the coating process used. For example, if the coating is formed by curtain coating, the solid percentage may be from about 0.1-3%, more preferably from about 0.3-1.5%, and still more preferably from about 0.6 to 0.8% before and/or after drying and/or heat treating (e.g., after drying, but prior to heat treating). If the coating is performed by spray process, the solid percentage in the sol may be from about 0.1 to 25%, more preferably from about 0.1 to 20%, and most preferably from about 0.2 to 10%, in certain example embodiments, depending upon the desirable performance of the AR glass. If the coating is formed by spin coating, the amount of solids may be from about 0.5-10%, more preferably from about 1-8%, and still more preferably from about 2 to 4%, before and/or after drying and/or heat treating (e.g., after drying, but prior to heat treating), in certain example embodiments. The amount of solids may be from about 0.1-3%, more preferably from about 0.2-2.0%, and still more preferably from about 0.5 to 0.9% if the coating is formed via a draw down bar process, before and/or after drying and/or heat treating (e.g., after drying, but prior to heat treating), in some examples. In certain example embodiments, if the coating is formed by roller methods, the amount of solids may be from about 1-20%, more preferably from about 3-15%, and still more preferably from about 6 to 10% before and/or after drying and/or heat treating (e.g., after drying, but prior to heat treating). The aforesaid percentages are all given with respect to weight.

The solids in the coating may comprise silica and the porous nanoparticles. In certain example embodiments, the porous nanoparticles may comprise from about 25 to 75%, more preferably from about 35 to 65%, and most preferably about 50% of the total solid content (by weight) of the coating/layer after drying prior to any heat treatment such as thermal tempering. Similarly, the silica may comprise from about 25 to 75%, more preferably from about 35 to 65%, and most preferably about 50% of the total solid content (by weight) of the coating/layer after drying prior to any heat treatment such as thermal tempering.

Fig. 13 is a schematic cross-sectional view of an example AR coating layer 4 comprising metal oxide particles and porous nanoparticles in a matrix according to certain example embodiments. In Fig. 13, metal/metal oxide particles (e.g., Si, $SiO_2$, Ti, $TiO_2$, Al, $AlO_2$, etc.) are represented with reference numeral 50. The pores in the porous nanoparticles are identified with reference numeral 11(b). The pores created by the spacing between the metal oxide particles and the porous nanoparticles are indicated with reference numeral 11(a). Thus, Fig. 13 illustrates (e.g., in an exaggerated fashion) how the porosity of antireflective coating layer 4 may in certain example embodiments be a result of (1) the geometric package of porous nanoparticles and metal oxide particles in a metal oxide based matrix (e.g., spaces 11(a) between multiple particles 50 and/or spaces 11(a) between particles 50 and porous nanoparticles), and/or (2) the intrinsic pore size of a porous nanoparticle (e.g., pores 11(b)). In certain instances, an anti-reflection coating 7 may comprise or consist essentially of AR coating layer 4. In other examples, an anti-reflection coating 7 may include more than one AR coating layer similar to layer 4.

In certain example embodiments, the glass substrate 1 supporting layer 4 comprising a silica and porous nanoparticle based matrix may be thermally and/or chemically tempered. In other embodiments, heating may be performed at any temperature and for any duration sufficient to cause the layer to reach the desired strength.

The thickness of the coating layer and its refractive index may be modified by the solid amount and composition of the sols. The pore size and/or porosity of the AR coating may be changed by (1) the geometric design of the pore shape and/or size, and/or the surface morphology of the porous nanoparticles used (e.g., whether one or more materials are used for the porous nanoparticles, and the types and/or amount of surface morphologies used), and/or (2) the overall amount of the porous nanoparticle and metal alkoxides used.

In certain example embodiments, nanoporous and/or mesoporous nanoparticles may be made from silicate materials. In certain embodiments these materials may have a refractive index close to that of a glass substrate. In other example embodiments, porous nanoparticles may also be prepared from metal oxides and/or transition metal oxides, such as oxides of or including any of Si, Ti, Al, Fe, V, Zn, V, Zr, Sn, phosphate, etc.

For example, the porous nanoparticles may comprise MCM-41, MCM-48, and/or MCM-50, with ordered hexagonal, cubic, and lamellar structures, respectively. In certain embodiments, the pore size may be from about 0.5 to 20 nm, more preferably from about 1 to 10 nm, and most preferably from about 1.5 to 3 nm. However, in some cases, the pore size could be expanded with the help of a swelling agent. For example, with a swelling agent, the pore size may be expanded to up to 20 nm, in some instances.

Another exemplary embodiment includes nanoparticles comprising SBA-15 and SBA-16, with hexagonal and cubic structures, respectively. The pore size of SBA-15 and/or SBA-16 is from about 2 to 30 nm, more preferably from about 3 to 20 nm, and most preferably from about 4 to 14 nm, without a swelling agent in certain example embodiments.

In further example embodiments, the well of the pores may comprise amorphous silica that may contain various heteroelements, such as Al, Ti, Zr, Cu, Fe, Zn, Zr, P, and the like.

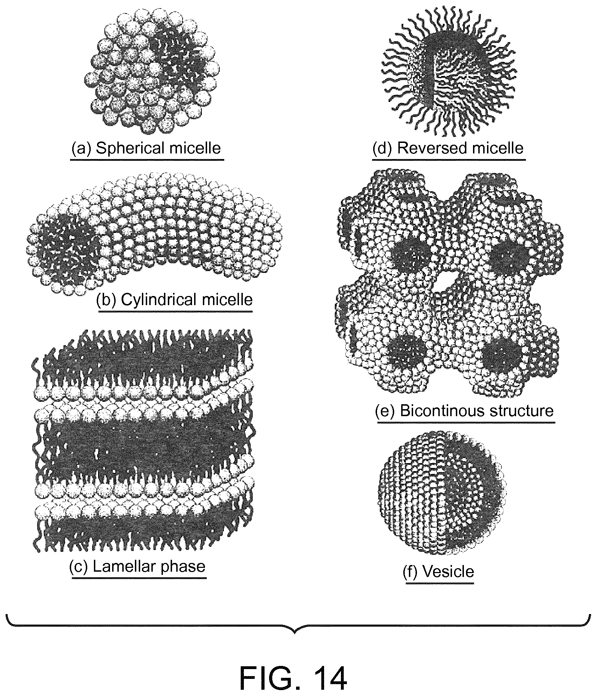

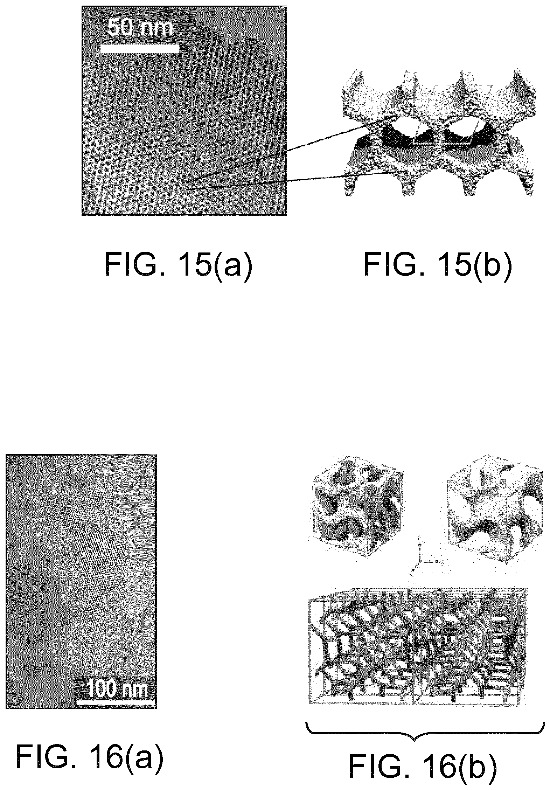

In certain example embodiments, the nanoporous and/or mesoporous nanoparticles may comprise surface morphologies that are hexagonal, cubic, lamellar, and/or tubular. In certain example embodiments, the surface morphologies may be related to the shape(s) of micelles used in a surfactant-based solution. Example micelle shapes are illustrated in Fig. 14, and example surface morphologies are illustrated in Figs. 15(a)-17(b). The various surface morphologies of the porous nanoparticles may be generated in different ways, and the formation of the various surface morphologies based on various micelle shapes is described in detail below.

An example technique for generating varying surface morphologies for porous nanoparticles may be related to the shape of micelles used in a precursor solution. In certain example embodiments, the morphology of nano- and/or meso-porous materials may be generated by different shapes of micelles. A micelle generally refers to an aggregate of surfactant molecules dispersed in a liquid colloid. A typical micelle in aqueous solution forms an aggregate with the hydrophilic "head" regions in contact with surrounding solvent, sequestering the hydrophobic single tail regions in the micelle center.

For example, when a surfactant is dissolved in solvent, as the concentration of surfactant moves toward the critical micelle concentration (CMC), the micelles may be built up. In certain example embodiments, micelles may only form when the concentration of surfactant is greater than the CMC, and the temperature of the system is greater than the critical micelle temperature, or Krafft temperature. The formation of micelles can be understood using thermodynamics: Micelles can form spontaneously because of a balance between entropy and enthalpy. In water, the hydrophobic effect is the driving force for micelle formation, despite the fact that assembling surfactant molecules together reduces their entropy. At very low concentrations of the lipid, only monomers are present in true solution. As the concentration of the lipid is increased, a point is reached at which the unfavorable entropy considerations, derived from the hydrophobic end of the molecule, become dominant. At this point, the lipid hydrocarbon chains of a portion of the lipids must be sequestered away from the water. Therefore, the lipid starts to form micelles. Broadly speaking, above the CMC, the entropic penalty of assembling the surfactant molecules is less than the entropic penalty of caging the surfactant monomers with water molecules. In certain examples, the enthalpy may also be considered, e.g., including the electrostatic interactions that occur between the charged parts of surfactants.

In certain example embodiments, the behavior of the micelles, and accordingly the morphology of the nanoparticles, may be dependent upon the characteristics of the surfactant and/or characteristics of the solution. Example characteristics of the surfactant that may have an effect on the morphology of the nanoparticles include whether the surfactant is ionic or non-ionic; whether it comprises small molecular compounds, polymers, etc.; whether it is linear or a network; and the like. Furthermore, in certain cases, the micelles may be spherical, cylindrical, or lamellar shaped. Figs. 14(a)-14(f) illustrate different example shapes that micelles may have.

Fig. 14(a) illustrates a substantially spherical micelle, Fig. 14(b) illustrates a substantially cylindrical micelle, Fig. 14(c) illustrates a micelle in the lamellar phase, Fig. 14 (d) illustrates reversed micelle, Fig. 14 (e) illustrates a bicontinuous structure, and Fig. 14 (f) illustrates a vesicle. These various shapes of micelles illustrate different example morphologies that micelles developed by surfactants may possess.

In certain example embodiments, during the process of making a layer comprising porous materials and metal alkoxides, tetraethyl orthosilicate (TEOS) may be added to the solution. In some instances, a network of TEOS may be generated around the micelles after the TEOS has been hydrolyzed and/or condensed. In some cases, in order to generate the desired pore structure, after the micelles have been formed in varying shapes, calcination may be performed. During the calcination step, the micelles may be removed and the materials may comprise pores having the exact shape of the space the micelle(s) previously occupied. In certain example embodiments, this may cause nanoporous and/or mesoporous nanoparticles to be formed.

In certain example embodiments, the surface morphologies may be related to the shape(s) of micelles used in a surfactant-based solution. In certain example embodiments, the formation of the micelles may depend upon the type of surfactant used and properties of the surfactant, as well as the properties of the solution, such as the pH, temperature, solvent, aging time, swelling agent, and the like. Thus, the foregoing factors may be used to determine the ultimate surface morphology of the porous nanoparticles, in certain example embodiments.

In certain example embodiments, the nanoporous and/or mesoporous nanoparticles may comprise surface morphologies that are hexagonal, cubic, lamellar, and/or tubular.

Fig. 15(a) is a TEM image of an example honeycomb structure (e.g., MCM-41), and Fig. 15(b) is a schematic representation of a hexagonal-shaped one-dimensional pore.

Figs. 16(a)-16(b) illustrate an example substantially cubic structured-morphology for porous nanoparticles. That is, Fig. 16(a) is a TEM image of an example substantially cubic structure (e.g., MCM-48), and Fig. 16(b) illustrates a schematic representation of a substantially cubic-shaped pore.

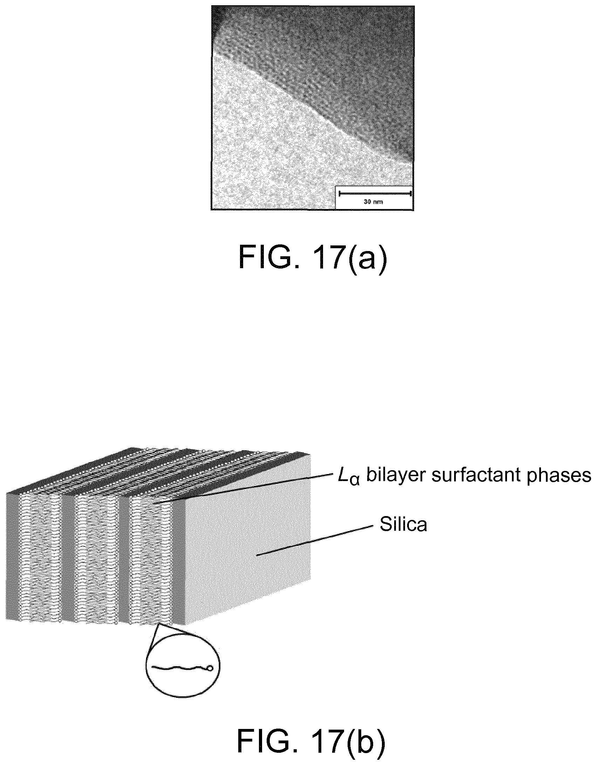

Figs. 17(a)-17(b) illustrate an example lamellar structured-morphology for porous nanoparticles. That is, Fig. 17(a) is a TEM image of the lamellar structure of mesoporous materials. Fig. 17(b) is a schematic representation of the

17

lamellar-shaped pore produced by certain surfactant approaches.

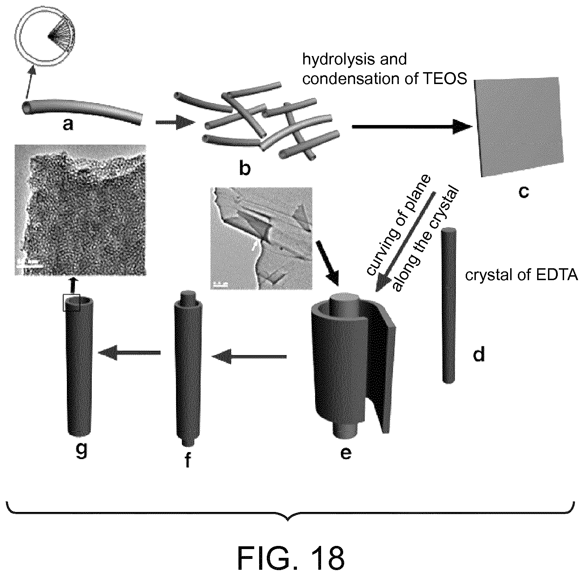

Fig. 18 illustrates an example mechanism for synthesizing a substantially tubular-structured porous nanoparticle. Hollow silica tubes with mesoporous walls may be developed using ethylenediaminetetraactic acid disodium salt (Na2EDTA) as a controller in certain example embodiments. Na2EDTA can function as the catalyst for the hydrolysis and/or condensation of a silane, such as TEOS, in some cases. Furthermore, Na2EDTA may also be used in co-assembling micelles, for example, with cetyltrimethylammonium bromide (CTAB), to generate the desired mesoporous structure, in some cases. Crystallized Na2EDTA may also be used as the template for inducing the formation of mesoporous materials comprising a tubular morphology, in certain examples.

In Fig. 18, stages (a) and (b) show the worm-like coassembly of micelle composites by Na2EDTA and CTAB by electrostatic interaction; stage (c) shows a patch developed from the composites joining together (e.g., through hydrolysis and/or condensation of TEOS or another solvent); stage (d) represents a needle-like crystal of EDTA separated out from an ethanol-water system; stage (e) shows the plane curving along the EDTA crystal; stage (f) illustrates a tube containing a needle-like EDTA crystal; and stage (g) illustrates a tube comprising a wall of mesoporous silica after removal of the EDTA crystal.

In certain example embodiments, a porous silica antireflective layer may be formed by the methods described herein. This porous silica anti-reflective layer may advantageously have pores that are very small in at least diameter (e.g., on the scale of 1 to 2 nm) that have various shapes, enabling the coating to have an improved durability and optical performances, in certain example embodiments. Furthermore, the pores may be formed so as to be closed and/or tunnel-like, depending on the desired properties (e.g., by selectively choosing the surface morphology of the porous nanoparticles based on the properties desired).

In certain examples, the pores in the antireflection coating may be formed from gaps between nanoparticles in the layer (e.g., the geometric package). In these cases, the pore size and/or distribution of pore size may be controlled by the amount of nanoparticles in the sol, and/or the geometric shape of the nanoparticles. Furthermore, in some examples, the pore sizes in the AR coating may be impacted by the process speed, the solvents used, and/or the process temperatures. In certain example embodiments, the pores within the nanoparticles themselves (e.g., the pores formed from extraction of the micelles through calcination, etc.) remain relatively unchanged throughout the process of forming the AR coating. In certain example embodiments, the introduction of a nanoparticle comprising a nano- and/or meso-porous structure in an AR coating may enable the adjustment or pore structure in order to improve transmittance of the coated article.

In certain example embodiments, porous nanoparticles and carbon-inclusive structures such as fullerenes may be included in the sol gel. In certain example embodiments, the carbon-inclusive structures may be partially or fully burned off during heat treatment, leaving behind pores (e.g., empty spaces) that may assist in tuning the porosity of the final coating. Methods of utilizing carbon-inclusive structures to create a desired pore size are described in co-pending and commonly assigned U.S. Application Serial No. 13/360,898, filed on January 30, 2012published as US 2013/196139. In certain examples, the use of fullerene structures and porous nanoparticles may enable the porosity and/or pore size of the final AR coating may be tuned to an even finer degree.

In certain example embodiments, to achieve a desirable refractive index, the average porosity (potentially including all layers, e.g., when a multi-layer AR coating is provided) of the anti-reflective coating may be from about 15 to 50%, more preferably from about 20 to 45%, and most preferably from about 27.6 to 36%. The porosity may be thought of as a measure of the percent of empty space within the coating layer, by volume. In certain example embodiments, the pore size may be as small as 1 nm, or even less. The pore size may range from about 0.1 nm to 50 nm, more preferably from about 0.5 nm to 25 nm, even more preferably from about 1 nm to 20 nm, and most preferably from about 2.4 to 10.3 nm. Pore size, at least in terms of diameter or major distance, may be as small as the smallest porous nanoparticle will permit. Higher porosity usually leads to lower index but decreased durability. However, it has been advantageously found that by utilizing porous nanoparticles with small pores, a desired porosity (in terms of % of empty space in the coating) may be obtained with a reduced overall pore size, thereby increasing the durability of the coating.

The methods described herein relating to mesoporous nanoparticle-inclusive layers may be utilized to form at least one layer of an anti-reflection coating. In certain instances, the anti-reflection coating may comprise more than one layer, with the various layers having different porosities, such that the anti-reflection coating is graded with respect to porosity. In certain example embodiments, more than one layer in an anti-reflection coating that is graded with respect to refractive index and/or porosity may comprise mesoporous nanoparticles.

In further example embodiments, a method for forming an AR coating that is graded with respect to porosity may involve geometrically packing nanoparticles so as to form a layer or layers. In certain cases, the pore shape and/or size may be generated by gaps between packed nanoparticles. The pore shape, size and/or porosity may therefore be regulated by the composition, size and/or shape of the nanoparticles. Furthermore, binders and/or charged particles may be utilized in order to tune the bonding and structure of the nanoparticles in the layer. In some example embodiments, the nanoparticles themselves may be porous and/or mesoporous, which may additionally or alternatively contribute to the pore shape and/or size of the layer(s). In certain example embodiments, two or more layers may be used to create an AR coating that is graded with respect to porosity.

Furthermore, in certain examples, a polymer with a cationic or anionic group may be disposed on the surface of a glass substrate. A layer comprising charged silica and/or titanium nanoparticles may be formed over the polymer-based layer by electrostatic attraction. This process may be repeated as many times as necessary to achieve a desirable coating thickness. In certain examples, the coated article may be subjected to calcination to remove the polymer chain(s) and/or micelles present in the layer(s) in order to achieve the intended pore structure.

As explained above, in certain example embodiments, the pores in an anti-reflection coating may be made by removing materials in a deposited layer in order to create vacancies where the removed materials previously were located (e.g., the materials may be removed via calcination, ozonolysis, solvent extraction, combustion, etc.). In other example embodiments, the pores may be made from the gap(s) generated from the geometric packing of nanoparticles. In further example embodiments, the pores may result from the mesoporous structure of nanoparticles. In still further example embodiments, the porosity of a layer may result from a combination of the foregoing scenarios.

More specifically, in certain examples, pores may result from gaps between nanoparticles making up a layer. For example, the porosity of the coating may be graded by depositing a first layer on a glass substrate, where the first layer comprises pores of a first shape, and then depositing a second layer over the first layer, where the second layer comprises pores of a second shape, where the first and second shapes are different from each other. In certain examples, the first layer may comprise substantially spherical-shaped particles, and the second layer may comprise substantially elongated, oblong, and/or asymmetrically-shaped particles. The substantially sphere-shaped particles may be able to pack in more closely together, which may lead to the first layer having a comparatively higher density and/or lower porosity than the second layer. The second layer, comprising particles having an elongated, oblong, and/or asymmetrical shape, may have larger spaces between the particles, which may lead to larger pores and/or a greater porosity in certain example embodiments.

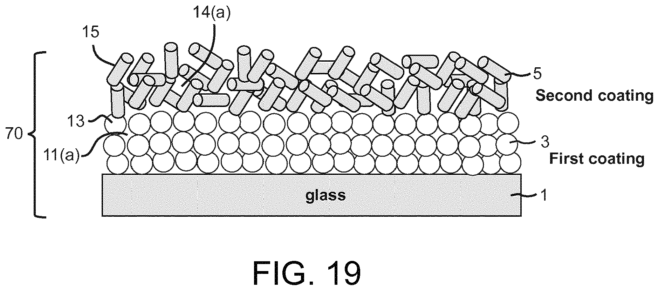

In certain exemplary embodiments, an AR coating may comprise at least two layers, wherein one layer comprises spherical nanoparticles, and the other layer comprises elongated nanoparticles. The differences in the size and shape of the respective types of nanoparticles may enable a gradient with respect to porosity to be created in the final AR coating in some examples. This is illustrated in Fig. 19.

In other words, as shown in Fig. 19, an example AR coating 70 may comprise at least a first layer 3 comprising spherical nanoparticles 13 disposed over a substrate 1 and a second layer 5 disposed over the first layer, the second layer 5 comprising elongated nanoparticles 15. The nature of the shape of the spherical nanoparticles may enable them to be packed in closer together and/or in a more orderly manner, such that the space between them is less as compared to the space between the elongated nanoparticles in the second layer. Thus, the pore shape and/or size will be larger in the second layer than in the first layer, due to the elongated nature of the nanoparticles in the second layer. The porosity of the second layer will be greater than that of the first layer, creating a coating that is graded with respect to porosity.

In certain instances, an "elongated" nanoparticle may be any nanoparticle that is oblong, asymmetrically shaped, and/or that has a diameter that is less than its length. In certain example embodiments, an example elongated nanoparticle may have a diameter of from about 1 to 100 nm, and a length of about 20 to 500 nm; more preferably a diameter of from about 2 to 20 nm, and a length of from about 30 to 150 nm; and most preferably an example elongated nanoparticle may have a diameter from about 4 to 15 nm and a length of from about 40 to 100 nm. However, as indicated above, in certain instances the diameter of the elongated nanoparticle will be less than the length of the elongated nanoparticle.

More specifically, in Fig. 19, the first layer comprises spherical particles 13 and pores 11(a). The second layer comprises elongated particles 15 and pores 14(a). As can be seen from Fig. 19, the elongated particles form a less compact and more porous layer than do the spherical particles. In other words, the second layer is more porous than the first layer. Thus, the coated article shown in Fig. 19 has a gradient with respect to porosity arising from the difference in the shape of the particles in the first and second layers, respectively. Although Fig. 19 illustrates the first layer comprising spherical particles and the second layer comprising elongated particles, any shaped particle may be used for each layer as long as the second layer has a greater porosity than the first layer.

In certain example embodiments, the first layer may be formed from a coating solution comprising silica-based nanoparticles. In certain cases, the first coating solution may comprise from about 1 to 3% silica (by solid wt. %), more preferably from about 1.5 to 2.5%, and most preferably around 2%. The second layer may be formed from a coating solution comprising silica-based nanoparticles, in certain example embodiments. The second coating solution may comprise from about 3 to 5% silica (by solid weight %), more preferably from about 3.5 to 4.5%, and most preferably about 4%. In certain instances, the amount of silica by weight in the coating solution may depend upon the deposition method used to form the layers.

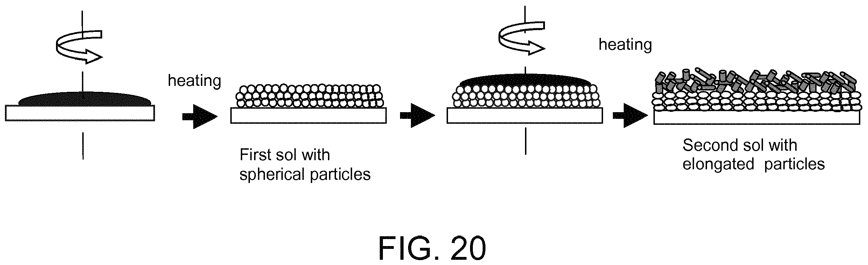

Fig. 20 illustrates an example method for making an AR coating comprising two layers, each having different pore shapes and porosity. In Fig. 20, a sol-gel composition is applied to a substrate via spin coating. Heat is applied to the layer, forming a layer comprising spherical particles. A second sol-gel composition is applied over the first layer via spin coating or any other suitable wet application technique. Heat is applied to the coated substrate, forming a second layer over the first layer comprising elongated particles. The pore size of the first layer may be from about 1 to 20 nm, more preferably from about 2 to 10 nm, and most preferably from about 3 to 7 nm, in certain example embodiments. The porosity of the first layer may be from about 5 to 50%, more preferably from about 10 to 40%, and most preferably from about 20 to 30%, in certain examples. The pore size of the second layer, in certain instances, may be from about 5 to 40 nm, more preferably from about 7 to 25 nm, and most preferably from about 10 to 15 nm. The porosity of the second layer may be from about 10 to 70%, more preferably from about 20 to 60%, and most preferably from about 30 to 50% in some examples. Thus, in certain example embodiments, the pore size and/or the porosity may be greater in the second layer than in the first layer.

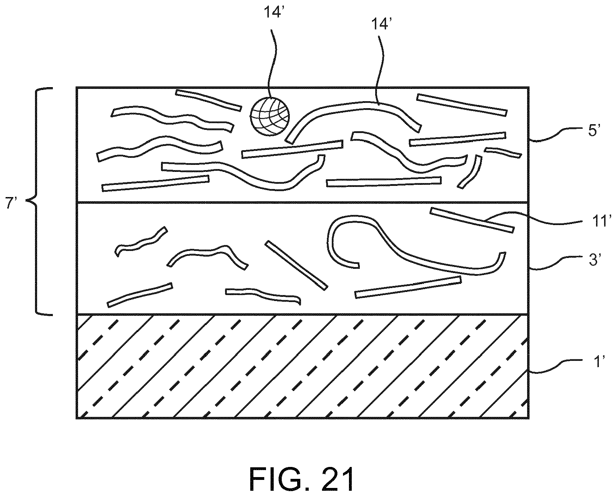

In other example embodiments, pores may be formed from vacancies left by removing compounds from the layer after deposition. Fig. 21 illustrates one such example embodiment of an AR coating comprising at least two layers that is graded with respect to porosity. In Fig. 21, the first layer 3' of the AR coating 7' comprises pores 11' that are long and thin. For example, the pores 11' may result from the spaces that are left after combusting carbon nanotubes that were present in the layer as it was deposited. However, pores 11' may have been created by the combustion of any carbon-based structure, so long as the porosity of layer 3' is less than that of layer 5'. The second layer 5' of the AR coating 7' may comprise pores 14' made by the spaces left from combusting carbon nanotubes, buckyballs, and/or other combustible carbon-based compounds that were present in the layer as-deposited, in certain example embodiments.

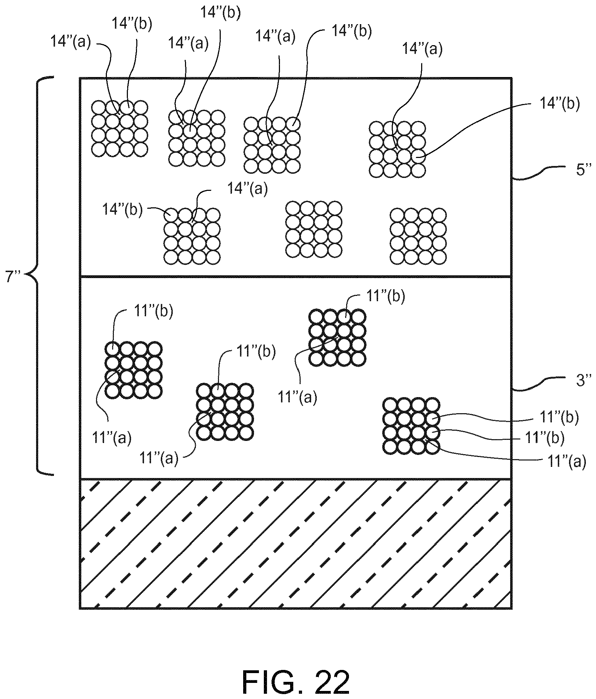

In certain example embodiments, a gradient in porosity may be achieved by using layers having pore structures determined by both pores within the nanoparticles themselves, as well as by pores created from the gaps between the individual nanoparticles and/or agglomerates of nanoparticles. Fig. 22 illustrates yet another example embodiment of an AR coating comprising at least two layers and that is graded with respect to porosity. In Fig. 22, the first layer 3" of the AR coating 7" comprises mesoporous nanoparticles having a pore size of from about 1 to 50 nm. The second layer of the AR coating (layer 5") also comprises mesoporous nanoparticles having a pore size of from about 1 to 50 nm. As can be seen from Fig. 22, in layer 3", the pores 11" include both pores 11"(a) and 11"(b). Pores 11"(a) are formed by the spaces between the individual/clusters of nanoparticles. Pores 11"(b), however, are present in the mesoporous nanoparticles themselves. In layer 5", the pores 14" include both pores 14"(a) and 14"(b). Pores 14"(a) are formed by the spaces between the individual/clusters of nanoparticles. Pores 14"(b), however, are present in the mesoporous nanoparticles themselves. The porosity of layer 3" thus results from both pores 11"(a) and (b). Similarly, the porosity of layer 5" results from both pores 14"(a) and (b). The (a) type pores in each layer may be any size, so long as the porosity of layer 5" is greater than that of layer 3". The (b) type pores may have an average size of from about 1 to 50 nm in certain example embodiments.

In certain example embodiments, anti-reflection coating 7 illustrated in Fig. 1 may include anti-reflection coatings 70, 7' and/or 7". (E.g., see Figs. 19, 21, and 22.) Anti-reflection coating 7 may also include layers 3 and 5, 3' and 5', and 3" and 5", as illustrated in Figs. 19, 21, and 22. In further example embodiments, layers 4, 4(a) and 4(b) may include layers 3, 3', 3", 5, 5', and/or 5".

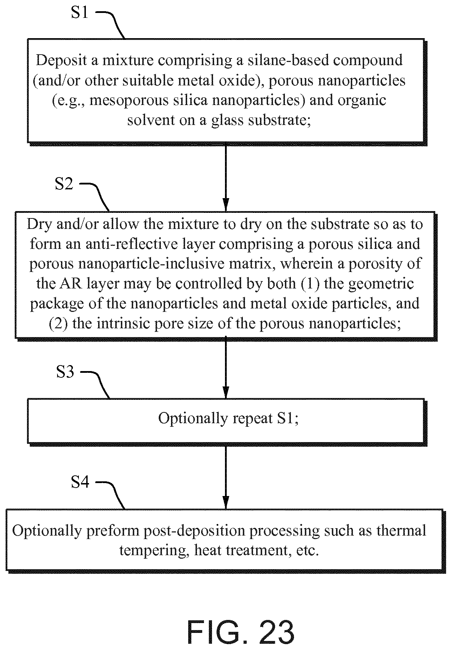

Fig. 23 illustrates an example method of making a porous metal oxide-based layer (e.g., a porous silica-based layer). In step Si, a coating solution including a mixture comprising a silane-based compound (and/or other suitable metal oxide), porous nanoparticles (e.g., mesoporous silica nanoparticles), and an organic solvent may be deposited on a glass substrate. In certain cases, the coating solution may be deposited by any appropriate sol gel deposition technique.

In step S2, the coating solution is dried and/or allowed to dry to form an anti-reflective layer comprising a porous silica and porous nanoparticle-inclusive matrix. A porosity of the AR layer may be controlled by both or either (1) the geometric package of the nanoparticles and metal oxide particles, and/or (2) the intrinsic pore size of the porous nanoparticles. In certain example embodiments, any remaining solvent, water, catalyst, unreacted reagent, and/or other by-products may be evaporated. A layer comprising a matrix of a metal oxide (e.g., silica) and porous nanoparticles remains.

In step S3, the process of step Si (and/or step S2) may optionally be repeated any suitable number of times. For example, a second layer may be formed over the first layer. The second layer may be formed in the same manner as the first layer (e.g., see step Si), in certain cases. However, the second layer may be formed by any method that produces a porous layer.

In step S4, the coated article may be subjected to optional post-deposition processes such as thermal tempering, heat treatment, and/or the like. The coating may be used as an anti-reflection coating in certain example embodiments. In certain cases, at least two layers may be present in the coating. The layers may be graded with respect to porosity, in order to create a coating with a gradient with respect to refractive index, in certain examples.

Certain example embodiments are not so limited, and may be directed simply to an AR coating comprising at least two layers, wherein the layers comprise differing porosities from each other such that the coating is graded with respect to porosity. In other example embodiments, the AR coating may comprise layers formed by differing methods. For instance, an AR coating may include at least one layer comprising mesoporous nanoparticles, and one layer comprising pores that were created by combusting carbon-based structures, or another layer that comprises elongated particles, or a layer made from a surfactant-inclusive sol gel, the layer containing pores formed by the removal of micelles via a method such as calcination, and so forth.

Certain example embodiments relate to methods for making AR coatings comprising gradient pore structures. In certain cases, these graded AR coatings comprise at least two layers. In certain example embodiments, a coated article comprising an AR coating comprising at least first and second layers, graded with respect to porosity in the manner described herein, may have a transmittance (Tqe%) gain of at least about 2%, more preferably at least about 5%, and even up to about 10%, and in some cases maybe even higher, as compared to a glass substrate with a single layer AR coating disposed thereon. The desired porosity in each layer may be achieved by any of the example embodiments disclosed herein.

In certain example embodiments, the particular Tqe% values may depend on the composition of the glass substrate. However, in certain example embodiments, when a solar float glass and/or low iron glass is used as the substrate, the Tqe% gain for a coated article comprising solar glass and a single layer AR coating is from about 2.9 to 3.5, more preferably from about 3.1 to 3.3, and most preferably from about 3.15 to 3.25, with an example Tqe% being around 3.2%. An example solar float glass is SFO solar float glass, available from Guardian Industries. When a solar float glass and/or low iron glass is used as the substrate, the Tqe% for an AR coating comprising at least two layers may be from about 3.0 to 3.6%, more preferably from about 3.2 to 3.4%, and most preferably from about 3.25 to 3.35%, with an example Tqe% gain for a low iron/solar float glass substrate being about 3.3%. In other words, in certain example embodiments (e.g., when a low iron/solar float glass substrate is used), the average Tqe% gain may be about 0.1% more (e.g., about 3% greater), or even higher than that, when the AR coating is graded with respect to porosity and comprises at least two layers, as opposed to when the AR coating is a single layer.

In certain example embodiments, when a Matte/Matte glass available from Guardian Industries is used as the substrate, the Tqe% gain for a coated article comprising matte glass and a single layer AR coating is from about 2.5 to 3.1, more preferably from about 2.7 to 3, and most preferably from about 2.79 to 2.89, with an example Tqe% being around 2.84%. When a matte glass is used as the substrate, the Tqe% for an AR coating comprising at least two layers may be from about 2.7 to 3.3%, more preferably from about 2.8 to 3.2%, and most preferably from about 2.9 to 3.15%, with an example Tqe% gain for a matte glass substrate being about 3.0%. In other words, in certain example embodiments (e.g., when a matte glass substrate is used), the average Tqe% gain may be about 0.2% more (e.g., almost 10% greater), or even higher than that, when the AR coating is graded with respect to porosity and comprises at least two layers, as opposed to when the AR coating is a single layer.

In certain example embodiments, the broadband antireflection coating may have a peak transmission of from about 600 to 800 nm, more preferably from about 650 to 800 nm, and most preferably from about 680 to 765 nm. In other example embodiments (e.g., depending on the composition of the glass substrate), the peak wavelength transmission may be from about 650 to 950 nm, more preferably from about 700 to 900 nm, and most preferably from about 715 to 860 nm.

In certain example embodiments, the AR coating that is graded with respect to porosity (e.g., with two layers having different porosities) may have a thickness of from about 30 to 200 nm, more preferably from about 65 to 200 nm, and most preferably from about 125 to 200 nm in certain cases. In some cases, the first layer may be from about 20 to 100 nm thick, more preferably from about 40 to 80 nm thick, and most preferably from about 50 to 70 nm thick. The second layer may be from about 100 to 200 nm thick, more preferably from about 140 to 180 nm thick, and most preferably from about 145 to 170 nm thick.

In further example embodiments, the average refractive index of the coating may be from about 1.2 to 1.4, more preferably from about 1.28 to 1.33, and most preferably around 1.30. The average refractive index of the second layer in the anti-reflection coating may be from about 1.3 to 1.4 in certain example embodiments.

In certain example embodiments, the two-layered AR coating may pass an NaOH solution (0.1N) and water boil test. Thus, in addition to having an increased Tqe%, a two-layered AR coating may also possess sufficient durability.

In certain example embodiments, the durability of the AR coating may be increased by using a binder that can increase the adhesion between the nanoparticles. For example, an organic silane-based compound may be used as a binder in a sol gel process (e.g., tetraethyl orthosilicate - TEOS).

In certain example embodiments, the methods described herein may be used to create an anti-reflection coating comprising two or more layers, wherein nanoparticles of different shapes and/or sizes are used in each layer in order to generate a gradient with respect to porosity in the coating (e.g., with the coating being less porous closer to the substrate, and more porous closer to the air). As described herein, a graded AR coating of this nature may be created by using substantially spherical nanoparticles (or nanoparticles of a more-compactable shape) closer to the substrate, such that there is less space between the nanoparticles and a lower porosity (e.g., greater density), and by using elongated nanoparticles (or nanoparticles of a less-compactable shape) farther from the substrate, such that the layer(s) or region of the coating closer to the air will (e.g., on average) have more space in between the nanoparticles, and a subsequently higher porosity.

In other example embodiments, the gradient in porosity may be created by using mesoporous nanoparticles with varying pore sizes. In that case, the size of the pores in the nanoparticles closer to the substrate may be smaller than the pores in the nanoparticles closer to the air, thus creating a gradient with respect to porosity based on the pore size in the mesoporous nanoparticles themselves. In further example embodiments, a porosity gradient may be created by using combustible carbon structures of varying sizes, wherein carbon structures that are larger are used closer to the surface of the glass substrate, and smaller carbon structures are used in the layer(s) or portions of a layer that are closer to the air. When the coating is subjected to a sufficient amount of heat, the carbon structures will combust. In certain cases, this will result in an AR coating that has smaller pores closer to the substrate, and larger pores closer to the air.

In further example embodiments, at least one of the layers in the AR coating may be formed by coating solution of or including one or more surfactants. In certain example embodiments, the surfactant(s) may be cationic, anionic, and/or zwitterionic (e.g., carrying both a positive and a negative charge) surfactant(s) and/or non-ionic polymer surfactant(s). The coating solution may be a sol, and may include water, an acid and/or base, organic solvents, and one or more types of surfactant. The coating solution may be deposited on the substrate (e.g., via spin coating, spray, casting, roller coating, curtain coating, and/or other wet application techniques). The glass with the coating solution thereon may be heated, baked, or left to dry so as to form a porous coating layer in certain example embodiments.

In certain instances, micelles present in the surfactant (and hence present in the coating layer) may be substantially removed during heating, leaving vacancies where they were previously located. These vacancies may cause the coating layer to have a particular porosity in certain examples. The micelles may be removed by calcination in certain example embodiments. In some instances, any heating and/or drying steps performed after the coating layer comprising surfactant(s) is deposited on the substrate may be performed in a stepwise fashion (e.g., first heating to a first temperature, and then at some point after heating to the first temperature - either immediately after or a certain amount of time after, heating to a second temperature that is higher than the first temperature. In certain instances, stepwise heating in this manner may help reduce damage to the pore structure.

In certain example embodiments, heating the substrate with the first layer thereon, after deposition of the first layer, but prior to deposition of any subsequent layers, may not negatively impact the Tqe% of the coated article supporting the AR coating. In fact, in certain example embodiments, this step may advantageously improve the overall Tqe% of the AR coating, such that an AR coating comprising at least two layers as described in certain example embodiments herein may be greater than the Tqe% of a single layer AR coating.

For example, after deposition, the first layer may be heated at a temperature from about 50 to 300 degrees C, more preferably from about 100 to 250 degrees C, and most preferably from about 150 to 250 degrees C, with an example being about 200 degrees C, in certain example embodiments. The first layer disposed on the substrate may be heated for at least about 30 seconds, more preferably at least about 60 seconds, and most preferably at least about 120 seconds, with 120 seconds of heating being an example heating time, in certain example embodiments.

Furthermore, in certain example embodiments, the Tqe% of the overall AR coating (e.g., after deposition of at least a second layer, and optional heat treating) may be improved by at least about 0.01%, more preferably by at least about 0.10%, and most preferably by at least about 0.15% when the substrate and first layer disposed thereon are heated in the manner described above, after deposition of the first layer, as compared to instances where the first layer was not heated after deposition.

In certain cases, when the first layer is cured prior to deposition of the second layer, the cured first layer may at least partially prevent the second coating layer composition from penetrating the first layer. This may advantageously reduce the occurrence of and/or prevent the gradient porosity being affected and/or damaged due to the composition used to form the second layer (e.g., tuned to have a different porosity from the first layer) penetrating the first layer.

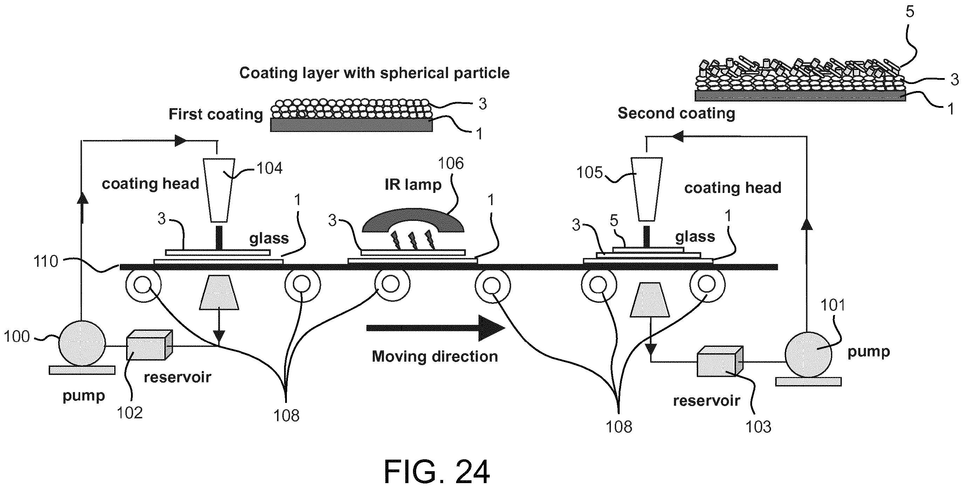

In further example embodiments, an AR coating comprising at least two layers according to examples described herein may be formed on a substrate by curtain coating methods. Fig. 24 illustrates an example method involving curtain coating. In some cases, curtain coating processes may be used to fabricate various coated articles, including substrates with AR coatings thereon. Fig. 24 shows glass substrate 1 on platform 110, moving via rollers 108. Pump 100, reservoir 102, and coating head 104 operate to form first layer 3 on substrate 1. The substrate with the composition used to form layer 3 moves forward and is cured by IR lamp (and/or other heat source) 106 to form first layer 3. Coating head 105, reservoir 103, and pump 101 operate to deposit the composition for the second layer (5) over the first layer. Although it is not shown in Fig. 24, the coated substrate would continue to move, and the substrate and layers thereon would be heated in the furnace at a temperature of at least about 200 degrees C, and more preferably at a temperature of at least about 650 degrees, in order to cure and/or heat treat/thermally temper the coated article.

In certain examples, the composition used to form the first layer may comprise a sol with spherical nanoparticles. However, in other example embodiments, other materials may be used. The first layer may be formed in and/or at a furnace, at a temperature of about 100 to 300 degrees C, more preferably from about 150 to 250 degrees C, with an example temperature being around 200 degrees C. The second layer may be formed in and/or at a furnace, at a temperature of about 100 to 300 degrees C, more preferably from about 150 to 250 degrees C, with an example temperature being around 200 degrees C. The second layer may be formed from a composition comprising elongated nanoparticles in some cases. However, in other example embodiments, other materials may be used, so long as the porosity of the second layer is ultimately (e.g., after any post-deposition processes) greater than that of the first layer. In certain example embodiments, after at least two layers have been formed on the substrate (though in other examples more than two layers may be formed), the AR coating and substrate may be heated/tempered at the furnace at a temperature of a least about 600 degrees C, more preferably at least about 625 degrees C, and most preferably at least about 650 degrees C, according to different example embodiments.

An example method for making an anti-reflection coating wherein the first layer is of or includes substantially spherical nanoparticles, and the second layer is of or includes elongated nanoparticles will now be described.

First and second coating solutions were prepared for coating solutions 1 and 2. The sol-gel compositions for both the first and second layers were prepared with N-propyl alcohol (NPA) (Ashland Chemical), tetraethyl orthosilicate (TEOS, Aldrich), nano silica particles (IPA-ST-UP, IPA-ST-L, Nissan Chem.), and acetic acid (AcOH, Fisher), without purification. Deionized water and nitrogen gas also were used. Solar float glass (SFO) and matte/matte glass (MM) was obtained from Guardian plants.

The compositions of the sols used for each layer are listed below in Tables 1 and 2.

Table 1 - Coating solution 1

| Chemical: | Mol. Wt. (g/mol) | Density (g/cm$^3$) | Wt.% | Vol. (mL) | SiO2% in TEOS or nanoparticle |
|---|---|---|---|---|---|
| NPA | 60.100 | 0.8 | 81.508 | 101.885 | |
| Deionized Water | 18.000 | 1 | 1.808 | 1.808 | |
| Acetic Acid (AcOH) | 60.050 | 1 | 4.890 | | |
| Tetraethyl orthosilicate (TEOS) | 208.330 | 0.94 | 1.818 | 1.934 | 0.524 |
| Silica nanoparticle (IPA-ST-L) | N/A | 1.1 | 9.976 | 9.069 | 1.496 |
| Total | | | 100.000 | 119.586 | 2.021 |
| IPA-ST-L: Spherical SiO$_2$ particle; diameter: 40-50 nm; 30% of SiO$_2$ particle; solvent: isopropanol | | | | | |

Table 2 - Coating solution 2

| Chemical: | Mol. Wt. (g/mol) | Density (g/cm$^3$) | Wt.% | Vol. (mL) | SiO2% in TEOS or nanoparticle |
|---|---|---|---|---|---|
| NPA | 60.100 | 0.8 | 69.714 | 101.885 | |
| Deionized Water | 18.000 | 1 | 1.808 | 1.808 | |
| Acetic Acid (AcOH) | 60.050 | 1 | 4.890 | | |
| Tetraethyl orthosilicate (TEOS) | 208.330 | 0.94 | 3.637 | 1.934 | 1.049 |
| Silica nanoparticle (IPA-ST-UP) | N/A | 1.1 | 19.951 | 18.137 | 2.993 |
| Total | | | 100.000 | 115.847 | 4.041 |
| IPA-ST-UP: Elongated SiO$_2$ particle; diameter: 9-15 nm; length: 40-100 nm; 15% of SiO$_2$ solvent: isopropanol | | | | | |

First and second coating solutions (e.g., layer compositions) were prepared as follows:

First, NPA was added with a pipette to a glass bottle (200 mL). Then, de-ionized water, TEOS, and nanoparticles were added with a pipette to the glass bottle. Finally, AcOH was added in solution, and the solution was stirred overnight at room temperature. 3% of sol was prepared by diluting the sol (4%) with NPA.

An anti-reflection coating comprising the first and second coating layers was formed on both a low iron solar float glass substrate (SFO glass - Example 1) and a matte finish glass substrate (MM glass - Example 2), respectively.

In Example 1, the SFO glass substrate was cleaned by tap water and detergent, and was rinsed with de-ionized water throughout. The glass was dried with N2 gas (although other gasses could have been used). The first and second coating layer compositions of Example 1 were then coated on the SFO substrate (Sn side) via spin coating. One mL of the first coating composition was transferred by pipette (Eppendorf 2100) to a major surface of the SFO glass while the SFO glass substrate was held on a supporter of a spin coater with vacuum. An initial acceleration of 500 rpm/sec and a spin time of 30 seconds were used for the preparation of Example 2. The speed of spin coating was 3500 rpm. The coated glass substrate was calcinated at the furnace at 650 degrees C for 3.5 minutes, and was cooled to room temperature prior to measurements being taken.

In Example 2, the MM glass substrate was cleaned by tap water and detergent, and was rinsed with de-ionized water throughout. The glass was dried by N2 gas as above. The first and second coating layer compositions of Example 1 were then coated on the MM substrate (smooth side) via spin coating. One mL of the first coating composition was transferred by pipette (Eppendorf 2100) to a surface of the MM glass while the MM glass substrate was held on a supporter of a spin coater with vacuum. An initial acceleration of 500 rpm/sec and a spin time of 30 seconds were used for the preparation of Example 2. The speed of spin coating was 3500 rpm. The coated glass substrate was calcinated at the furnace at 650 degrees C for 3.5 minutes, and was cooled to room temperature prior to measurements being taken.

In certain examples, a first coating layer prepared with the first coating solution described above may be of or include substantially spherical nanoparticles. A second coating layer prepared with the second coating solution described above may be of or include elongated nanoparticles, in certain example embodiments.

The average transmittance gain (Tqe%) of uncoated glass and the glass coated with a two layer AR coating including a first coating layer with spherical nanoparticles and a second layer with more elongated nanoparticles (e.g., nanoparticles that do not pack as closely together as the nanoparticles used in the first layer) was measured by UV-Vis (PE-1050) from 400 to 1200 nm. The total quantum efficiency, Tqe%, was calculated by the following equation:

$$T_{qe}\% = \frac{\sum\limits_{i=400}^{1200}(T_{qe}\%)_i}{\sum\limits_{i=400}^{1200}N_i}$$

The transmission gain, ΔTqe% of coated glass versus uncoated glass was measured by subtracting Tqe% of raw glass from Tqe% of the glass coated with the AR coating. Uncoated SFO and MM glass substrates were used as templates.

$$\Delta T_{qe}\% = (T_{qe}\%)_{coated} - (T_{qe}\%)_{uncoated}$$

The Tqe% of a coated substrate comprising an AR coating with two coating layers described above was measured. Tables 3 and 4 list data relating to the Tqe% gain in Examples 1 and 2.

Table 3

| Ex. No. | Glass Type | Peak (nm) | Tqe% pre | Tqe% post | ΔTqe% | First Coating | Second Coating |
|---|---|---|---|---|---|---|---|
| 1A - control | SFO/3.2mm | 740 | 90.857 | 94.060 | 3.203 | IPA-ST-UP 4% | NO |
| 1B | SFO/3.2mm | 500 | 90.893 | 93.282 | 2.389 | IPA-ST-L 2% | IPA-ST-UP 2% |
| 1C | SFO/3.2mm | 590 | 90.893 | 94.127 | 3.234 | IPA-ST-L 2% | IPA-ST-UP 3% |
| 1D | SFO/3.2mm | 690 | 90.893 | 94.209 | 3.316 | IPA-ST-L 2% | IPA-ST-UP 4% |
| 1E | SFO/3.2mm | 400 | 90.893 | 92.591 | 1.698 | IPA-ST-L 2% | NO |

Table 4

| Ex. No. | Glass Type | Peak (nm) | Tqe% pre | Tqe% post | ΔTqe% | First Coating | Second Coating |
|---|---|---|---|---|---|---|---|
| 2A - control | MM/3.2mm | 715 | 91.142 | 93.979 | 2.836 | IPA-ST-UP 4% | NO |
| 2B | MM/3.2mm | 560 | 91.142 | 93.512 | 2.370 | IPA-ST-L 2% | IPA-ST-UP 2% |
| 2C | MM/3.2mm | 730 | 91.142 | 94.183 | 3.041 | IPA-ST-L 2% | IPA-ST-UP 3% |
| 2D | MM/3.2mm | 835 | 91.142 | 94.009 | 2.867 | IPA-ST-L 2% | IPA-ST-UP 4% |

(continued)

| Ex. No. | Glass Type | Peak (nm) | Tqe% pre | Tqe% post | ΔTqe% | First Coating | Second Coating |
|---------|-----------|-----------|----------|-----------|-------|---------------|----------------|
| 2E | MM/3.2mm | 1200 | 91.142 | 93.040 | 1.898 | IPA-ST-L 2% | IPA-ST-UP 5% |

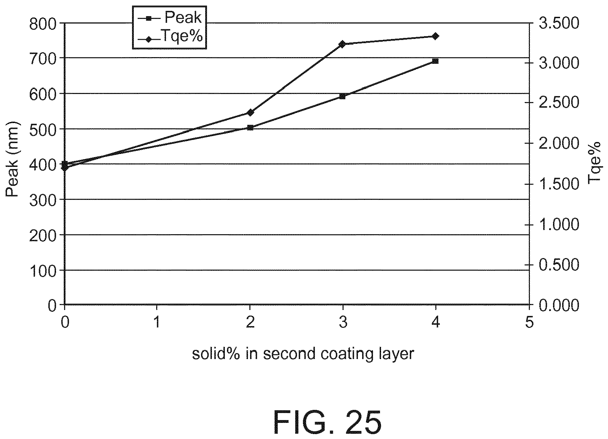

Fig. 25 is a graph showing the effect of the percent of solid used in the sol for the layer on the Tqe% of an SFO substrate coated with an AR coating as described in Example 2. The Tqe% of an SFO coated substrate increases when the solid percentage in the second coating composition sol was increased. When the solid % is close to 3%, the increase of the Tqe% slows. A generally linear increase of the peak number can be seen in Fig. 25. This may be due to the thickness of the coating increasing as the solid content increases.

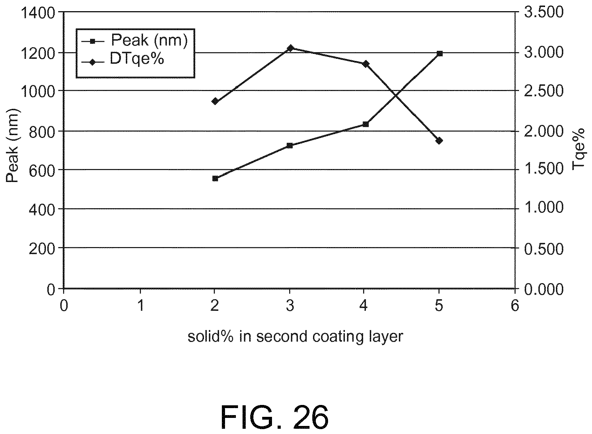

Fig. 26 is a graph showing the effect of the percent of solid used in the sol for the second coating layer described in Example 2. The trend in the change in Tqe% observed in MM AR-coated glass is different from the trend observed in the SFO glass. The maximum Tqe% around 3.023% can be prepared with solid percentage as 3% in sol used for the second coating layer.

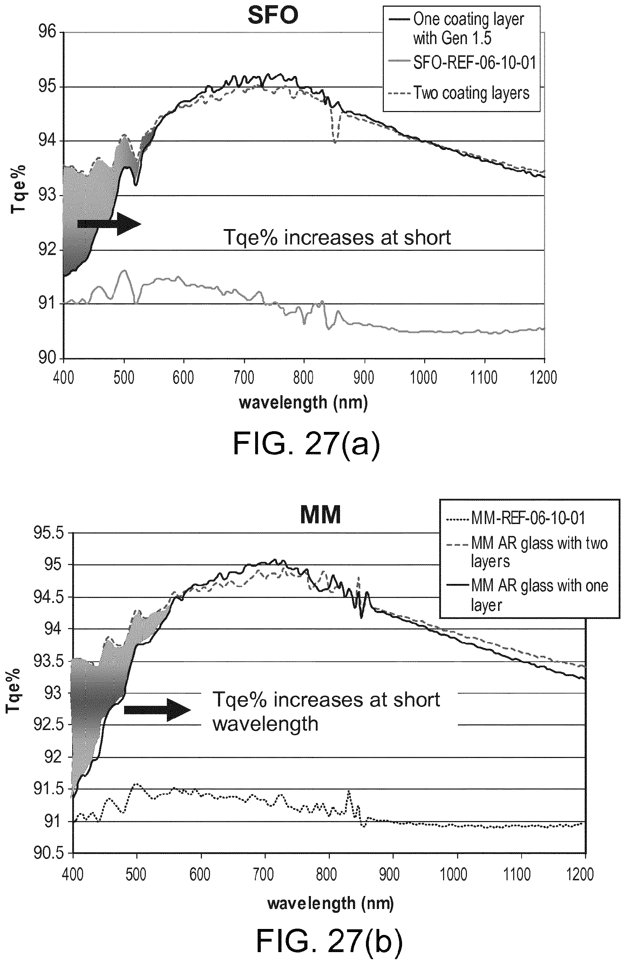

As can be appreciated from Figs. 25 and 26, the Tqe% gain is higher when the AR coating comprises two layers as opposed to one. Figs. 27(a)-27(b) illustrate the curve of the Tqe% gain v. wavelength. Figs. 27(a) (SFO glass) and 27(b) (MM glass) illustrate that the Tqe% gain in an AR coating comprising at least two layers can be attributed, at least partially, to the Tqe% gain at shorter wavelengths (e.g., from about 400 to 600 nm).

The durability of coated glass articles made according to Example 1 (SFO glass substrates) was evaluated. This evaluation was performed by measuring the change of the Tqe% before and after soaking the coated glass substrate in 0.1 N NaOH solution at room temperature for 1 hour, in boiling water for 10 minutes, and pulling the tape from the coated substrate. The results are summarized below in Table 5. An increase in Tqe% of the coated glass substrates was observed. This may indicate that there is an increase in the porosity in at least one of the layers of the AR coating, for example, from residual materials washing out with water during the testing.

Table 5

| Test Type: | Before Durability Test | | | | After Durability Test | | | | ΔΔTqe% (after-before) | Specific |
|------------|-----------|----------------|----------|-------|-----------|----------------|----------|-------|----------------------|----------|
| | Peak (nm) | Tqe% Raw glass | Tqe% AR | ΔTqe% | Peak (nm) | Tqe% Raw glass | Tqe% AR | ΔTqe% | | |
| NaOH (0.1N) | 740 | 90.907 | 94.334 | 3.428 | 690 | 90.904 | 94.219 | 3.314 | -0.113 | ±0.5 |
| Water Boil | 850 | 90.907 | 94.322 | 3.415 | 755 | 90.904 | 94.225 | 3.321 | -0.094 | ±0.5 |
| Tape pull | 615 | 90.907 | 94.057 | 3.150 | 590 | 90.893 | 94.127 | 3.234 | 0.084 | ±1.5 |

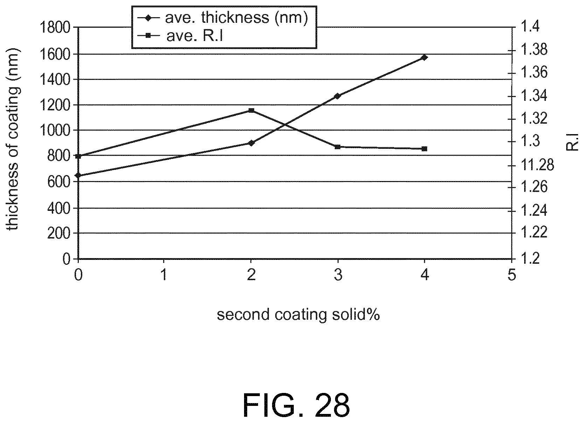

The thickness and refractive index of the AR coatings prepared according to Examples 1 and 2 were measured by an Ellipsometer. The solid content in the second layer was varied. The results are presented below in Table 6 and also illustrated in the graph of Fig. 28.

Table 6

| Ex. No. | Second Layer solid % | Avg. thickness (nm) | Avg. "n" | Tqe% | Peak (nm) | Δ thickness (second-first) |
|---------|---------------------|---------------------|----------|------|-----------|----------------------------|
| A | 2 | 90.16 | 1.32745 | 2.389 | 500 | 25.63 |
| B | 3 | 126.695 | 1.2964 | 3.234 | 590 | 62.165 |
| C | 4 | 156.975 | 1.29455 | 3.316 | 690 | 92.445 |
| D | O | 64.534 | 1.28865 | 1.698 | 400 | 0 |

The thickness of the first layer is about 64.534 nm, and an increase in the thickness of the AR coating is observed with increasing solid percent in the sol used for the second layer. As can be seen from Table 6, when the thickness of the second layer is closer to 156.975 nm, and the solid % in the coating solution for the second layer was around 4%, the refractive index of the AR coating is about 1.295, the highest Tqe% is achieved (3.316%). The greatest refractive index of an AR coating prepared in these examples is 1.32, when the thickness is approximately 90.16 nm as shown in Fig. 28.

The refractive index of a two layer AR coating can be theoretically expressed by a model developed by Maxwell-Garnett, where n is the refractive index of the AR coating, n1 is the refractive index of the second layer, n2 is the refractive index of the first layer, and f1 is a volume fraction of the second layer. That is:

$$\frac{n^2 - n_1^2}{n^2 + 2n_1^2} = (1 - f_1)\frac{\left(n_2^2 - n_1^2\right)}{\left(n_2^2 + 2n_1^2\right)}$$

The above equation can be rewritten as:

$$f(x) = \frac{n^2 - n_1^2}{n^2 + 2n_1^2} - (1 - f_1)\frac{\left(n_2^2 - n_1^2\right)}{\left(n_2^2 + 2n_1^2\right)}$$

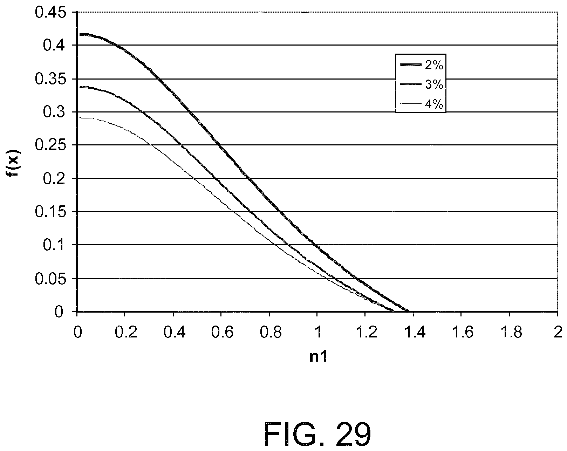

where f(x) is the difference between the left side and right side in the first equation. The refractive index of the first layer, n2, can be estimated by a numerical iterative approach with the above (second) equation. Fig. 29 is a graph illustrating the change of f(x) with the refractive index of the first coating layer (n2). The estimated refractive index of the second layer (ni) is around 1.3 to 1.4, and the value of n2 (the refractive index of the first layer) decreases as the solid percentage of sol increases.

In certain example embodiments, heating the substrate with the first layer thereon, after deposition of the first layer, but prior to deposition of any subsequent layers, may not negatively impact the Tqe% of the coated article supporting the AR coating. In fact, in certain example embodiments, this step may advantageously improve the overall Tqe% of the AR coating, such that an AR coating comprising at least two layers as described in certain example embodiments herein may be greater than the Tqe% of a single layer AR coating.

For example, the effect of heating on the Tqe% of a MM glass substrate supporting a two layer AR coating was evaluated by heating example coated article(s) in a furnace at a temperature of 200 degrees C. The results are displayed in Table 7.

Table 7

| Ex. No. | First Layer | Heating at 200 deg. C (sec) | Second Layer | Heating at 650 deg. C (min) | Peak (nm) | Tqe% Ref. | Tqe% AR | ΔTqe% |
|---|---|---|---|---|---|---|---|---|
| E | IPA-ST-L-2% | 0 | IPA-ST-UP, 3% | 3.500 | 850.0 | 90.754 | 93.672 | 2.918 |
| F | IPA-ST-L-2% | 30 | IPA-ST-UP, 3% | 3.500 | 850.0 | 90.754 | 93.672 | 2.918 |
| G | IPA-ST-L-2% | 60 | IPA-ST-UP, 3% | 3.500 | 845.0 | 90.754 | 93.682 | 2.928 |
| H | IPA-ST-L-2% | 120 | IPA-ST-UP, 3% | 3.500 | 850.0 | 90.754 | 93.823 | 3.069 |

As can be seen from above, when the first layer is cured prior to deposition/formation of the second layer, the Tqe% may advantageously be increased as compared to when the first coating layer has not been cured to prior to said deposition, in some example embodiments. As explained above, in certain cases, when the first layer is cured prior to deposition of the second layer, the cured first layer may at least partially prevent the second coating layer composition from penetrating the first layer. This may advantageously reduce the occurrence of and/or prevent the gradient porosity being affected and/or damaged due to the composition used to form the second layer (e.g., tuned to have a different porosity from the first layer) penetrating the first layer. Furthermore, in certain exemplary embodiments, when the first layer is cured, and then a second layer is formed to make the AR coating, the AR coating may also have a higher transmittance gain than a single layer AR coating.

The repeatability of certain example methods for making coating articles comprising AR coatings made by spin processes was also evaluated. In certain example embodiments, the variations in Tqe% for samples made on different days were low, evidenced by a low standard deviation. Table 8 illustrates the repeatability of making substrates comprising AR coatings with two layers, graded with respect to porosity.

Table 8

| ID | Glass | First Layer | Second Layer | Peak (nm) | Tqe% Ref. | Tqe% AR | ΔTqe % | Avg. ΔTqe% | STD |
|---|---|---|---|---|---|---|---|---|---|
| 2F | MM/3.2 mm | IPA-ST-L, 2% | IPA-ST-UP, 3% | 850 | 90.754 | 93.858 | 3.104 | 3.059 | 0.034 |
| 2G | MM/3.2 mm | IPA-ST-L, 2% | IPA-ST-UP, 3% | 850 | 90.754 | 93.779 | 3.025 | | |
| 2H | MM/3.2 mm | IPA-ST-L, 2% | IPA-ST-UP, 3% | 725 | 90.754 | 93.821 | 3.067 | | |
| 2I | MM/3.2 mm | IPA-ST-L, 2% | IPA-ST-UP, 3% | 730 | 91.142 | 94.183 | 3.041 | | |
| 1F | SFO/3.2 mm | IPA-ST-L, 2% | IPA-ST-UP, 3% | 690 | 90.904 | 94.219 | 3.314 | 3.317 | 0.003 |
| 1G | SFO/3.2 mm | IPA-ST-L, 2% | IPA-ST-UP, 3% | 755 | 90.904 | 94.225 | 3.321 | | |
| 1H | SFO/3.2 mm | IPA-ST-L, 2% | IPA-ST-UP, 3% | 690 | 90.893 | 94.209 | 3.316 | | |

As can be seen from Table 8, in certain example embodiments, certain methods disclosed herein for making AR coatings may exhibit good repeatability. In certain example embodiments, the improved/increased ΔTqe% resulting from certain example methods disclosed herein may have a standard deviation with respect to repeatability of no greater than about 0.05, more preferably no greater than about 0.04, and in certain example embodiments, no greater than about 0.004.

In certain example embodiments, an AR coating may comprise two layers, as explained herein. These two layers may advantageously be porous, in certain example embodiments. As described herein, the porosity in each layer in the AR coating may be formed by the same method as the other layers in the AR coating in some cases. In other examples, each layer (and therefore the porosity of each layer) may be formed by differing methods. In some instances, more than two layers may be provided in the AR coating, and some layers may be deposited by the same methods, and some layers may be deposited by different methods.

In certain example embodiments, the first layer may be a mesoporous thin film generated by a surfactant, and the second layer may comprise nanoparticles, where the porosity of the second layer arises from the gaps between the nanoparticles in the geometric package.

In certain example embodiments, a two-layered AR coating may include a first layer comprising a mesoporous thin film generated by at least one surfactant, and the second layer may comprise nanoparticles, wherein the porosity is due to the gaps in between the individual nanoparticles in the geometric package. In certain examples, the morphology of an AR coating layer developed by surfactant(s) may be more flexible than one based on nanoparticles, as the mesoporous structure of the layer may be easily tuned by the surfactants. However, the durability of a porous layer based on nanoparticles may be better than that of surfactants. Therefore, it may be advantageous to have an AR coating comprising a first porous layer that is tuned and/or formed more easily, by surfactant(s), and a second nanoparticle-based porous layer that has a greater durability than the first layer, in certain example embodiments.

More specifically, the first layer may be generated by using one or more surfactants. In certain examples, the surfactants may be of or include a cationic surfactant and/or a non-ionic polymer surfactant.

The second layer may comprise nanoparticles that are elongated in certain examples. In some cases, the nanoparticles may have a diameter of from about 1 to 30 nm, more preferably from about 2 to 20 nm, and most preferably from about 4 to 15 nm. The length of the elongated nanoparticles may be from about 20 to 200 nm, more preferably from about 30 to 150 nm, and most preferably from about 40 to 100 nm. In certain examples, in order to be considered "elongated", the length of the nanoparticle should be greater than the width. In certain instances, the elongated nano-

particles may comprise $SiO_2$ nanoparticles. In other instances, the nanoparticles may comprise $SiO_2$ nanoparticles that are not elongated.

In certain example embodiments, a method for making a two-layer AR coating by forming a first porous layer generated by at least one surfactant, and a second porous layer comprising elongated nanoparticles may produce a coated article comprising a patterned glass substrate with a Tqe gain of at least about 2.5%, more preferably at least about 2.7%, and most preferably at least about 3.0%. In other example embodiments, if this AR coating is formed on a low iron glass substrate, the Tqe% may be at least about 3.0%, more preferably at least about 3.2%, and most preferably at least about 3.4%.

In certain example embodiments, the first porous layer generated by at least one surfactant may have a refractive index of from about 1.2 to 1.5, more preferably from about 1.25 to 1.45, and most preferably from about 1.27 to 1.37, with an example refractive index being about 1.32. The second porous layer comprising elongated nanoparticles may have a refractive index of from about 1.3 to 1.6, more preferably from about 1.35 to 1.55, and most preferably from about 1.39 to 1.49, with an example refractive index being around 1.44.

An example method for making an anti-reflection coating wherein the first layer is a mesoporous thin film made by a sol comprising at least one surfactant, and the second layer is of or includes nanoparticles will now be described.

In Examples 3 and 4, an example AR coating graded with respect to porosity comprising two layers was formed. In Examples 3 and 4, the gradation of the porosity is attributable to differing porosities of each layer. The first and second layers are of or include porous thin films in these examples. The second layer has a porosity that is greater than that of the first layer in these examples.

The first layer was generated using two kinds of surfactants. The first was a cationic surfactant comprising cetyltrimethylammonium chloride, and the second was a non-ionic polymer surfactant comprising polyethylene-polypropylene-polyethene.

The sol gel for Examples 3 and 4 were prepared in the following manner:

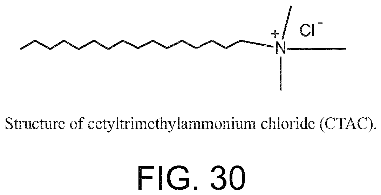

The Example 3 series used a sol including cetyltrimethylammonium chloride (CTAC, 25% in water, Aldrich), which is a cationic surfactant with a structure as shown in Fig. 30.

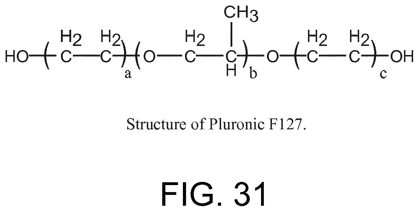

The Example 4 series used a sol including Pluronic F127 (Aldrich), which is a tri-block copolymer comprising polyethylene-polypropylene-polyethylene, with a molecular weight around 12,600 g/mol, and a structure as shown in Fig. 31.

In these examples, HCl (26%, Fisher) was diluted to 3.6% by mixing with deionized water. Tetraethyl orthosilicate (TEOS, Aldrich), n-propyl alcohol (NPA, Aldrich), acetic acid (AcOH) and nano silica particles (IPA-ST-UP, 15% in IPA, Nissan), were used without purification. CTAC was added to this sol to arrive at the Example 3 sol, and Pluronic F127 was added to this sol to arrive at the Example 4 sol.

Sols comprising CTAC and Pluronic F127, respectively, were prepared according to the formulations listed in Tables 9 and 10, respectively.

Table 9 - Example 3

| Compound: | Mol. wt. g/mol | Wt. g | Mol. | Mol. ratio |
|---|---|---|---|---|
| Water | 18 | 2 | 0.111 | 1.001 |
| HCl (3.6%) | 36 | 3.63 | 0.004 | 0.033 |
| NPA | 60.1 | 28.42 | 0.473 | 3.260 |
| TEOS | 208.33 | 1.6 | 0.008 | 0.069 |
| CTAC (25% in water) | 320 | 15 | 0.012 | 0.106 |

Table 10 - Example 4

| Compound: | Mol. wt. g/mol | Wt. g | Mol. | Mol. ratio |
|---|---|---|---|---|
| Water | 18 | 2 | 0.111 | 1.000 |
| HCl (3.6%) | 36 | 3.63 | 0.004 | 0.033 |
| NPA | 60.1 | 28.42 | 0.473 | 4.256 |
| TEOS | 208.33 | 1.1 | 0.005 | 0.048 |
| Pluronic F127 | 1100 | 0.5 | 0.0005 | 0.004 |

The Pluronic F127-based sol used in Example 4 was prepared as follows: 2 g of water was added to a 100 mL glass bottle with a magnetic stirring bar. 28.42 g of NPA, 1.1 g of TEOS, and 0.5 g of F127 were added to the bottle, subsequently. Finally, 3.63 g of HCl (3.6%) was added to the solution, and the solution was stirred immediately. The solution was stirred at room temperature for 24 hours before being used for spin coating.

The CTAC-based sol used in Example 3 was prepared in a similar manner. Both sols were transparent and no precipitates were observed after the solution was stored at room temperature for one month.

The second layer comprises elongated $SiO_2$ nanoparticles having a diameter of from about 4 to 15 nm, and a length of from about 40 to 100 nm.

The sol for the second layer comprises nanoparticles and is prepared according to the following formulation:

Table 11

| Compound: | Mol. wt. g/mol | Wt. g | Mol. ratio |
|---|---|---|---|
| NPA | 60.1 | 69.714 | 1.000 |
| De-ionized water | 18 | 1.808 | 0.070 |
| Acetic Acid (AcOH) | 60.05 | 4.890 | 0.056 |
| TEOS | 208.33 | 3.637 | 1.012 |
| Silica Nanoparticles (IPA-ST-UP) | N/A | 19.951 | - |
| Total | - | 100 | - |
| IPA-ST-UP: Elongated $SiO_2$ particle; diameter: 9-15 nm; length: 40-100 nm; 15% of $SiO_2$; solvent: isopropanol | | | |

The sol comprising nanoparticles and of the above composition used for the second layer was formed as follows: 67.714 g of NPA was added to a 200 mL glass bottle with a Teflon stirring bar. To this bottle, 1.808 g of water, 3.637 g of TEOS, and 19.951 g of silica nanoparticles were added. 4.89 g of AcOH were added, and the solution was stirred overnight. After three months of aging, the sol may be slightly cloudy, but no visible particles or precipitation was observed. The sol with silica nanoparticles (3%) was prepared by diluting Gen 1.5 sol (4.32%) made from LymTal Table 12 lists the composition of Gen 1.5 sol with a solid percentage of 4.32%:

Table 12

| Chemical | M.W. (g/mol) | d, g/cm$^3$ | wt, g | Wt.% |
|---|---|---|---|---|
| NPA | 60.1 | 0.8 | 81.508 | 81.508 |
| De-ionized water | 18 | 1 | 1.808 | 1.808 |
| Acetic acid (AcOH) | 60.05 | 1 | 4.89 | 4.89 |
| Tetraethyl orthosilicate (TEOS) | 208.33 | 0.94 | 1.818 | 1.818 |
| Nano silica particle (IPA-ST-UP) | N/A | 1.1 | 9.976 | 9.976 |
| Total | - | - | 100 | 100 |

These coatings were deposited on both low iron glass substrates (e.g., Solar Float Glass [SFO], 3.2 mm, from Guardian) and patterned glass substrates (e.g., Matte-Matte glass [MM] from Guardian).

The glass substrates (both SFO and MM glass, in 3"x3" squares) were washed with soap (Biomedicals, 7X-O-Matic rinsed with de-ionized water, and dried by $N_2$ gas. The glass was mounted on the sample stage of the spin coater with vacuum (Cee, M-100). The spin speed was adjusted by type of glass and type of sol(s). The ramp of the spin speed was 255 rps. One mL of sol was added on the surface of MM glass (on the smooth side) or SFO glass (on the Sn side) by pipette, and the spin time was 30 seconds. The coated glass was heated in the oven at 150 degrees C for 2 minutes, and then the glass was cooled to room temperature, and then heated in the oven at 350 degrees C for 5 min.

The glass substrate(s) comprising the first layer were then further coated with a sol comprising silica nanoparticles. One mL of sol (3%) was added to the surface of the MM glass (on the smooth side) or SFO glass (on the Sn side), which was set on the sample stage of a spin coater. After spin coating, the coated glass substrate was cured in the oven at 650 degrees C for 3.5 minutes. All measurements were carried out after the coated substrates cooled down to room temperature.

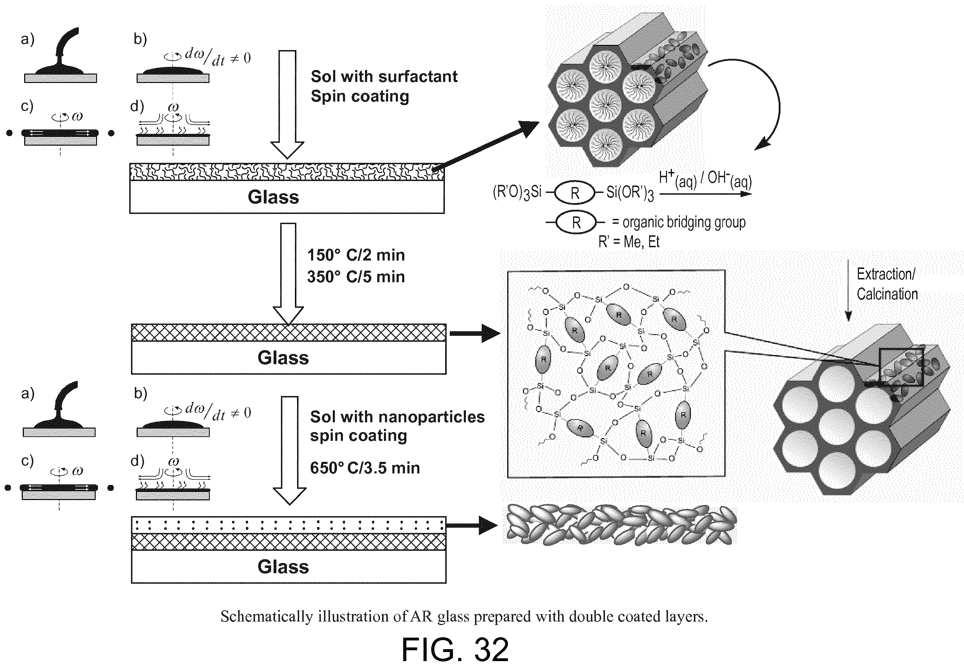

Fig. 32 illustrates an example process of making anti-reflection coatings comprising at least two layers. As can be seen from Fig. 32, a sol comprising surfactant(s) is coated on the surface of a glass substrate by spin coating. The substrate comprising the first layer is heated in a stepwise manner in order to reduce any damage to the pore structure(s). A lower temperature (e.g., 150 degrees C) may be used in the first heating process in order to keep the desired pore size and/or shape. The substrate and first layer may be cooled and subsequently reheated to a higher temperature (e.g., 350 degrees) in certain example embodiments. These heating steps may cause the first surfactant-based layer to become a thin film comprising a mesoporous structure. The sol comprising nanoparticles may be applied over the first layer in order to form a second layer. The coated article may be heat treated at about 650 degrees C for about 3.5 minutes in order to cure the coating and/or produce a mesoporous structure in the second layer comprising nanoparticles.

In certain example embodiments, a glass substrate with an AR coating comprising a first layer based on a surfactant(s), wherein a mesoporous structure is generated via heating, and a second layer comprising nanoparticles, may have a transmittance of at least about 91%, more preferably at least about 91.3%, and most preferably at least about 92%. In certain example embodiments, when a low iron solar float glass substrate is used, the transmittance of the glass substrate without any coating(s) is about 90.8%, more particularly about 90.856%, +/-about 0.3.

Table 13 below illustrates the possible Tqe% values of an AR coating made according to certain example embodiments.

Table 13

| Ex. No. | 1st Layer Sol | 2nd Layer 0 Gen 1.5 (%) | Tqe% of AR coating |
|---|---|---|---|
| Control 1: SFO-Sn side | N/A | N/A | 90.856 |
| Ex. 3A: Single Layer Coating | Cationic Surfactant-based Sol (Table 9 formula) | N/A | 91.335 |
| Ex. 4A: Single Layer Coating | Non-ionic Surfactant-based Sol (Table 10 formula) | N/A | 92.053 |
| Ex. 3B: Double Layer Coating | Cationic Surfactant-based Sol | 2.7 | 94.207 |
| Ex. 4B: Double Layer Coating | Non-ionic Surfactant-based Sol | 2.3 | 94.218 |
| Control 2: Single Layer | Gen 1.5 (nanoparticle-based) 3% (Table 11 formula) | N/A | 93.911 |

In certain example embodiments, if the surfactant used for the first layer is cationic, the transmittance (when the first layer is deposited on a low iron glass substrate) is at least about 91.0%, more preferably at least about 91.15%, and most preferably at least about 91.30%, with an example transmittance being about 91.335%. Thus, the transmittance gain when a first layer formed from a cationic surfactant is used on one side of the glass substrate, the Tqe gain may be at least about 0.15%, more preferably at least about 0.2%, even more preferably at least about 0.3%, and most preferably at least about 0.38%.

If a second layer comprising nanoparticles is deposited over the first layer (e.g., when the first layer is based on a cationic surfactant), the transmittance of the coated article may rise to at least about 94.0%, more preferably at least about 94.1%, and most preferably at least about 94.2%, with an example transmittance being 94.207% with two coating layers. Thus, when a second porous nanoparticle-based layer is formed over a first cationic surfactant-based layer, the Tqe% gain of the substrate may be at least about 3.0%, more preferably at least about 3.2%, and most preferably at least about 3.35%, and sometimes even up to 3.4% or higher, in certain examples.

In certain example embodiments, if the surfactant used for the first layer is non-ionic, the transmittance (when the first layer is deposited on a low iron glass substrate) is at least about 91.0%, more preferably at least about 91.5%, and most preferably at least about 92.0%, with an example transmittance being about 92.053%. Thus, the transmittance gain when a first layer formed from a non-ionic surfactant is used on one side of the glass substrate, the Tqe gain may be at least about 0.2%, more preferably at least about 0.5%, and most preferably at least about 1.0%, with an example Tqe% gain being about 1.2%.

If a second layer comprising nanoparticles is deposited over the first layer (e.g., when the first layer is based on a non-ionic surfactant), the transmittance of the coated article may rise to at least about 94.0%, more preferably at least about 94.1%, and most preferably at least about 94.2%, with an example transmittance being 94.218% with two coating layers. Thus, when a second porous nanoparticle-based layer is formed over a first non-ionic surfactant-based layer, the Tqe% gain of the substrate may be at least about 3.0%, more preferably at least about 3.2%, and most preferably at least about 3.35%, and sometimes even up to 3.4% or higher, in certain examples.

As can be seen from Table 13, a two-layered AR coating comprising a first surfactant-based layer and second nanoparticle-based layer may have a better transmittance gain than just a single nanoparticle-based layer alone.

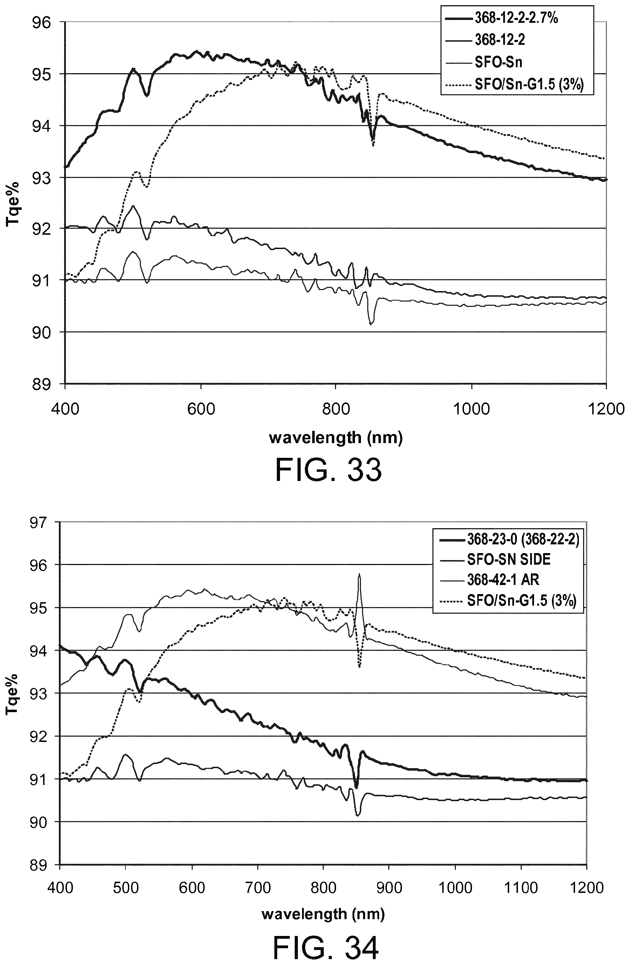

Fig. 33 is a graph showing the transmittance of Examples 3(a)-(b) and the control examples above from Table 13. Fig. 34 is a graph showing the transmittance of Examples 4(a)-(b), also compared to that of the controls (uncoated SFO glass, and single-layer nanoparticle-based AR coating).

Table 14 below sets forth thicknesses and refractive indices of certain example AR coatings. The first layer comprises a cationic surfactant-based sol (CTAC). The second layer, when used, comprises silica nanoparticles from a 2.5% solution.

Table 14

| Ex. | 1st coating cure | 2nd coating cure | Tqe % gain | Thickness (nm) | R.I.* at 550 nm | Avg. thickness (nm) | STD | Avg. RI | STD |
|---|---|---|---|---|---|---|---|---|---|
| 3C | 150°C/ 2 min | N/A | - | 85.75 | 1.425 | 84.605 | 0.019 | 1.439 | 0.019 |
| 3D | 150°C/ 2 min | N/A | - | 83.46 | 1.452 | | | | |
| 3E | 350°C/ 5 min | N/A | - | 51.00 | 1.325 | 50.805 | 0.001 | 1.324 | 0.000 |
| 3F | 350°C/ 5 min | N/A | - | 50.61 | 1.324 | | | | |
| 3G | 150°C/ 2 min/ 350 °C/ 5 min | 650° C/ 3.5 min | 3.401 | 139.32 | 1.228 | 140.785 | 0.001 | 1.226 | 0.001 |
| 3H | 150°C/ 2 min/ 350 °C/ 5 min | 650° C/ 3.5 min | 3.358 | 142.25 | 1.225 | | | | |
| * Refractive Index | | | | | | | | | |

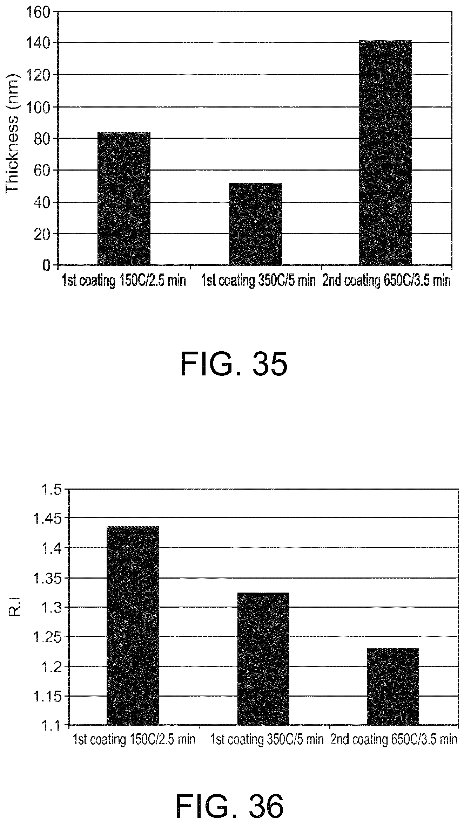

Fig. 35 is a graph illustrating the change in thickness in an AR coating as a result of different heat treatments in certain example embodiments. Fig. 36 is a graph based on the examples that illustrates the refractive index differences as between the different examples. The third example shown in the graphs is the thickest because it has both first and second coating layers, and it also has the lowest refractive index due to the gradient created by having two layers with different respective refractive indices.

In certain example embodiments, the methods disclosed herein relating to creating an AR coating based on more than one layer that is graded with respect to porosity and refractive index may be sufficiently repeatable.

In order to confirm the repeatability of some of the methods disclosed herein, multiple examples were evaluated. The glass type was MM/3.2 mm. The coating was deposited on the smooth side of the glass substrate. The first layer is based on a sol comprising Pluronic F127 (as shown in Table 10). The second layer for Examples 4(C)(1)- (4) was based on a sol comprising 2.3% silica nanoparticles (in terms of solid wt. %). The second layer for Examples 4D(1)-(4) is based on a sol comprising 2.5% silica nanoparticles (in terms of solid wt. %). Table 15 illustrates the results:

Table 15

| Ex. No. | Peak (nm) | Tqe% pre | Tqe% post | Tqe% gain |
|---|---|---|---|---|
| 4C(1) | 710 | 90.656 | 93.686 | 3.030 |
| 4C(2) | 565 | 90.895 | 93.934 | 3.039 |
| 4C(3) | 685 | 90.799 | 93.754 | 2.954 |
| 4C(4) | 600 | 90.847 | 93.945 | 3.098 |
| Avg. | 640 | 90.799 | 93.830 | 3.030 |
| STD | 69 | 0.103 | 0.130 | 0.059 |
| | | | | |
| 4D(1) | 710 | 90.587 | 93.651 | 3.064 |
| 4D(2) | 855 | 90.727 | 93.739 | 3.012 |

(continued)

| Ex. No. | Peak (nm) | Tqe% pre | Tqe% post | Tqe% gain |
|---------|-----------|----------|-----------|-----------|
| 4D(3) | 685 | 90.588 | 93.573 | 2.985 |
| 4D(4) | 710 | 90.630 | 93.646 | 3.016 |
| Avg. | 740 | 90.633 | 93.652 | 3.019 |
| STD | 78 | 0.066 | 0.068 | 0.033 |

Table 15 shows that the Tqe% gain is around 3% for all examples. This is higher than that of former matte glasses with AR coatings thereon. The error range is from about 0.03 to 0.06. Furthermore, these properties were evaluated for AR coatings comprising a second layer comprising nanoparticles with a solid percentage (by weight) of both 2.3% and 2.5%, respectively. No significant effect of solid percentage in the second sol was observed with respect to the Tqe% gains of coatings comprising each sol.

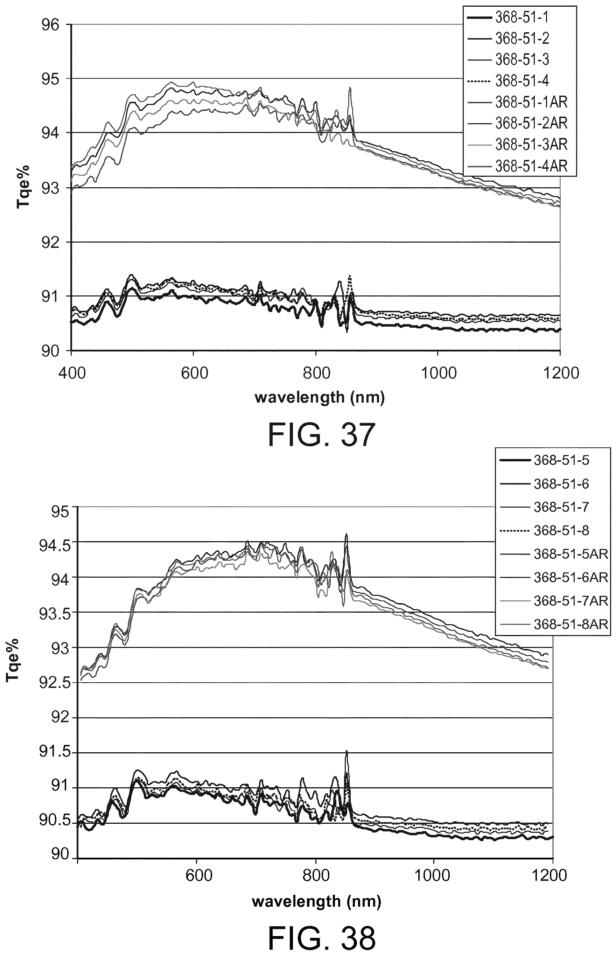

Figs. 37 and 38 are graphs illustrating the transmittance curves of MM glass substrates comprising AR coatings from Table 15 above. In Fig. 37, the first four lines represent the raw (e.g., uncoated) MM glass substrates corresponding to each of examples 4C(1)-(4) (prior to the substrate being coated), whereas the second four lines represent Examples 4C(1)-(4) in Table 15 above. In Fig. 38, the first four lines represent the uncoated values of the MM substrates corresponding to Examples 4D(1)-(4), and the second four lines represent Examples 4D(1)-(4) comprising the respective coatings described above.

The repeatability of optical performance of SFO glass substrates comprising AR coatings was also evaluated. As shown below in Table 16, a Tqe% gain of up to about 3.36% is observed in certain example embodiments of the methods and coated articles discussed herein. For example, the data below is for 3.2 mm SFO glass substrates coated (on the Sn side) with AR coatings comprising a first layer based on Pluronic F127 and a second layer based on a sol comprising silica nanoparticles, wherein the nanoparticles are present by about 2.3% wt. in the solution. In certain cases, this may represent a 0.26% improvement over other AR coatings.

Table 16

| Ex. No. | Tqe% pre | Avg. Tqe% | STD | Tqe% post | Tqe% gain | Avg. Tqe% gain | STD |
|---------|----------|-----------|-----|-----------|-----------|----------------|-----|
| 4E(1) | 90.821 | 90.836 | 0.018 | 94.22 | 3.401 | 3.355 | 0.029 |
| 4E(2) | 90.839 | | | 94.197 | 3.358 | | |
| 4E(3) | 90.841 | | | 94.194 | 3.353 | | |
| 4E(4) | 90.863 | | | 94.199 | 3.336 | | |
| 4E(5) | 90.817 | | | 94.145 | 3.327 | | |

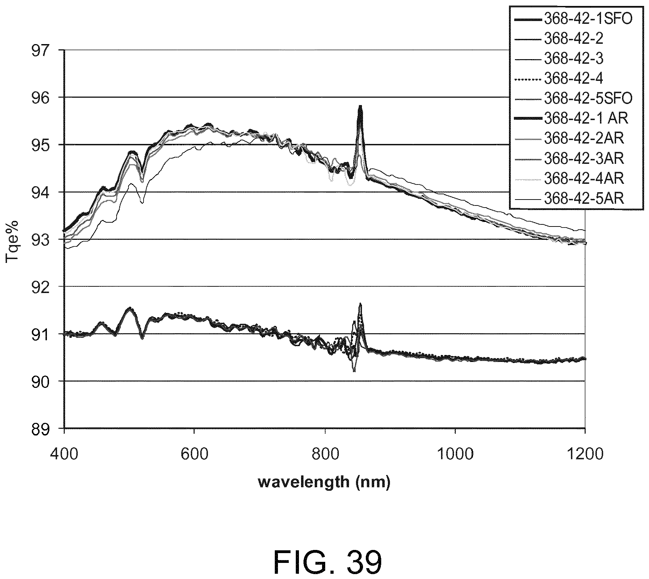

Fig. 39 is a graph illustrating the transmittance of SFO glass substrates that are uncoated and SFO glass substrates with an AR coating comprising a first layer formed from a Pluronic F127-based sol and a second layer comprising silica nanoparticles. The first five lines represent the Tqe% of the SFO substrates prior to deposition of the AR coating, and the second five lines represent examples 4E(1)-(5) above.

The durability of certain example AR coatings comprising a first surfactant-based layer and a second nanoparticle-based layer has also been evaluated. The measurements included the evaluation of chemical stability of articles comprising AR coatings, such as water boil and NaOH solution tests. The mechanical strength of certain example embodiments was also evaluated, such as by a tape pull test and via a crockmeter.

The examples below include both SFO and MM glass substrates, both 3.2 mm thick. The first layer of the AR coatings in both cases was a surfactant-based sol comprising CTAC. The sol used to form the second layer of the coating for SFO glass substrates comprised silica nanoparticles, 2.7% solid by weight, and the sol used for the second layer of the AR coating for the MM glass substrates comprised silica nanoparticles, 2.5% solid content by weight.

Table 17

| Ex. | Glass type | Test | Tqe% pre | Tqe% post | Tqe% gain | Specification |
|-----|------------|------|----------|-----------|-----------|---------------|
| 3I(1) | MM | Tape Pull | 93.615 | 92.827 | -0.788 | <1.5% |
| 3J(1) | SFO | Tape Pull | 94.173 | 93.814 | -0.359 | <1.5% |

(continued)

| Ex. | Glass type | Test | Tqe% pre | Tqe% post | Tqe% gain | Specification |
|-----|-----------|------|----------|-----------|-----------|---------------|
| 3I(2) | MM | Water Boil | 93.840 | 93.744 | -0.096 | ±0.5% |
| 3J(2) | SFO | Water Boil | 94.218 | 94.121 | -0.097 | ±0.5% |
| 3I(3) | MM | NaOH, 0.1N | 93.840 | 93.655 | -0.185 | ±0.5% |
| 3J(3) | SFO | NaOH, 0.1N | 94.218 | 94.140 | -0.078 | ±0.5% |
| 3I(4) | MM | Crockmeter | 93.615 | 92.833 | -0.782 | <=1.5% |
| 3J(4) | SFO | Crockmeter | 94.137 | 92.995 | -1.142 | <=1.5% |

The examples in Table 18 include both SFO and MM glass substrates, both 3.2 mm thick. The first layer of the AR coatings in both cases was a surfactant-based sol comprising Pluronic F127. The sol used to form the second layer of the coating for SFO glass substrates comprised silica nanoparticles, 2.3% solid by weight, and the sol used for the second layer of the AR coating for the MM glass substrates comprised silica nanoparticles, 2.5% solid content by weight.

Table 18

| Ex. | Glass type | Test | Tqe% pre | Tqe% post | Tqe% gain | Specification |
|-----|-----------|------|----------|-----------|-----------|---------------|
| 4F(1) | MM | Tape Pull | 93.754 | 93.555 | -0.199 | <1.5% |
| 4G(1) | SFO | Tape Pull | 94.194 | 94.028 | -0.166 | <1.5% |
| 4F(2) | MM | Water Boil | 93.934 | 93.898 | -0.036 | ±0.5% |
| 4G(2) | SFO | Water Boil | 94.197 | 94.175 | -0.023 | ±0.5% |
| 4F(3) | MM | NaOH, 0.1N | 93.686 | 93.573 | -0.114 | ±0.5% |
| 4G(3) | SFO | NaOH, 0.1N | 94.222 | 94.179 | -0.043 | ±0.5% |
| 4F(4) | MM | Crockmeter | 93.945 | 92.258 | -1.688 | <=1.5% |
| 4G(4) | SFO | Crockmeter | 94.199 | 92.476 | -1.722 | <=1.5% |

It was founds that coated articles made comprising layers formed from a CTAC-inclusive sol passed durability tests. However, in some cases, coated articles with AR coatings comprising layers formed from a Pluronic F127-inclusive sol may not pass a crockmeter test. This may be attributable to the pore structure and/or size of the thin film. In certain examples, the pore size of a layer and/or coating made from a sol comprising Pluronic F127 may be larger than that of a layer and/or coating made from a sol comprising CTAC. In some cases, if the pore size of a layer becomes too large, the adhesiveness and/or durability of the layer may decrease. However, in certain example embodiments, the durability of these AR coatings comprising layers made from sols comprising Pluronic F127 is still sufficient.

Certain example embodiments disclosed herein relate to glass articles comprising anti-reflection coatings. In certain cases, the anti-reflection coatings may comprise at least two layers. The first layer may be prepared by a sol comprising a surfactant (e.g., cationic, non-ionic, etc.), and the second layer (disposed over the first layer), may comprise nanoparticles. In certain instances, the morphology of a layer formed from a surfactant-based sol may be more flexible than one formed from a sol comprising nanoparticles. The mesoporous structure achievable in a surfactant-based layer may be more easily tunable than that achieved in a nanoparticle-based layer. However, in some examples, the durability of a nanoparticle-inclusive layer may be greater than that of a layer made from a surfactant-based sol.

The Tqe% gain for articles comprising anti-reflection coatings comprising a first layer formed via a surfactant-inclusive sol, and a second layer, disposed over the first layer, formed from a nanoparticle-inclusive sol, may be about 3.3%, or even greater. In certain example embodiments, the Tqe% may be higher when the glass substrate upon which the coating is disposed is a low iron float glass substrate as opposed to when the substrate is matte and/or textured. In any event, the Tqe% of many glass substrates may be improved by at least about 2%, more preferably at least about 2.5%, and most preferably at least about 3%, and in certain example embodiments (e.g., when the glass substrate is a low iron float glass substrate), the Tqe% gain may even be as high as about 3.2, 3.3 or even 3.4%.

The Examples described herein indicate that the Tqe% of a coated article including a glass substrate and an anti-reflection coating may advantageously be improved through the use of at least two layers in the anti-reflection coating. In certain instances, the porosity of the first layer may be less than the porosity of the second layer. In further examples, more than two layers may be included in the anti-reflection coating. The layers may be graded with respect to porosity and/or refractive index, or the layers may be arranged in an alternating manner with respect to porosity and/or refractive index, according to different example embodiments.

In certain instances, one or more of the porous layers in the anti-reflection coating may be formed by similar methods described herein. In some examples, one or more of the porous layers in the anti-reflection coating may be formed by differing methods described herein.

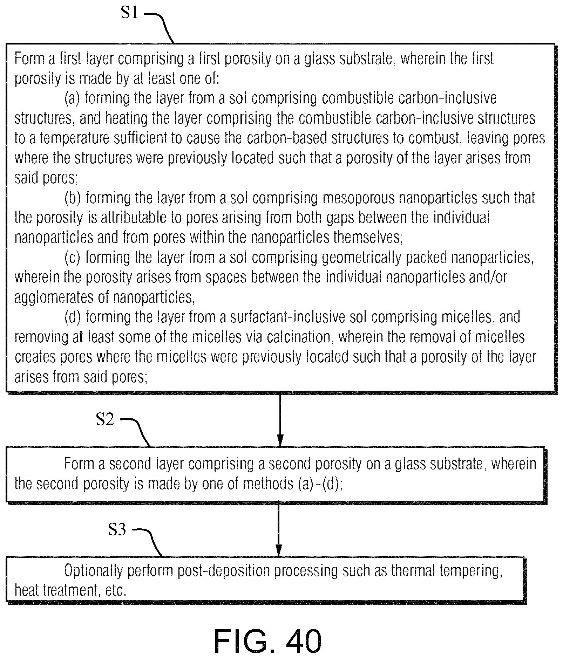

Fig. 40 illustrates an example method of making an anti-reflection coating. In S1, a first layer having a first porosity is formed on a glass substrate. In S1, the porosity of the first layer may be caused by: (a) forming the layer from a sol comprising combustible carbon-inclusive structures, and heating the layer comprising the combustible carbon-inclusive structures to a temperature sufficient to cause the carbon-based structures to combust, leaving pores where the structures were previously located such that a porosity of the layer arises from said pores; (b) forming the layer from a sol comprising mesoporous nanoparticles such that the porosity is attributable to pores arising from both gaps between the individual nanoparticles and from pores within the nanoparticles themselves; (c) forming the layer from a sol comprising geometrically packed nanoparticles, wherein the porosity arises from spaces between the individual nanoparticles and/or agglomerates of nanoparticles, and/or (d) forming the layer from a surfactant-inclusive sol comprising micelles, and removing at least some of the micelles via calcination, wherein the removal of micelles creates pores where the micelles were previously located such that a porosity of the layer arises from said pores. In certain cases, the coating solution may be deposited by any appropriate sol gel deposition technique.

In S2, a second layer having a second porosity may be formed on a glass substrate, wherein the second porosity is made by one of methods (a)-(d).

S1/S2 may optionally be repeated as many times as desired. In S3, the coated article may optionally be subjected to post-deposition processing such s thermal tempering, heat treatment, and/or the like.

In certain example embodiments, the method used in S1 and S2 may be the same method. However, in other example embodiments, the methods used may be different. In any event, certain example embodiments relate to an AR coating comprising at least two layers, wherein the layers comprise differing porosities from each other such that the coating is graded with respect to porosity. As explained above, the AR coating may comprise layers formed by differing methods. For instance, an AR coating may include at least one layer comprising mesoporous nanoparticles, and one layer comprising pores that were created by combusting carbon-based structures, or another layer that comprises elongated particles, and so forth. In other examples, the layers may be formed by the same methods. In further example embodiments, a multi-layered AR coating may comprise n number of layers each made by any of methods (a)-(d).

Certain example embodiments relate to methods for making AR coatings comprising gradient pore structures. In certain cases, these graded AR coatings comprise at least two layers. In certain example embodiments, a coated article comprising an AR coating comprising at least first and second layers, graded with respect to porosity in the manner. For example, the porosity of each layer may increase as the layer(s) gets closer to the air and farther from the substrate. In other example embodiments, methods (a)-(d) may be utilized to form an AR coating comprising layers that alternate with respect to porosity, where layers of higher porosity and layers of lower porosity are alternated.

In certain example embodiments, a method of making an anti-reflection coating is provided. A first layer having a first porosity is formed on a glass substrate. The first layer is formed from a first coating solution comprising first nanoparticles of a first shape and/or size. A second layer is formed over and contacting the first layer, with the second layer having a second porosity. The second layer is formed from a second coating solution comprising second nanoparticles of a second shape and/or size. The second porosity is greater than the first porosity. The first silica-based nanoparticles have a substantially spherical shape. The second silica-based nanoparticles have an elongated and/or asymmetrical shape.

In addition to the features of the previous paragraph, in certain example embodiments, the nanoparticles in the first and/or second coating solutions may comprise silica nanoparticles.

In addition to the features of the previous paragraph, in certain example embodiments, the first coating composition may comprise from about 1.5 to 2.5% silica (solid weight percent), and/or the second coating composition may comprise from about 3.5 to 4.5% silica (solid weight percent).

In addition to the features of the previous paragraph, in certain example embodiments, the shape of the first nanoparticles may be more conducive to packing than that of the second nanoparticles; the size of the second nanoparticles may be greater than the size of the first nanoparticles; and/or the first nanoparticles may have a substantially spherical shape, and the second nanoparticles may have an elongated shape.

In addition to the features of any of the previous four paragraphs, in certain example embodiments, an average broadband (400-1200 nm) Tqe% gain as compared to an uncoated glass substrate may be at least about 3.2%.

In addition to the features of the previous paragraph, in certain example embodiments, the average Tqe% gain may be at least about 3.3%.

In addition to the features of any of the previous six paragraphs, in certain example embodiments, the first porosity may be from about 20-30%, and/or the second porosity may be from about 30-50%.

In addition to the features of any of the previous seven paragraphs, in certain example embodiments, the first layer may have a pore size of from about 3-7 nm, and/or the second layer may have a pore size of from about 10-15 nm.

In certain example embodiments, a coated article comprising a substrate supporting an anti-reflection coating is provided. A first layer has a first porosity. A second layer has a second porosity. The second porosity is greater than the first porosity.

In addition to the features of the previous paragraph, in certain example embodiments, the first layer may comprise silica nanoparticles having a substantially spherical shape.

In addition to the features of the previous paragraph, in certain example embodiments, the second layer may comprise silica nanoparticles having a substantially elongated shape.

In addition to the features of the previous paragraph, in certain example embodiments, the first porosity may be attributable to spaces between the substantially spherical nanoparticles, and the second porosity may be attributable to spaces between the substantially elongated nanoparticles. An average size of the spaces between the substantially elongated nanoparticles may be greater than an average size of the spaces between the substantially spherical nanoparticles.

In addition to the features of any of the previous four paragraphs, in certain example embodiments, an average broadband (400-1200 nm) Tqe% gain as compared to an uncoated glass substrate may be at least about 3.2%.

In addition to the features of the previous paragraph, in certain example embodiments, the average Tqe% gain may be at least about 3.3%.

In addition to the features of any of the previous six paragraphs, in certain example embodiments, the first porosity may be from about 20-30%, and/or the second porosity may be from about 30-50%.

In addition to the features of any of the previous seven paragraphs, in certain example embodiments, the first layer may have a pore size of from about 3-7 nm, and/or the second layer may have a pore size of from about 10-15 nm.

In certain example embodiments, a method of making an anti-reflection coating is provided. A first intermediate layer is formed on a glass substrate by wet-applying a sol comprising at least silica and a surfactant on a glass substrate. The glass substrate with the first intermediate layer thereon is initially heated to a first temperature, and the glass substrate with the first intermediate layer thereon is subsequently heated to a second temperature. The second temperature is higher than the first temperature. A second intermediate layer is formed by wet-applying a sol comprising nanoparticles over and contacting the first intermediate layer. The first and second intermediate layers are cured so as to form an anti-reflection coating comprising at least first and second layers having first and second porosities from the first and second intermediate layers, respectively. The second porosity is greater than the first porosity.

In addition to the features of the previous paragraph, in certain example embodiments, the porosity of the first layer may arise from vacancies left by micelles that are removed during the initial and/or subsequent heating.

In addition to the features of either of the previous two paragraphs, in certain example embodiments, the porosity of the second layer may arise from spaces between the nanoparticles.

In addition to the features of any of the previous three paragraphs, in certain example embodiments, the nanoparticles may comprise silica nanoparticles.

In addition to the features of any of the previous four paragraphs, in certain example embodiments, the silica nanoparticles have an elongated shape.

In addition to the features of the previous paragraph, in certain example embodiments, the elongated silica nanoparticles may have a diameter of from about 4 to 15 nm and/or a length of from about 40 to 100 nm.

In addition to the features of any of the previous six paragraphs, in certain example embodiments, the surfactant may be a cationic surfactant.

In addition to the features of the previous paragraph, in certain example embodiments, the cationic surfactant may comprise cetyltrimethylammonium chloride (CTAC).

In addition to the features of any of the previous eight paragraphs, in certain example embodiments, the nanoparticles may comprise elongated silica nanoparticles having a diameter of from about 4 to 15 nm and/or a length of from about 40 to 100 nm, and the surfactant may be a cationic surfactant comprising cetyltrimethylammonium chloride (CTAC).

In addition to the features of the previous paragraph, in certain example embodiments, an average broadband (400-1200 nm) Tqe% gain as compared to an uncoated glass substrate may be at least about 3.3%; and/or a refractive index of the first layer may be from about 1.39 to 1.49, and/or a refractive index of the second layer may be from about 1.27 to 1.37.

In addition to the features of any of the previous ten paragraphs, in certain example embodiments, the surfactant may be a non-ionic polymer surfactant.

In addition to the features of the previous paragraph, in certain example embodiments, the non-ionic polymer surfactant may comprise polyethylene-polypropylene-polyethylene.

In addition to the features of any of the previous 12 paragraphs, in certain example embodiments, the nanoparticles may comprise elongated silica nanoparticles having a diameter of from about 4 to 15 nm and/or a length of from about 40 to 100 nm, and the surfactant may be a non-ionic polymer surfactant comprising polyethylene-polypropylene-polyethylene.

In addition to the features of the previous paragraph, in certain example embodiments, an average broadband (400-1200 nm) Tqe% gain as compared to an uncoated glass substrate may be at least about 3.3%; and/or a refractive index of the first layer may be from about 1.39 to 1.49, and/or a refractive index of the second layer is from about 1.27 to 1.37.

In addition to the features of either of the previous two paragraphs, in certain example embodiments, the refractive index of the first layer may be from about 1.42 to 1.46, and/or the refractive index of the second layer may be from about 1.30 to 1.35.

In addition to the features of any of the previous three paragraphs, in certain example embodiments, the refractive index of the first layer may be from about 1.42 to 1.46, and/or the refractive index of the second layer may be from about 1.30 to 1.35.

In addition to the features of any of the previous 15 paragraphs, in certain example embodiments, an average broadband (400-1200 nm) Tqe% gain as compared to an uncoated glass substrate may be at least about 3.0%, more preferably at least about 3.2%, and still more preferably at least about 3.4%.

In certain example embodiments, a coated article is provided. A glass substrate is provided, and an anti-reflection coating is disposed over the glass substrate. The anti-reflection coating comprises first and second layers, with the first layer having a first porosity and the second layer having a second porosity. The first layer comprises mesoporous silica, and has a refractive index of from about 1.39 to 1.49, and the second layer comprises elongated nanoparticles comprising silica and has a refractive index of from about 1.27 to 1.37. The second porosity is greater than the first porosity. An average broadband (400-1200 nm) Tqe% gain as compared to an uncoated glass substrate is at least about 3.0%.

In certain example embodiments, a method of making an anti-reflection coating is provided. A first layer having a first porosity is formed on a glass substrate. A second layer having a second porosity is formed over and contacting the first layer. The second porosity is greater than the first porosity. The first and/or second porosities are formed by at least one of: (a) forming the first and/or second layer(s) from a sol comprising combustible carbon-inclusive structures, and heating the layer comprising the combustible carbon-inclusive structures to a temperature sufficient to cause the carbon-based structures to combust, leaving pores where the structures were previously located such that a porosity of the layer(s) arises from said pore; (b) forming the first and/or second layer(s) from a sol comprising mesoporous nanoparticles such that the porosity is attributable to pores arising from gaps between the individual nanoparticles and pores within the nanoparticles themselves; (c) forming the first and/or second layer(s) from a sol comprising geometrically packed nanoparticles, wherein the porosity arises from spaces between the individual nanoparticles and/or agglomerates of nanoparticles; and/or (d) forming the first and/or second layers from a surfactant-inclusive sol comprising micelles, and removing at least some of the micelles, leaving pores where the micelles were previously located such that a porosity of the layer(s) arises from said pores.

In addition to the features of the previous paragraph, in certain example embodiments, the first and second porosities may be formed by the geometric packing of nanoparticles.

In addition to the features of either of the two previous paragraphs, in certain example embodiments, the first layer may comprise substantially spherical nanoparticles, and/or the second layer may comprise elongated substantially cylindrical nanoparticles.

In addition to the features of any of the previous three paragraphs, in certain example embodiments, the coated article may have a Tqe% gain as compared to an uncoated glass substrate of at least about 3.3%.

In addition to the features of any of the previous four paragraphs, in certain example embodiments, the first and/or second porosities may formed at least by (a), the first and/or second porosities may formed at least by at least by (b), etc. In addition to the features of any of the previous four paragraphs, in certain example embodiments, one of the first and/or second porosities is formed by (a), and the other by (b); one of the first and/or second porosities is formed by (a), and the other by (c); one of the first and/or second porosities is formed by (b), and the other by (c); etc.

In addition to the features of any of the previous five paragraphs, in certain example embodiments, the anti-reflection coating may have a thickness of from about 50 to 200 nm.

In addition to the features of any of the previous six paragraphs, in certain example embodiments, each layer may be dried at a temperature of at least about 300 degrees C after it is deposited on the substrate.

In certain example embodiments, a coated article comprising a glass substrate is provided. An anti-reflection coating is disposed over the glass substrate. The anti-reflection coating comprises at least first and second layers. The first and/or second layers of the coating comprise at least one of: (a) a matrix comprising fullerene structures and silica, (b) mesoporous nanoparticles, (c) a matrix comprising micelles and silica, and (d) elongated and/or substantially spherical nanoparticles.

In addition to the features of the previous paragraph, in certain example embodiments, the first and second layers any of (a)-(d), and may be the same or different from one another. For example, the first layer may comprise (d) and the second layer may comprise (d). In this example, the first layer may comprise substantially spherical nanoparticles; and/or the second layer may comprise elongated nanoparticles, e.g., having a diameter of from about 2 to 20 nm and a length of from about 30 to 150 nm. When (d) is selected, the nanoparticles may be elongated nanoparticles having a diameter of from about 2 to 20 nm and/or a length of from about 30 to 150 nm, for example.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

In the following preferred embodiments are described to facilitate a deeper understanding of the invention:

1. A method of making an anti-reflection coating, the method comprising:

forming a first layer having a first porosity on a glass substrate, wherein the first layer is formed from a first coating solution comprising first nanoparticles of a first shape and/or size; and

forming a second layer over and contacting the first layer, the second layer having a second porosity, wherein the second layer is formed from a second coating solution comprising second nanoparticles of a second shape and/or size;

wherein the second porosity is greater than the first porosity,

wherein the first silica-based nanoparticles have a substantially spherical shape, and

wherein the second silica-based nanoparticles have an elongated and/or asymmetrical shape.

2. The method of embodiment 1, wherein the nanoparticles in the first and second coating solutions comprise silica nanoparticles.

3. The method of any preceding embodiment, wherein the first coating composition comprises from about 1.5 to 2.5% silica (solid weight percent), and the second coating composition comprises from about 3.5 to 4.5% silica (solid weight percent).

4. The method of any preceding embodiment, wherein the shape of the first nanoparticles is more conducive to packing than that of the second nanoparticles.

5. The method of any preceding embodiment, wherein the size of the second nanoparticles is greater than the size of the first nanoparticles.

6. The method of any preceding embodiment, wherein the first nanoparticles have a substantially spherical shape, and the second nanoparticles have an elongated shape.

7. The method of any preceding embodiment, wherein an average broadband (400-1200 nm) Tqe% gain as compared to an uncoated glass substrate is at least about 3.2%.

8. The method of embodiment 7, wherein the average Tqe% gain is at least about 3.3%.

9. A coated article comprising a substrate supporting an anti-reflection coating, the coating comprising:

a first layer having a first porosity; and
a second layer having a second porosity;
wherein the second porosity is greater than the first porosity.

10. The coated article of embodiment 9, wherein the first layer comprises silica nanoparticles having a substantially spherical shape.

11. The coated article of embodiment 10, wherein the second layer comprises silica nanoparticles having a substantially elongated shape.

12. The coated article of embodiment 11, wherein the first porosity is attributable to spaces between the substantially spherical nanoparticles, and the second porosity is attributable to spaces between the substantially elongated nanoparticles, and wherein an average size of the spaces between the substantially elongated nanoparticles is greater than an average size of the spaces between the substantially spherical nanoparticles.

13. The coated article of any of embodiments 9-12, wherein an average broadband (400-1200 nm) Tqe% gain as compared to an uncoated glass substrate is at least about 3.2%.

14. The coated article of embodiment 13, wherein the average Tqe% gain is at least about 3.3%.

15. The coated article of any of embodiments 9-14, wherein the first porosity is from about 20-30%, and the second porosity is from about 30-50%.

16. The coated article of any of embodiments 9-15, wherein the first layer has a pore size of from about 3-7 nm, and the second layer has a pore size of from about 10-15 nm.

17. The method of any of embodiments 1-14, wherein the first porosity is from about 20-30%, and the second porosity is from about 30-50%.

18. The method of any of embodiments 1-15, wherein the first layer has a pore size of from about 3-7 nm, and the second layer has a pore size of from about 10-15 nm.

## Claims

1. A method of making an anti-reflection coating, the method comprising:

   forming a first layer having a first porosity on a glass substrate, wherein the first layer is formed from a first coating solution comprising first nanoparticles of a first shape and/or size; and
   forming a second layer over and contacting the first layer, the second layer having a second porosity, wherein the second layer is formed from a second coating solution comprising second nanoparticles of a second shape and/or size;
   wherein the second porosity is greater than the first porosity,
   wherein the first silica-based nanoparticles have one of a substantially spherical shape or an elongated and/or asymmetrical shape, and
   wherein the second silica-based nanoparticles have the other of the substantially spherical shape or the elongated and/or asymmetrical shape.

2. The method of claim 1, wherein the nanoparticles in the first and second coating solutions comprise silica nanoparticles.

3. The method of any preceding claim, wherein the first coating composition comprises from 1.5 to 2.5% silica (solid weight percent), and the second coating composition comprises from 3.5 to 4.5% silica (solid weight percent).

4. The method of any preceding claim, wherein the shape of the first nanoparticles is more conducive to packing than that of the second nanoparticles.

5. The method of any preceding claim, wherein the size of the second nanoparticles is greater than the size of the first nanoparticles.

6. The method of any preceding claim, wherein the first nanoparticles have a substantially spherical shape, and the second nanoparticles have an elongated shape.

7. The method of any preceding claim, wherein an average broadband (400-1200 nm) Tqe% gain as compared to an uncoated glass substrate is at least about 3.2%.

8. The method of claim 7, wherein the average Tqe% gain is at least about 3.3%.

9. A coated article comprising a substrate supporting an anti-reflection coating, the coating comprising:

   a first layer having a first porosity and comprising silica nanoparticles having one of a substantially spherical shape or a substantially elongated shape; and
   a second layer over and contacting the first layer and having a second porosity, the second layer comprising silica nanoparticles having the other of the substantially spherical shape or the substantially elongated shape; wherein the second porosity is greater than the first porosity.

10. The coated article of claim 9, wherein the first layer comprises silica nanoparticles having a substantially spherical shape.

11. The coated article of claim 10, wherein the second layer comprises silica nanoparticles having a substantially elongated shape.

12. The coated article of claim 11, wherein the first porosity is attributable to spaces between the substantially spherical nanoparticles, and the second porosity is attributable to spaces between the substantially elongated nanoparticles, and wherein an average size of the spaces between the substantially elongated nanoparticles is greater than an average size of the spaces between the substantially spherical nanoparticles.

13. The coated article of any of claims 9-12, wherein an average broadband (400-1200 nm) Tqe% gain as compared to an uncoated glass substrate is at least about 3.2%, preferably wherein the average Tqe% gain is at least about 3.3%.

14. The method respectively coated article of any of claims 1-13, wherein the first porosity is from 20-30%, and the second porosity is from 30-50%.

15. The method respectively coated article of any of claims 1-13, wherein the first layer has a pore size of from 3-7 nm, and the second layer has a pore size of from 10-15 nm.

**Patentansprüche**

1. Verfahren zur Herstellung einer Antireflexionsbeschichtung, wobei das Verfahren Folgendes umfasst:

   Bilden einer ersten Schicht mit einer ersten Porosität auf einem Glassubstrat, wobei die erste Schicht aus einer ersten Beschichtungslösung gebildet ist, die erste Nanopartikel einer ersten Form und/oder Größe umfasst; und
   Bilden einer zweiten Schicht über und in Kontakt mit der ersten Schicht, wobei die zweite Schicht eine zweite Porosität aufweist, wobei die zweite Schicht aus einer zweiten Beschichtungslösung gebildet ist, die zweite Nanopartikel einer zweiten Form und/oder Größe umfasst,
   wobei die zweite Porosität größer als die erste Porosität ist,
   wobei die ersten Nanopartikel auf Siliciumdioxidbasis eine im Wesentlichen kugelförmige Form oder eine längliche und/oder asymmetrische Form aufweisen, und
   wobei die zweiten Nanopartikel auf Siliciumdioxidbasis die andere von der im Wesentlichen kugelförmigen Form oder der länglichen und/oder asymmetrischen Form aufweisen.

2. Verfahren nach Anspruch 1, wobei die Nanopartikel in der ersten und der zweiten Beschichtungslösung Siliciumdioxid-Nanopartikel umfassen.

3. Verfahren nach einem der vorhergehenden Ansprüche, wobei die erste Beschichtungszusammensetzung von 1,5 bis 2,5 % Siliciumdioxid (Feststoffgewichtsprozent) umfasst und die zweite Beschichtungszusammensetzung von 3,5 bis 4,5 % Siliciumdioxid (Feststoffgewichtsprozent) umfasst.

4. Verfahren nach einem der vorhergehenden Ansprüche, wobei die Form der ersten Nanopartikel dem Packen zuträglicher ist als die der zweiten Nanopartikel.

5. Verfahren nach einem der vorhergehenden Ansprüche, wobei die Größe der zweiten Nanopartikel größer als die Größe der ersten Nanopartikel ist.

6. Verfahren nach einem der vorhergehenden Ansprüche, wobei die ersten Nanopartikel eine im Wesentlichen kugelförmige Form aufweisen und die zweiten Nanopartikel eine längliche Form aufweisen.

7. Verfahren nach einem der vorhergehenden Ansprüche, wobei eine mittlere breitbandige (400-1200 nm) Tqe %-Verstärkung im Vergleich zu einem unbeschichteten Glassubstrat mindestens etwa 3,2 % beträgt.

**8.** Verfahren nach Anspruch 1, wobei die durchschnittliche Tqe %-Verstärkung mindestens etwa 3,3 % beträgt.

**9.** Beschichteter Gegenstand, umfassend ein Substrat, das eine Antireflexionsbeschichtung trägt, wobei die Beschichtung Folgendes umfasst:

eine erste Schicht mit einer ersten Porosität, die Siliciumdioxid-Nanopartikel umfasst, die entweder eine von einer im Wesentlichen kugelförmigen Form oder einer im Wesentlichen länglichen Form aufweisen; und eine zweite Schicht über und in Kontakt mit der ersten Schicht und mit einer zweiten Porosität, wobei die zweite Schicht Siliciumdioxid-Nanopartikel mit der anderen der im Wesentlichen kugelförmigen Form oder der im Wesentlichen länglichen Form umfasst; und wobei die zweite Porosität größer als die erste Porosität ist.

**10.** Beschichteter Gegenstand nach Anspruch 9, wobei die erste Schicht Siliciumdioxid-Nanopartikel mit einer im Wesentlichen kugelförmigen Form umfasst.

**11.** Beschichteter Gegenstand nach Anspruch 10, wobei die zweite Schicht Siliciumdioxid-Nanopartikel mit einer im Wesentlichen länglichen Form umfasst.

**12.** Beschichteter Gegenstand nach Anspruch 11, wobei die erste Porosität auf Räume zwischen den im Wesentlichen kugelförmigen Nanopartikeln zurückzuführen ist und die zweite Porosität auf Räume zwischen den im Wesentlichen länglichen Nanopartikeln zurückzuführen ist, und wobei eine durchschnittliche Größe der Räume zwischen den im Wesentlichen länglichen Nanopartikeln größer als eine durchschnittliche Größe der Räume zwischen den im Wesentlichen kugelförmigen Nanopartikeln ist.

**13.** Beschichteter Gegenstand nach einem der Ansprüche 9-12, wobei eine durchschnittliche breitbandige (400-1200 nm) Tqe %-Verstärkung im Vergleich zu einem unbeschichteten Glassubstrat mindestens 3,3 % beträgt.

**14.** Verfahren nach einem der Ansprüche 1-13, wobei die erste Porosität von 20-30 % beträgt und die zweite Porosität von 30-50 % beträgt.

**15.** Verfahren nach einem der Ansprüche 1-13, wobei die erste Schicht eine Porengröße von 3-7 nm aufweist, und die zweite Schicht eine Porengröße von 10-15 nm aufweist.

## Revendications

**1.** Procédé de fabrication d'un revêtement antireflet, le procédé comprenant :

la formation d'une première couche ayant une première porosité sur un substrat en verre, dans lequel la première couche est formée à partir d'une première solution de revêtement comprenant des premières nanoparticules d'une première forme et/ou taille ; et la formation d'une deuxième couche par-dessus et en contact avec la première couche, la deuxième couche ayant une deuxième porosité, dans lequel la deuxième couche est formée à partir d'une deuxième solution de revêtement comprenant des deuxièmes nanoparticules d'une deuxième forme et/ou taille ; dans lequel la deuxième porosité est supérieure à la première porosité, dans lequel les premières nanoparticules à base de silice ont l'une parmi une forme sensiblement sphérique ou une forme allongée et/ou asymétrique, et dans lequel les deuxièmes nanoparticules à base de silice ont l'autre parmi la forme sensiblement sphérique ou la forme allongée et/ou asymétrique.

**2.** Procédé selon la revendication 1, dans lequel les nanoparticules dans les première et deuxième solutions de revêtement comprennent des nanoparticules de silice.

**3.** Procédé selon l'une quelconque des revendications précédentes, dans lequel la première composition de revêtement comprend de 1,5 à 2,5 % de silice (pour cent en poids de matière solide), et la deuxième composition de revêtement comprend de 3,5 à 4,5 % de silice (pour cent en poids de matière solide).

**4.** Procédé selon l'une quelconque des revendications précédentes, dans lequel la forme des premières nanoparticules est plus favorable à un tassement que celle des deuxièmes nanoparticules.

5. Procédé selon l'une quelconque des revendications précédentes, dans lequel la taille des deuxièmes nanoparticules est supérieure à la taille des premières nanoparticules.

6. Procédé selon l'une quelconque des revendications précédentes, dans lequel les premières nanoparticules ont une forme sensiblement sphérique, et les deuxièmes nanoparticules ont une forme allongée.

7. Procédé selon l'une quelconque des revendications précédentes, dans lequel le gain large bande (400 à 1200 nm) Tqe% moyen par comparaison avec un substrat en verre non revêtu est d'au moins environ 3,2 %.

8. Procédé selon la revendication 7, dans lequel le gain Tqe% moyen est d'au moins environ 3,3 %.

9. Article revêtu comprenant un substrat supportant un revêtement antireflet, le revêtement comprenant :

   une première couche ayant une première porosité et comprenant des nanoparticules de silice ayant l'une parmi une forme sensiblement sphérique ou une forme sensiblement allongée ; et
   une deuxième couche par-dessus et en contact avec la première couche et ayant une deuxième porosité, la deuxième couche comprenant des nanoparticules de silice ayant l'autre parmi la forme sensiblement sphérique ou la forme sensiblement allongée ;
   dans lequel la deuxième porosité est supérieure à la première porosité.

10. Article revêtu selon la revendication 9, dans lequel la première couche comprend des nanoparticules de silice ayant une forme sensiblement sphérique.

11. Article revêtu selon la revendication 10, dans lequel la deuxième couche comprend des nanoparticules de silice ayant une forme sensiblement allongée.

12. Article revêtu selon la revendication 11, dans lequel la première porosité est imputable à des espaces entre les nanoparticules sensiblement sphériques, et la deuxième porosité est imputable des espaces entre les nanoparticules sensiblement allongées, et dans lequel une taille moyenne des espaces entre les nanoparticules sensiblement allongées est supérieure à une taille moyenne des espaces entre les nanoparticules sensiblement sphériques.

13. Article revêtu selon l'une quelconque des revendications 9 à 12, dans lequel un gain large bande (400 à 1200 nm) Tqe% moyen par comparaison avec un substrat en verre non revêtu est d'au moins environ 3,2 %, de préférence dans lequel le gain Tqe% moyen est d'au moins environ 3,3 %.

14. Procédé ou article revêtu selon l'une quelconque des revendications 1 à 13, dans lequel la première porosité va de 20 à 30 %, et la deuxième porosité va de 30 à 50 %.

15. Procédé ou article revêtu selon l'une quelconque des revendications 1 à 13, dans lequel la première couche a une taille de pore allant de 3 à 7 nm, et la deuxième couche a une taille de pore allant de 10 à 15 nm.

FIG. 1

FIG. 2

EP 2 752 386 B1

FIG. 3(a)

FIG. 3(b)

FIG. 3(c)

FIG. 3(d)

FIG. 3(e)

44

FIG. 4

FIG. 5

FIG. 6

FIG. 7

S1

Deposit a mixture comprising an organic solvent, a
silane-based compound, and carbon structures
(e.g., fullerene structures) on a glass substrate to
form a layer;

S2

Dry and/or allow the layer to dry so as to form a silica and
carbon structure-inclusive matrix;

S3

Optionally repeat S1;

S4

Heat treat and/or thermally temper the coated article such
that the carbon-inclusive compounds (e.g., fullerene structures,
and remaining solvent, etc.) partially and/or fully burns off,
forming a porous silica-based matrix.

# FIG. 8

FIG. 9(a)   FIG. 9(b)   FIG. 9(c)

FIG. 9(d)

$L_\alpha$ bilayer surfactant phases

Silica

FIG. 9(e)

FIG. 10

FIG. 11

FIG. 12

FIG. 13

(a) Spherical micelle

(b) Cylindrical micelle

(c) Lamellar phase

(d) Reversed micelle

(e) Bicontinous structure

(f) Vesicle

FIG. 14

FIG. 15(a)          FIG. 15(b)

FIG. 16(a)          FIG. 16(b)

FIG. 17(a)

$L_\alpha$ bilayer surfactant phases

Silica

FIG. 17(b)

FIG. 18

FIG. 19

heating

First sol with
spherical particles

heating

Second sol with
elongated particles

FIG. 20

FIG. 21

FIG. 22

S1

Deposit a mixture comprising a silane-based compound (and/or other suitable metal oxide), porous nanoparticles (e.g., mesoporous silica nanoparticles) and organic solvent on a glass substrate;

S2

Dry and/or allow the mixture to dry on the substrate so as to form an anti-reflective layer comprising a porous silica and porous nanoparticle-inclusive matrix, wherein a porosity of the AR layer may be controlled by both (1) the geometric package of the nanoparticles and metal oxide particles, and (2) the intrinsic pore size of the porous nanoparticles;

S3

Optionally repeat S1;

S4

Optionally preform post-deposition processing such as thermal tempering, heat treatment, etc.

## FIG. 23

Coating layer with spherical particle

First coating

Second coating

coating head — 104

IR lamp — 106

105 — coating head

3

glass

1

3

1

3   5

glass   1

110

100 — pump

reservoir

102

108

Moving direction

108

reservoir

101

pump

103

5

3

1

FIG. 24

EP 2 752 386 B1

FIG. 25

FIG. 26

FIG. 27(a)

FIG. 27(b)

FIG. 28

FIG. 29

Structure of cetyltrimethylammonium chloride (CTAC).

# FIG. 30

Structure of Pluronic F127.

# FIG. 31

Schematically illustration of AR glass prepared with double coated layers.

FIG. 32

FIG. 33

FIG. 34

FIG. 35

FIG. 36

FIG. 37

FIG. 38

FIG. 39

S1

Form a first layer comprising a first porosity on a glass substrate, wherein the first porosity is made by at least one of:

(a) forming the layer from a sol comprising combustible carbon-inclusive structures, and heating the layer comprising the combustible carbon-inclusive structures to a temperature sufficient to cause the carbon-based structures to combust, leaving pores where the structures were previously located such that a porosity of the layer arises from said pores;

(b) forming the layer from a sol comprising mesoporous nanoparticles such that the porosity is attributable to pores arising from both gaps between the individual nanoparticles and from pores within the nanoparticles themselves;

(c) forming the layer from a sol comprising geometrically packed nanoparticles, wherein the porosity arises from spaces between the individual nanoparticles and/or agglomerates of nanoparticles,

(d) forming the layer from a surfactant-inclusive sol comprising micelles, and removing at least some of the micelles via calcination, wherein the removal of micelles creates pores where the micelles were previously located such that a porosity of the layer arises from said pores;

S2

Form a second layer comprising a second porosity on a glass substrate, wherein the second porosity is made by one of methods (a)-(d);

S3

Optionally perform post-deposition processing such as thermal tempering, heat treatment, etc.

FIG. 40

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 360898 A
- US 13361754 B
- US 4510344 A
- US 4806436 A
- US 6506622 B
- US 5977477 A
- JP 7122764 A
- WO 2009120983 A2
- WO 2011142956 A2
- US 7893350 B
- US 7700870 B
- US 7767253 B
- US 36089812 A
- US 2013196139 A